# EUROPEAN PATENT APPLICATION

(11) **EP 4 391 723 A1**
(43) Date of publication of application: **26.06.2024**
(21) Application number: 23767129.2
(22) Date of filing: 07.03.2023
(51) Int. Cl.: H05B 6/12, H05B 6/06

(54) **METHOD FOR CONTROLLING WIRELESS POWER TRANSMISSION DEVICE FOR AUTOMATIC COOKING, AND COOKING APPLIANCE THEREFOR**

(30) Priority: 07.03.2022 KR 20220028963
(71) Applicant: Samsung Electronics Co., Ltd., Suwon-si, Gyeonggi-do 16677 (KR)
(72) Inventor: CHOI, Hana, Suwon-si, Gyeonggi-do 16677 (KR); KANG, Heejun, Suwon-si, Gyeonggi-do 16677 (KR); KIM, Kanghoon, Suwon-si, Gyeonggi-do 16677 (KR); KIM, Yongwook, Suwon-si, Gyeonggi-do 16677 (KR); KIM, Haedeun, Suwon-si, Gyeonggi-do 16677 (KR); RYU, Kwangil, Suwon-si, Gyeonggi-do 16677 (KR); CHOO, Hyunjoon, Suwon-si, Gyeonggi-do 16677 (KR)
(74) Representative: Gulde & Partner
(86) International application number: PCT/KR2023/003105
(87) International publication number: WO 2023/172028

(57) **Abstract**

A cooking appliance for controlling a wireless power transmission device for automatic cooking of contents in a cooking vessel, including a plurality of first temperature sensors arranged in an internal space of the cooking appliance, the internal space being configured to accommodate the cooking vessel, a communication interface configured to transmit information to the wireless power transmission device, and at least one processor configured to obtain temperature data regarding the cooking vessel that is measured by the plurality of first temperature sensors as the cooking vessel is accommodated in the internal space, based on the temperature data regarding the cooking vessel and recipe information of a dish selected by a user, determine a power level value of the wireless power transmission device, and transmit power control information, including the power level value, to the wireless power transmission device through the communication interface.

## Description

### TECHNICAL FIELD

The disclosure relates to a cooking appliance for controlling a wireless power transmission device for automatic cooking of contents in a cooking vessel.

### BACKGROUND ART

Recently, automatic cooking products for making meal preparation easy have been released. For automatic cooking, sensing the temperature of ingredients being cooked is essential. In general, for automatic cooking, a temperature sensor is placed at the bottom of a 'dedicated heating device' to measure the temperature of a cooking vessel to estimate the temperature of ingredients being cooked, or a temperature sensor is placed in the cooking vessel to directly sense the temperature of the ingredients. That is, in general, for automatic cooking, there is no choice but to use a dedicated heating device including a temperature sensor or a dedicated cooking vessel including a temperature sensor. However, in a case in which it is necessary to use a dedicated heating device or a dedicated cooking vessel for automatic cooking, the use of an existing cooking vessel or a general induction range is limited, and it is inconvenient to have to separately purchase a dedicated heating device or a dedicated cooking vessel.

Therefore, a system for providing automatic cooking by using a general induction range and a general cooking vessel may be required.

### DESCRIPTION OF EMBODIMENTS

### SOLUTION TO PROBLEM

According to an embodiment of the disclosure, a cooking appliance for controlling a wireless power transmission device for automatic cooking of the contents in a cooking vessel may include a plurality of first temperature sensors arranged in an internal space of the cooking appliance, the internal space being configured to accommodate the cooking vessel, a communication interface configured to transmit information to the wireless power transmission device, and at least one processor. In addition, the at least one processor of the cooking appliance may be configured to obtain temperature data regarding the cooking vessel that is measured by the plurality of first temperature sensors as the cooking vessel is accommodated in the internal space, based on the temperature data regarding the cooking vessel and recipe information of a dish selected by a user, determine a power level value of the wireless power transmission device, and transmit power control information, including the power level value, to the wireless power transmission device through the communication interface.

According to an embodiment of the disclosure, the power control information may include information about a duration of maintaining the power level value.

According to an embodiment of the disclosure, the at least one processor may be configured to receive, from the wireless power transmission device through the communication interface, information about the dish selected by the user, and obtain, from a memory of the cooking appliance, the recipe information.

According to an embodiment of the disclosure, the at least one processor may be configured to determine the power level value of the wireless power transmission device by comparing information about a plurality of cooking stages included in the recipe information, with the temperature data regarding the cooking vessel.

According to an embodiment of the disclosure, the at least one processor may be configured to determine, as a current cooking stage, a first cooking stage among the plurality of cooking stages included in the recipe information, based on the temperature data regarding the cooking vessel, identify, from the recipe information, a first power level value corresponding to the first cooking stage, and transmit, to the wireless power transmission device through the communication interface, first power control information including the first power level value.

According to an embodiment of the disclosure, the at least one processor may be configured to, in a case in which a temperature indicated by the temperature data regarding the cooking vessel obtained from at least one of the plurality of first temperature sensors reaches a temperature indicated by first threshold temperature data, determine, as the current cooking stage, a second cooking stage that is subsequent to the first cooking stage, identify, from the recipe information, a second power level value corresponding to the second cooking stage, and transmit, to the wireless power transmission device through the communication interface, second power control information including the second power level value.

According to an embodiment of the disclosure, the at least one processor may be configured to in a case in which a temperature indicated by individual temperature data obtained from each of the plurality of first temperature sensors is greater than a temperature indicated by second threshold temperature data, and a temperature indicated by average temperature data obtained from the plurality of first temperature sensors is greater than or equal to a temperature indicated by third threshold temperature data, determine, as the current cooking stage, a third cooking stage that is subsequent to the second cooking stage, identify, from the recipe information, a third power level value corresponding to the third cooking stage, and transmit, to the wireless power transmission device through the communication interface, third power control information including the third power level value.

According to an embodiment of the disclosure, the at least one processor may be configured to receive, from a mobile terminal through the wireless power transmission device, new recipe information corresponding to a new dish selected by the user using the mobile terminal, and store the received new recipe information in a memory of the cooking appliance.

According to an embodiment of the disclosure, each of the plurality of first temperature sensors may be spaced apart from a bottom surface of the cooking appliance by a preset height or greater.

According to an embodiment of the disclosure, the cooking appliance may further include a second temperature sensor configured to detect abnormal overheating of the cooking vessel.

According to an embodiment of the disclosure, the cooking appliance may further include at least one rubber leg on a bottom surface of the cooking appliance to alleviate a shock on the cooking vessel when the cooking vessel is accommodated in the internal space of the cooking appliance, wherein the second temperature sensor is in the at least one rubber leg.

According to an embodiment of the disclosure, the cooking appliance may further include an output interface configured to output a notification indicating abnormal overheating of the cooking vessel when a temperature indicated by temperature data measured by the second temperature sensor is greater than a temperature indicated by reference temperature data.

According to an embodiment of the disclosure, each of the plurality of first temperature sensors may be coupled to an elastic member, and the elastic member may be compressed and deformed when the cooking vessel is accommodated in the internal space of the cooking appliance.

According to an embodiment of the disclosure, the cooking appliance may further include a low-power coil to receive, from the wireless power transmission device, power of a preset level to drive the communication interface.

According to an embodiment of the disclosure, the at least one processor may be configured to detect a first power transmission pattern from among a plurality of power transmission patterns, which are transmitted by the wireless power transmission device through a plurality of cooking zones, identify, among the plurality of cooking zones, a first cooking zone corresponding to the first power transmission pattern, and transmit, to the wireless power transmission device through the communication interface, information about the first cooking zone and identification information of the cooking appliance.

According to an embodiment of the disclosure, a method, performed by a cooking appliance, of controlling a wireless power transmission device for automatic cooking of contents in a cooking vessel may include, as the cooking vessel is accommodated in an internal space of the cooking appliance, obtaining temperature data regarding the cooking vessel measured by a plurality of first temperature sensors arranged in the internal space, based on the temperature data regarding the cooking vessel and recipe information of a dish selected by a user, determining a power level value of the wireless power transmission device, and transmitting power control information, including the power level value, to the wireless power transmission device through a communication interface of the cooking appliance.

According to an embodiment of the disclosure, the power control information may include information about a duration of maintaining the power level value.

According to an embodiment of the disclosure, the method may further include receiving, from the wireless power transmission device through the communication interface, information about the dish selected by the user; and obtaining, from a memory of the cooking appliance, the recipe information.

According to an embodiment of the disclosure, the determining of the power level value of the wireless power transmission device may include determining a current cooking stage from among a plurality of cooking stages included in the recipe information by comparing information about the plurality of cooking stages with the temperature data regarding the cooking vessel; and determining the power level value of the wireless power transmission device corresponding to the current cooking stage.

According to an embodiment of the disclosure, the method may further include receiving, from a mobile terminal through the wireless power transmission device, new recipe information corresponding to a new dish selected by the user using the mobile terminal; and storing the received new recipe information in a memory of the cooking appliance.

### BRIEF DESCRIPTION OF DRAWINGS

FIG. 1 is a diagram for describing a cooking system according to an embodiment of the disclosure.
FIG. 2 is a block diagram illustrating a function of a cooking appliance according to an embodiment of the disclosure.
FIG. 3 is a diagram illustrating a structure of a cooking appliance according to an embodiment of the disclosure.
FIG. 4 is a diagram for describing a side sensor assembly module of a cooking appliance according to an embodiment of the disclosure.
FIG. 5 is a diagram for describing a position of a side sensor assembly module of a cooking appliance according to an embodiment of the disclosure.
FIG. 6 is a diagram for describing the arrangement of a plurality of side sensor assembly modules according to an embodiment of the disclosure.
FIG. 7 is a diagram for describing a plurality of side sensor assembly modules and a bottom sensor according to an embodiment of the disclosure.
FIG. 8 is a diagram for describing a waterproof structure of a cooking appliance according to an embodiment of the disclosure.
FIG. 9 is a diagram for describing a pad-type cooking appliance according to an embodiment of the disclosure.
FIG. 10 is a block diagram for describing a function of a wireless power transmission device according to an embodiment of the disclosure.
FIG. 11 is a diagram for describing coil arrangement of a cooking system according to an embodiment of the disclosure.
FIG. 12 is a flowchart illustrating a method, performed by a cooking appliance, of controlling a wireless power transmission device for automatic cooking, according to an embodiment of the disclosure.
FIG. 13 is a diagram for describing an operation, performed by a cooking appliance, of identifying recipe information corresponding to a dish selected by a user, according to an embodiment of the disclosure.
FIG. 14 is a diagram for describing recipe information according to an embodiment of the disclosure.
FIG. 15 is a diagram for describing an operation, performed by a cooking appliance, of adaptively determining a power level value of a wireless power transmission device for automatic cooking, according to an embodiment of the disclosure.
FIG. 16 is a flowchart illustrating an operation, performed by a cooking appliance, of establishing a communication connection with a wireless power transmission device, according to an embodiment of the disclosure.
FIG. 17 is a diagram for describing a plurality of power transmission patterns according to an embodiment of the disclosure.
FIG. 18 is a diagram for describing an operation that is performed by a wireless power transmission device in a case in which a cooking appliance is placed on the wireless power transmission device, according to an embodiment of the disclosure.
FIG. 19 is a diagram for describing an operation, performed by a wireless power transmission device, of identifying a position of a cooking appliance by using a plurality of power transmission patterns, according to an embodiment of the disclosure.
FIG. 20 is a flowchart illustrating a method of transmitting power control information to a wireless power transmission device when a cooking appliance is moved, according to an embodiment of the disclosure.
FIG. 21 is a diagram for describing an operation, performed by a cooking appliance, of performing some of the stages included in recipe information, according to an embodiment of the disclosure.
FIG. 22 is a diagram for describing an operating method of a cooking appliance when a cooking appliance is moved while performing some of the stages included in recipe information, according to an embodiment of the disclosure.
FIG. 23 is a diagram for describing an operation, performed by a cooking appliance, of interworking with a server device through a wireless power transmission device, according to an embodiment of the disclosure.
FIGS. 24 and 25 are diagrams for describing an operation, performed by a server device, of providing information about a wireless power transmission device and a cooking appliance through a display device, according to an embodiment of the disclosure.
FIG. 26 is a flowchart illustrating a method, performed by a cooking appliance, of storing new recipe information, according to an embodiment of the disclosure.
FIG. 27 is a diagram for describing an operation, performed by a cooking appliance, of adding recipe information, based on a user input, according to an embodiment of the disclosure.

### MODE OF DISCLOSURE

The terms used herein will be briefly described, and then an embodiment of the disclosure will be described in detail.

Although the terms used herein are selected from among common terms that are currently widely used in consideration of their functions in an embodiment of the disclosure, the terms may be different according to an intention of one of ordinary skill in the art, a precedent, or the advent of new technology. Also, in particular cases, the terms are discretionally selected by the applicant of the disclosure, in which case, the meaning of those terms will be described in detail in the corresponding description of an embodiment of the disclosure. Therefore, the terms used herein are not merely designations of the terms, but the terms are defined based on the meaning of the terms and content throughout the disclosure.

Throughout the disclosure, the expression "at least one of a, b, or c" indicates only a, only b, only c, both a and b, both a and c, both b and c, all of a, b, and c, or variations thereof.

Throughout the disclosure, when a part "includes" an element, it is to be understood that the part may additionally include other elements rather than excluding other elements as long as there is no particular opposing recitation. Also, as used herein, the terms such as "...er (or)", "... unit", "... module", etc., denote a unit that performs at least one function or operation, which may be implemented as hardware or software or a combination thereof.

Hereinafter, an embodiment of the disclosure is described in detail with reference to the accompanying drawings to allow those of skill in the art to easily carry out the embodiment of the disclosure. An embodiment of the disclosure may, however, be embodied in many different forms and should not be construed as being limited to the embodiments of the disclosure set forth herein. Also, parts in the drawings unrelated to the detailed description are omitted to ensure clarity of the disclosure, and like reference numerals in the drawings denote like elements.

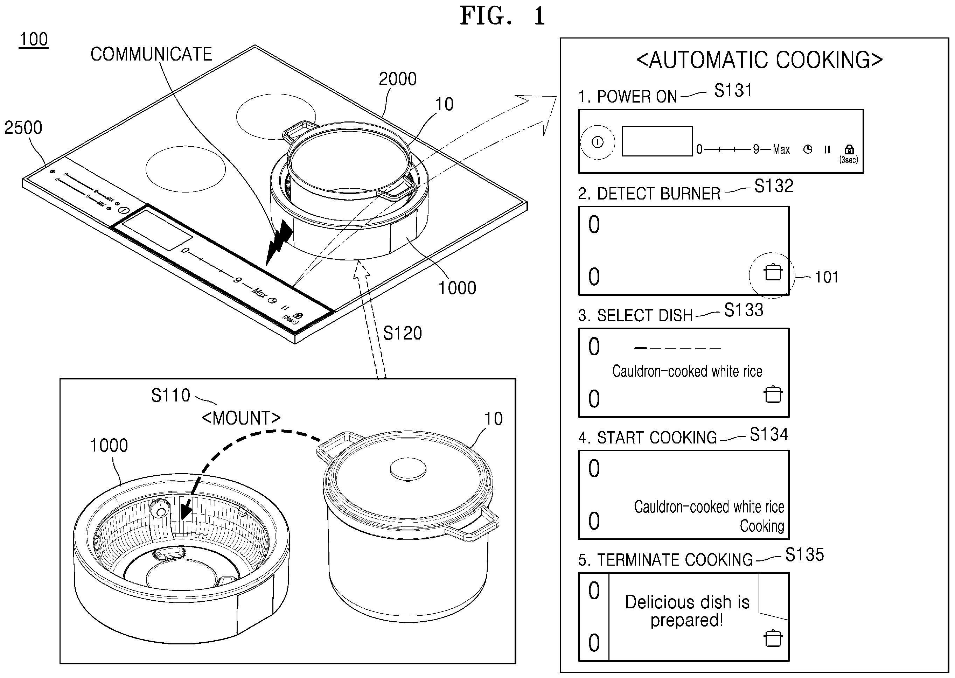

FIG. 1 is a diagram for describing a cooking system 100 according to an embodiment of the disclosure.

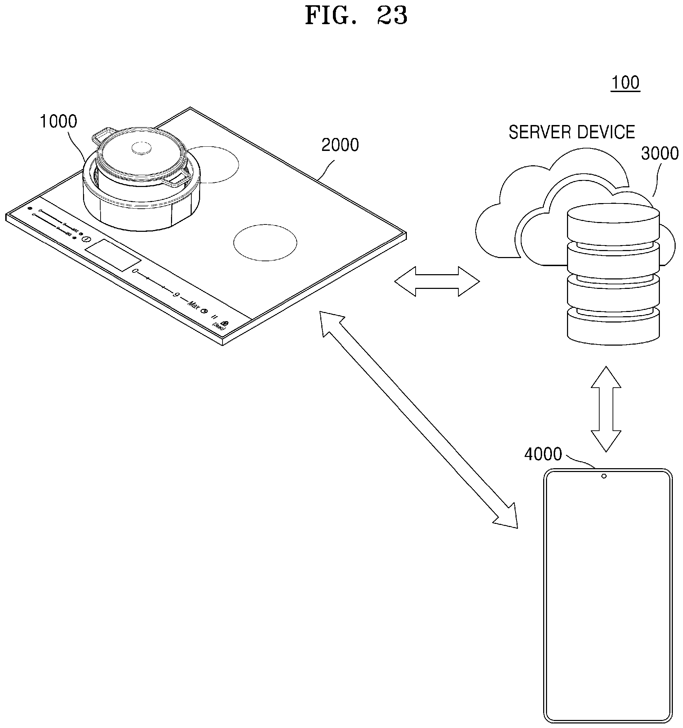

Referring to FIG. 1, the cooking system 100 according to an embodiment of the disclosure may include a cooking appliance 1000 and a wireless power transmission device 2000. However, all of the illustrated components are not essential components. The cooking system 100 may be implemented by more components than the illustrated components, or may be implemented by fewer components than the illustrated components. For example, the cooking system 100 may be implemented by the cooking appliance 1000, the wireless power transmission device 2000, and a server device (not shown). An embodiment of the disclosure in which the cooking system 100 includes the server device is described in detail below with reference to FIG. 23. Hereinafter, each component of the cooking system 100 is described.

The cooking appliance 1000 may be a device for supporting a cooking vessel 10 and the wireless power transmission device 2000 to perform automatic cooking. The cooking appliance 1000 may have an internal space therein for accommodating the cooking vessel 10. The shape of the internal space of the cooking appliance 1000 may vary. For example, the internal space of the cooking appliance 1000 may have a pot shape or a pad shape, but is not limited thereto. In a case in which the internal space of the cooking appliance 1000 has a pot shape, the cooking appliance 1000 may be referred to as 'smart pot' or 'cooker appliance'. Hereinafter, for convenience of description, an example is described in which the internal space of the cooking appliance 1000 has a pot shape.

The cooking vessel 10 accommodated in the cooking appliance 1000 may be for heating the contents in the cooking vessel 10. The contents in the cooking vessel 10 may be liquids, such as water, tea, coffee, soup, juice, wine, oil, etc., or solids, such as butter, meat, vegetables, bread, rice, etc., but is not limited thereto.

The cooking vessel 10 may be a general induction heating (IH) vessel (hereinafter, referred to as 'IH vessel') including a magnetic material. The cooking vessel 10 may be inductively heated by the wireless power transmission device 2000, and may be one of various types of vessels including a magnetic material. IH refers to a method of heating an IH metal by using electromagnetic induction. For example, when an alternating current is supplied to a working coil of the wireless power transmission device 2000, a magnetic field that changes with time is induced inside the working coil. The magnetic field generated by the working coil passes through the bottom of the cooking vessel 10. When the magnetic field that changes with time passes through an IH metal (e.g., iron, steel, nickel, or various types of alloys) included in the bottom of the cooking vessel 10, a current rotating around the magnetic field is generated in the IH metal. The rotating current is referred to as 'eddy current', and a phenomenon in which a current is induced by a magnetic field that changes with time is referred to as 'electromagnetic induction'. In a case in which the cooking vessel 10 is an IH vessel, heat is generated at the bottom of the cooking vessel 10 due to the resistance of the eddy current and the IH metal (e.g., iron). At this time, the contents in the cooking vessel 10 may be heated by the generated heat.

The cooking appliance 1000 may wirelessly receive power for driving a communication interface from the wireless power transmission device 2000, and communicate with the wireless power transmission device 2000 through the communication interface. Hereinafter, the cooking appliance 1000 including the communication interface may be referred to as 'small appliance'.

The communication interface may include a short-range communication unit, a long-range communication unit, and the like. The short-range wireless communication unit may include, but is not limited to, a Bluetooth communication unit, a Bluetooth Low Energy (BLE) communication unit, a near-field communication (NFC) unit, a wireless local access network (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, etc. In a case in which the cooking appliance 1000 is remotely controlled by a server device (not shown) in an Internet-of-Things (loT) environment, the long-range communication unit may be used to communicate with the server device. The long-range communication unit may include the Internet, a computer network (e.g., a local area network (LAN) or a wide area network (WAN)), and a mobile communication unit. The mobile communication unit may include, but is not limited to, a 3^{rd} Generation (3G) module, a 4^{th} Generation (4G) module, a 5^{th} Generation (5G) module, a Long-Term Evolution (LTE) module, a Narrowband loT (NB-loT) module, an LTE Machine (LTE-M) module, and the like.

The cooking appliance 1000 according to an embodiment of the disclosure may transmit identification information of the cooking appliance 1000 to the wireless power transmission device 2000 through the communication interface. The identification information of the cooking appliance 1000 is unique information for identifying the cooking appliance 1000, and may include at least one of a media access control (MAC) address, a model name, device type information (e.g., an IH type identifier (ID), a heater type ID, a motor type ID, or a small appliance type ID), manufacturer information (e.g., a manufacturer ID), a serial number, or time-of-manufacture information (e.g., date and time of manufacture), but is not limited thereto. According to an embodiment of the disclosure, the identification information of the cooking appliance 1000 may be expressed as an identification number or a combination of numbers and alphabetic characters. In addition, according to an embodiment of the disclosure, the cooking appliance 1000 may transmit position information of the cooking appliance 1000 to the wireless power transmission device 2000 through the communication interface. The position information of the cooking appliance 1000 may include information about a cooking zone (also referred to as 'burner') in which the cooking appliance 1000 is located.

According to an embodiment of the disclosure, the cooking appliance 1000 may transmit information to the server device through the wireless power transmission device 2000. For example, the cooking appliance 1000 may transmit information obtained from the cooking appliance 1000 (e.g., temperature information of the contents, etc.) to the wireless power transmission device 2000 through short-range wireless communication (e.g., Bluetooth, BLE, etc.). In this case, the wireless power transmission device 2000 may transmit the information obtained from the cooking appliance 1000 to the server device by accessing the server device by using a WLAN (e.g., Wi-Fi) communication unit or a long-range communication unit (e.g., the Internet). Meanwhile, the server device may provide the information obtained from the cooking appliance 1000 and then received from the wireless power transmission device 2000, to a user through a mobile terminal connected to the server device. According to an embodiment of the disclosure, the wireless power transmission device 2000 may directly transmit the information obtained from the cooking appliance 1000 to the user's mobile terminal through device-to-device (D2D) communication (e.g., WFD communication or BLE communication).

Meanwhile, according to an embodiment of the disclosure, the cooking appliance 1000 may directly transmit the information obtained from the cooking appliance 1000 (e.g., the temperature information of the contents, etc.) to the server device through the communication interface (e.g., a WLAN (e.g., Wi-Fi) communication unit). In addition, the cooking appliance 1000 may directly transmit the information obtained from the cooking appliance 1000 (e.g., the temperature information of the contents, etc.) to the user's mobile terminal through short-range wireless communication (e.g., Bluetooth, BLE, etc.) or D2D communication (e.g., WFD communication).

According to an embodiment of the disclosure, the cooking appliance 1000 may store recipe information for cooking the contents. The cooking appliance 1000 may store a plurality of pieces of recipe information corresponding to a plurality of dishes.

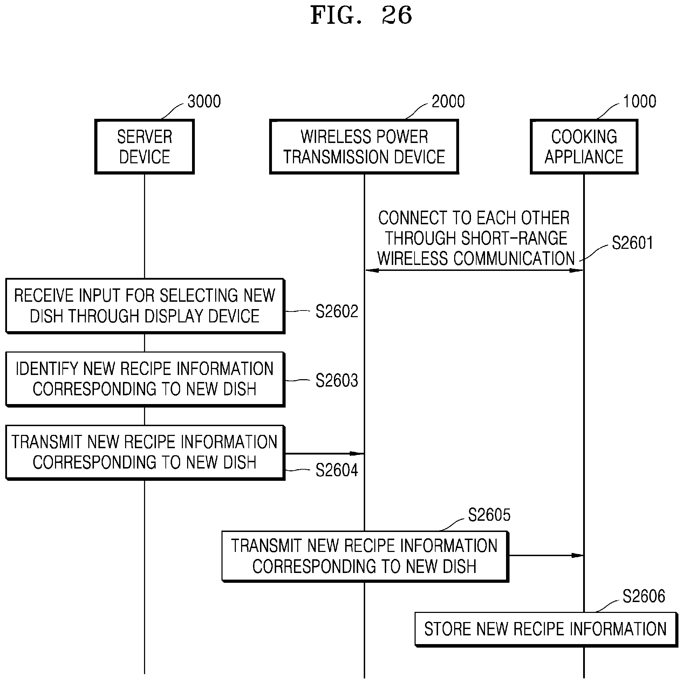

The recipe information may include basic recipe information basically stored in a memory when the cooking appliance 1000 is manufactured, and additional recipe information added by the user. According to an embodiment of the disclosure, the cooking appliance 1000 may receive additional recipe information added by the user through the mobile terminal. For example, when the user adds recipe information for the cooking appliance 1000 through the mobile terminal, the server device may obtain, from the mobile terminal, the additional recipe information added by the user, and the cooking appliance 1000 may receive the additional recipe information from the server device through the wireless power transmission device 2000. In addition, the cooking appliance 1000 may receive the additional recipe information from the user's mobile terminal through short-range wireless communication (e.g., Bluetooth, BLE, etc.) or D2D communication (e.g., WFD communication). An embodiment of the disclosure in which the user adds recipe information to the cooking appliance 1000 through the mobile terminal is described below with reference to FIGS. 26 to 27.

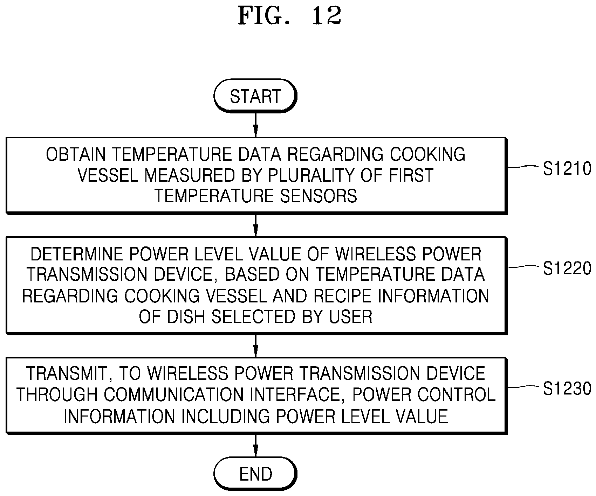

According to an embodiment of the disclosure, the cooking appliance 1000 may measure the temperature of the cooking vessel 10 accommodated in the internal space by using at least one temperature sensor, and estimate the temperature of the contents in the cooking vessel 10 based on the temperature of the cooking vessel 10. The cooking appliance 1000 may support automatic cooking of the contents in the cooking vessel 10, based on data regarding the measured temperature of the cooking vessel 10 (or data regarding the estimated temperature of the contents) and the recipe information. For example, the cooking appliance 1000 may adaptively determine a power level value of the wireless power transmission device 2000 by using temperature data obtained by measuring the temperature of the cooking vessel 10 accommodated in the cooking appliance 1000, and recipe information corresponding to a dish selected by the user. In addition, the cooking appliance 1000 may support automatic cooking to be completed without user intervention by transmitting the adaptively determined power level value to the wireless power transmission device 2000 in real time. An operation, performed by the cooking appliance 1000, of controlling the wireless power transmission device 2000 for automatic cooking is described in detail below with reference to FIG. 12.

The wireless power transmission device 2000 according to an embodiment of the disclosure may be a device that wirelessly transmits power to an object to be heated (e.g., the cooking vessel 10), which is on the top plate thereof, by using electromagnetic induction. The wireless power transmission device 2000 may also be referred to as 'induction heating device', 'induction range', 'cooktop', or 'electric range'. The wireless power transmission device 2000 may include a working coil that generates a magnetic field for inductively heating the cooking vessel 10 or supplying low power to the cooking appliance 1000.

Wirelessly transmitting power may refer to transmitting the power in a magnetic induction manner by using a magnetic field induced in a receiving coil or an IH metal (e.g., an iron element). For example, the wireless power transmission device 2000 may flow a current to the working coil (i.e., a transmitting coil) to generate a magnetic field so as to generate an eddy current in the cooking vessel 10, or cause a magnetic field to be induced in a pickup coil (not shown) of the cooking appliance 1000. The pickup coil may be a low-power coil that generates power for operating a printed circuit board (PCB) of the cooking appliance 1000.

According to an embodiment of the disclosure, the wireless power transmission device 2000 may include a plurality of working coils. For example, in a case in which the top plate of the wireless power transmission device 2000 includes a plurality of cooking zones, the wireless power transmission device 2000 may include a plurality of working coils corresponding to the plurality of cooking zones, respectively. In addition, the wireless power transmission device 2000 may include a high-power cooking zone having a first working coil provided at an inner side thereof and a second working coil provided at an outer side thereof. The high-power cooking zone may include three or more working coils.

The top plate of the wireless power transmission device 2000 according to an embodiment of the disclosure may be formed of tempered glass, such as ceramic glass, so as not to be easily damaged. In addition, a guidance mark for indicating the cooking zone in which the cooking appliance 1000 needs to be located may be provided on the top plate of the wireless power transmission device 2000.

The wireless power transmission device 2000 according to an embodiment of the disclosure may detect that the cooking vessel 10 including a magnetic material or the cooking appliance 1000 in which the cooking vessel 10 is accommodated is placed on the top plate. For example, the wireless power transmission device 2000 may detect, based on a change in the current value (i.e., an inductance) of the working coil due to the cooking appliance 1000 in which the cooking vessel 10 is accommodated approaching the wireless power transmission device 2000, that the cooking appliance 1000 in which the cooking vessel 10 is accommodated is located on the top plate of the wireless power transmission device 2000. Hereinafter, a mode in which the wireless power transmission device 2000 detects the cooking vessel 10 including the magnetic material (e.g., an IH metal) is referred to as 'IH vessel detection mode'.

According to an embodiment of the disclosure, the wireless power transmission device 2000 may include a communication interface configured to perform communication with an external device. For example, the wireless power transmission device 2000 may communicate with the cooking appliance 1000 or the server device through the communication interface. The communication interface may include a short-range communication unit (e.g., an NFC communication unit, a Bluetooth communication unit, a BLE communication unit, etc.), a mobile communication unit, and the like.

According to an embodiment of the disclosure, the wireless power transmission device 2000 may detect the cooking appliance 1000 on the top plate, through the communication interface. For example, the wireless power transmission device 2000 may detect the cooking appliance 1000 by receiving a packet transmitted from the cooking appliance 1000 on the top plate by using short-range wireless communication (e.g., BLE or Bluetooth). Because the cooking appliance 1000 including the communication interface may be referred to as 'small appliance', hereinafter, a mode in which the wireless power transmission device 2000 detects the cooking appliance 1000 through the communication interface is referred to as 'small appliance detection mode'. In the small appliance detection mode, the wireless power transmission device 2000 may transmit, through the plurality of cooking zones, power for activating the communication interface of the cooking appliance 1000.

According to an embodiment of the disclosure, in the small appliance detection mode, the wireless power transmission device 2000 may receive, from the cooking appliance 1000, the identification information (e.g., an MAC address) of the cooking appliance 1000 through short-range wireless communication (e.g., BLE communication or Bluetooth communication). When the identification information of the cooking appliance 1000 is received, the wireless power transmission device 2000 may determine that the cooking appliance 1000 is a small appliance, and output power according to different power transmission patterns for the respective cooking zones. Hereinafter, a mode in which the wireless power transmission device 2000 outputs power according to different power transmission patterns for the respective cooking zones may be referred to as 'cooking zone determination mode'. The wireless power transmission device 2000 may receive information about a first cooking zone corresponding to a first power transmission pattern detected by the cooking appliance 1000, together with the identification information of the cooking appliance 1000. Here, the first cooking zone may be a cooking zone in which the cooking appliance 1000 is located, among the plurality of cooking zones included in the wireless power transmission device 2000.

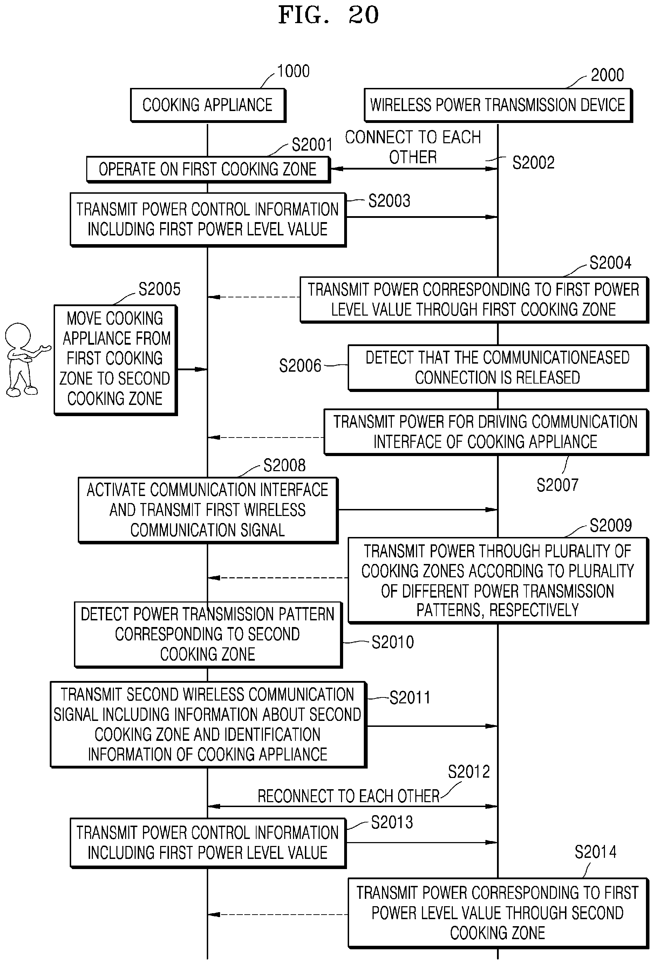

Meanwhile, according to an embodiment of the disclosure, the user may move the cooking appliance 1000 in the first cooking zone to a second cooking zone as needed. In this case, the wireless power transmission device 2000 may automatically detect the movement of the cooking appliance 1000. For example, when the wireless power transmission device 2000 detects that the short-range wireless communication with the cooking appliance 1000 is released, the wireless power transmission device 2000 may operate in the small appliance detection mode and the cooking zone determination mode to detect the position of the cooking appliance 1000 that has been moved. An operation, performed by the wireless power transmission device 2000, of detecting the movement of the cooking appliance 1000 is described in detail below with reference to FIG. 20.

Referring to FIG. 1, the user may mount the cooking vessel 10 in the internal space of the cooking appliance 1000 (S110), and place, on the wireless power transmission device 2000, the cooking appliance 1000 in which the cooking vessel 10 is mounted (S120). Thereafter, in order to start automatic cooking, the user may first press a power button included in the wireless power transmission device 2000 (S131). In this case, the wireless power transmission device 2000 may detect, in the IH vessel detection mode, the cooking vessel 10 mounted in the cooking appliance 1000. In addition, the wireless power transmission device 2000 may detect, in the small appliance detection mode, the cooking appliance 1000 upon a wireless communication signal being received from the cooking appliance 1000 in which the cooking vessel 10 is mounted, and may detect, in the cooking zone determination mode, that the cooking appliance 1000 in which the cooking vessel 10 is mounted is on a right-side cooking zone.

According to an embodiment of the disclosure, the wireless power transmission device 2000 may display, through a user interface 2500, information related to the cooking appliance 1000 in which the cooking vessel 10 is mounted. For example, when the cooking appliance 1000 is detected, the wireless power transmission device 2000 may display, on a display unit included in the user interface 2500, the identification information of the cooking appliance 1000, product type information of the cooking appliance 1000 (e.g., an image or a text indicating the product type), or position information of the cooking appliance 1000. For example, referring to operation S132 of FIG. 1, when the user places the cooking appliance 1000 (e.g., a smart pot) on the top plate of the wireless power transmission device 2000, the wireless power transmission device 2000 may display a smart pot icon in a position 101 corresponding to the right-side cooking zone so as to provide the user with the product type information (e.g., 'smart pot') of the cooking appliance 1000 and the position information of the cooking appliance 1000 (e.g., the right-side cooking zone). According to an embodiment of the disclosure, the wireless power transmission device 2000 may differentiate the color (e.g., white) of the power level value (e.g., 0) displayed in the position 101 corresponding to the right-side cooking zone from the colors (e.g., gray) of power level values displayed at positions corresponding to left-side cooking zones, so as to provide the user with the position information of the cooking appliance 1000 (e.g., the right-side cooking zone).

According to an embodiment of the disclosure, the wireless power transmission device 2000 may provide a graphical user interface (GUI) corresponding to the identification information or the product type information of the cooking appliance 1000, through the user interface 2500. For example, referring to operations S133 of FIG. 1, the wireless power transmission device 2000 may display a list of dishes through the user interface 2500, and receive a user input for selecting cauldron-cooked white rice from the list of dishes. Then, referring to operation S134, when cooking of cauldron-cooked white rice is started, the wireless power transmission device 2000 may display the dish currently being cooked in the cooking vessel 10 (e.g., 'cauldron-cooked white rice') and an operation state (e.g., 'cooking'). Meanwhile, the wireless power transmission device 2000 may adjust the power level value according to power control information received from the cooking appliance 1000. For example, when the cooking appliance 1000 transmits the power control information including the power level value adaptively determined based on temperature data regarding the cooking vessel 10 and recipe information of cauldron-cooked white rice, the wireless power transmission device 2000 may adjust the power level value according to the power control information such that the cauldron-cooked white rice is automatically cooked. Referring to operation S135, when the automatic cooking of the cauldron-cooked white rice is completed, the wireless power transmission device 2000 may output, through the user interface 2500, a notification stating, 'Delicious dish is prepared'.

According to the cooking system 100 according to an embodiment of the disclosure, when the user simply places, on the wireless power transmission device 2000, the cooking appliance 1000 in which the cooking vessel 10 is mounted, and selects a dish, the cooking appliance 1000 and the wireless power transmission device 2000 perform communication with each other to automatically complete the cooking of the dish selected by the user, thereby increasing user convenience. In addition, when the user uses the cooking appliance 1000 including a temperature sensor and a communication interface, automatic cooking may be completed by using a general IH vessel and a general induction range. That is, by using the cooking appliance 1000 according to an embodiment of the disclosure, automatic cooking may be completed without changing the configuration of the IH vessel or the configuration of the induction range.

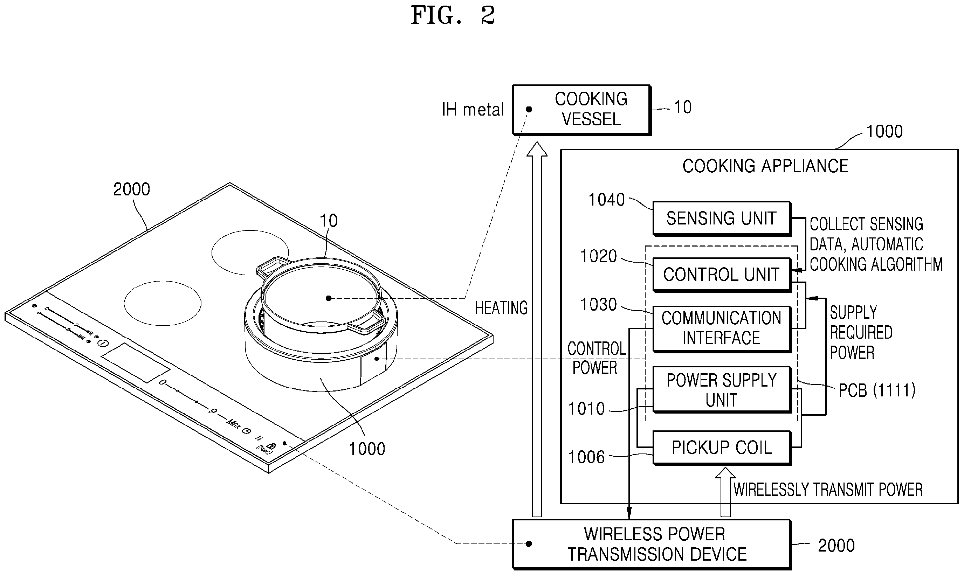

Hereinafter, the cooking appliance 1000 according to an embodiment of the disclosure is described in detail with reference to FIGS. 2 to 9.

FIG. 2 is a block diagram illustrating a function of the cooking appliance 1000 according to an embodiment of the disclosure.

The cooking appliance 1000 according to an embodiment of the disclosure may include a pickup coil 1006, a power supply unit 1010, a control unit 1020, a communication interface 1030, and a sensing unit 1040, but is not limited thereto. According to an embodiment of the disclosure, the power supply unit 1010, the control unit 1020, and the communication interface 1030 may be mounted on a PCB 1111. The power supply unit 1010, the control unit 1020, and the communication interface 1030 may be mounted on one PCB or may be mounted on a plurality of PCBs. For example, the power supply unit 1010 may be mounted on a first PCB, and the control unit 1020 and the communication interface 1030 may be mounted on a second PCB. In a case in which the power supply unit 1010, the control unit 1020, and the communication interface 1030 are mounted on the PCB 1111, the PCB 1111 may be referred to as 'printed circuit assembly (PCA)'. Hereinafter, each of the components is described.

The pickup coil 1006 may be a low-power coil that generates power for operating the PCB 1111. When the power is supplied to the PCB 1111 through the pickup coil 1006, components mounted on the PCB 1111 may be activated. For example, when the power is supplied to the PCB 1111 through the pickup coil 1006, the power supply unit 1010, the control unit 1020, and the communication interface 1030 may be activated.

The power supply unit 1010 may be a switched-mode power supply (SMPS) that receives alternating current (AC) power from the pickup coil 1006 and supplies direct current (DC) power to the control unit 1020 or the communication interface 1030. In addition, the power supply unit 1010 may include, in addition to the control unit 1020 and the communication interface 1030, an inverter and/or a converter that supplies AC or DC power other than commercial AC power to other components in the cooking appliance 1000 when needed.

The power supply unit 1010 may include a rectifier (e.g., a rectifier circuit) that converts AC power into DC power. The rectifier may convert an AC voltage that changes in magnitude and polarity (i.e., positive voltage or negative voltage) with time, into a DC voltage with a constant magnitude and polarity, and may convert an AC that change in magnitude and direction (i.e., positive current or negative current) with time, into a DC with a constant magnitude. The rectifier may include a bridge diode. The bridge diode may convert an AC voltage that changes in polarity with time, into a positive voltage with a constant polarity, and may convert an AC current that changes in direction with time, into a positive current with a constant direction. The rectifier may include a DC link capacitor. The DC link capacitor may convert a positive voltage that changes in magnitude with time, into a DC voltage with a constant magnitude. The inverter connected to the DC link capacitor may generate AC power of various frequencies and sizes required by the cooking appliance 1000, and the converter may generate DC power of various sizes required by the cooking appliance 1000.

The control unit 1020 may include at least one processor, which controls the overall operation of the cooking appliance 1000. For example, the at least one processor included in the control unit 1020 may control the power supply unit 1010, the communication interface 1030, and the like.

According to an embodiment of the disclosure, the control unit 1020 may identify the current position of the cooking appliance 1000 by detecting a power transmission pattern of power received from the wireless power transmission device 2000 through the power supply unit 1010. For example, the control unit 1020 may determine the cooking zone of the detected power transmission pattern by comparing the detected power transmission pattern with pre-stored power transmission patterns of the respective cooking zone. In this case, the cooking appliance 1000 may further include a voltage sensor for detecting a power transmission pattern.

The control unit 1020 may control the communication interface 1030 to transmit or receive data. For example, the control unit 1020 may control the communication interface 1030 to transmit, to the wireless power transmission device 2000, at least one of the identification information of the cooking appliance 1000, the position information of the cooking appliance 1000, or communication connection information of the cooking appliance 1000. In addition, the control unit 1020 may receive, from the wireless power transmission device 2000 through the communication interface 1030, information about the dish selected by the user, and obtain, from the memory, recipe information corresponding to the dish selected by the user. Here, the memory may include a storage space of a microcontroller unit (MCU).

Also, the control unit 1020 may support automatic cooking based on sensor data (e.g., the temperature data regarding the cooking vessel 10) measured by the sensing unit 1040 and the recipe information. For example, the control unit 1020 may adaptively determine the power level value of the wireless power transmission device 2000 based on the temperature data regarding the cooking vessel 10 and the recipe information of the dish selected by the user. In addition, the control unit 1020 may transmit, to the wireless power transmission device 2000 through the communication interface 1030, power control information including the adaptively determined power level value, so as to control the output of the wireless power transmission device 2000. In this case, when the wireless power transmission device 2000 transmits power according to the power control information, an eddy current may be generated in the IH metal of the cooking vessel 10, such that the contents in the cooking vessel 10 are heated. According to an embodiment of the disclosure, the power control information may further include information about a duration of maintaining the power level value.

For example, the control unit 1020 may determine, as a current cooking stage, a first cooking stage among a plurality of cooking stages included in the recipe information, based on the temperature data regarding the cooking vessel 10, identify, from the recipe information, a first power level value corresponding to the first cooking stage, and transmit first power control information including the first power level value to the wireless power transmission device 2000 through the communication interface 1030. In addition, when a temperature indicated by temperature data obtained from at least one of a plurality of temperature sensors reaches a temperature indicated by first threshold temperature data, the control unit 1020 may determine, as the current cooking stage, a second cooking stage subsequent to the first cooking stage, identify, from the recipe information, a second power level value corresponding to the second cooking stage, and transmit second power control information including the second power level value to the wireless power transmission device 2000 through the communication interface 1030. When a temperature indicated by individual temperature data obtained from each of the plurality of first temperature sensors is greater than a temperature indicated by second threshold temperature data, and the average of temperatures indicated by temperature data obtained from the plurality of first temperature sensors is greater than or equal to a temperature indicated by third threshold temperature data, the control unit 1020 may determine, as the current cooking stage, a third cooking stage subsequent to the second cooking stage, identify, from the recipe information, a third power level value corresponding to the third cooking stage, and transmit third power control information including the third power level value to the wireless power transmission device 2000 through the communication interface 1030.

The communication interface 1030 may include one or more components configured to allow communication between the cooking appliance 1000 and the wireless power transmission device 2000, between the cooking appliance 1000 and the server device (not shown), or between the cooking appliance 1000 and a mobile terminal (not shown). For example, the communication interface 1030 may include a short-range communication unit, a long-range communication unit, and the like.

The short-range wireless communication unit may include, but is not limited to, a Bluetooth communication unit, a BLE communication unit, an NFC unit, a Wi-Fi communication unit, a Zigbee communication unit, an IrDA communication unit, a WFD communication unit, a UWB communication unit, an Ant+ communication unit, etc. In a case in which the cooking appliance 1000 is remotely controlled by the server device (not shown) in an Internet-of-Things (IoT) environment, the long-range communication unit may be used to communicate with the server device. The long-range communication unit may include the Internet, a computer network (e.g., a LAN or a WAN), and a mobile communication unit. The mobile communication unit may include, but is not limited to, a 3G module, a 4G module, a 5G module, an LTE module, an NB-loT module, an LTE-M module, and the like.

According to an embodiment of the disclosure, the cooking appliance 1000 may transmit information to the server device through the wireless power transmission device 2000. For example, the cooking appliance 1000 may transmit information obtained from the cooking appliance 1000 (e.g., temperature information of the contents, etc.) to the wireless power transmission device 2000 through short-range wireless communication (e.g., Bluetooth, BLE, etc.). In this case, the wireless power transmission device 2000 may connect to the server device through a WLAN (e.g., Wi-Fi) communication unit and a long-range communication unit (e.g., the Internet) so as to may transmit, to the server device, the information (e.g., the temperature information of the contents, etc.) obtained by the cooking appliance 1000. Meanwhile, the server device may provide the information obtained from the cooking appliance 1000 and then received from the wireless power transmission device 2000, to the user through a mobile terminal connected to the server device. According to an embodiment of the disclosure, the wireless power transmission device 2000 may directly transmit the information obtained from the cooking appliance 1000 to the user's mobile terminal through D2D communication (e.g., WFD communication or BLE communication). In addition, the cooking appliance 1000 may connect to the server device through a WLAN (e.g., Wi-Fi) communication unit and a long-range communication unit (e.g., the Internet), so as to communicate directly with the server device, or directly communicate with the user's mobile terminal through D2D communication (e.g., WFD communication or BLE communication).

The sensing unit 1040 may include a first temperature sensor and a second temperature sensor. The first temperature sensor may be for measuring the temperature of the cooking vessel 10 accommodated in the cooking appliance 1000, and the second temperature sensor may be for detecting abnormal overheating. The first temperature sensor and the second temperature sensor may be contact-type temperature sensors, but are not limited thereto.

A plurality of first temperature sensors may be arranged to accurately measure the temperature of the cooking vessel 10 accommodated in the internal space of the cooking appliance 1000. For example, two, three, four, or more first temperature sensors may be arranged in the internal space of the cooking appliance 1000. In a case in which the plurality of first temperature sensors are arranged, it is possible to prevent eccentricity due to various sizes of the cooking vessel 10 (e.g., the cooking vessel 10 is mounted in an eccentric position).

The first temperature sensor may be on a side surface of the cooking appliance 1000, and may be spaced apart from the bottom surface of the cooking appliance 1000 by a preset height or greater. In this case, the influence of induction heating by the wireless power transmission device 2000 (e.g., heat generation by the first temperature sensor or noise generation due to the induction heating) may be minimized. In a case in which a plurality of first temperature sensors are arranged, the plurality of first temperature sensors may be at the same height or may be at different heights. In a case in which the plurality of first temperature sensors are at the same height, the plurality of first temperature sensors may be arranged at equal intervals along the inner circumference of the cooking appliance 1000.

The first temperature sensor may measure the temperature of the cooking vessel 10 and transmit a result of the measuring to the control unit 1020. The first temperature sensor may periodically monitor the temperature of the cooking vessel 10.

The second temperature sensor may be arranged on the bottom surface of the cooking appliance 1000 to quickly detect abnormal overheating. For example, the second temperature sensor may be located in at least one rubber leg for alleviating a shock applied to the cooking vessel 10 when the cooking vessel 10 is accommodated in the internal space of the cooking appliance 1000.

When the user mounts the cooking vessel 10 with no contents therein in the cooking appliance 1000 and then places the cooking appliance 1000 on the wireless power transmission device 2000, the cooking vessel 10 may be abnormally overheated by power transmitted from the wireless power transmission device 2000. In addition, when the cooking appliance 1000 in which the cooking vessel 10 is mounted is placed on the wireless power transmission device 2000 for a long time, all moisture in the cooking vessel 10 may evaporate, such that the cooking vessel 10 is abnormally overheated. In this case, the second temperature sensor may measure the temperature of the bottom surface of the cooking vessel 10 and transmit a result of the measuring to the control unit 1020. When a temperature indicated by temperature data measured by the second temperature sensor is greater than a temperature indicated by reference temperature data (e.g., 180 °C), the control unit 1020 may quickly detect abnormal overheating of the cooking vessel 10, and output, through an output interface (e.g., a buzzer), a notification indicating that abnormal overheating has occurred.

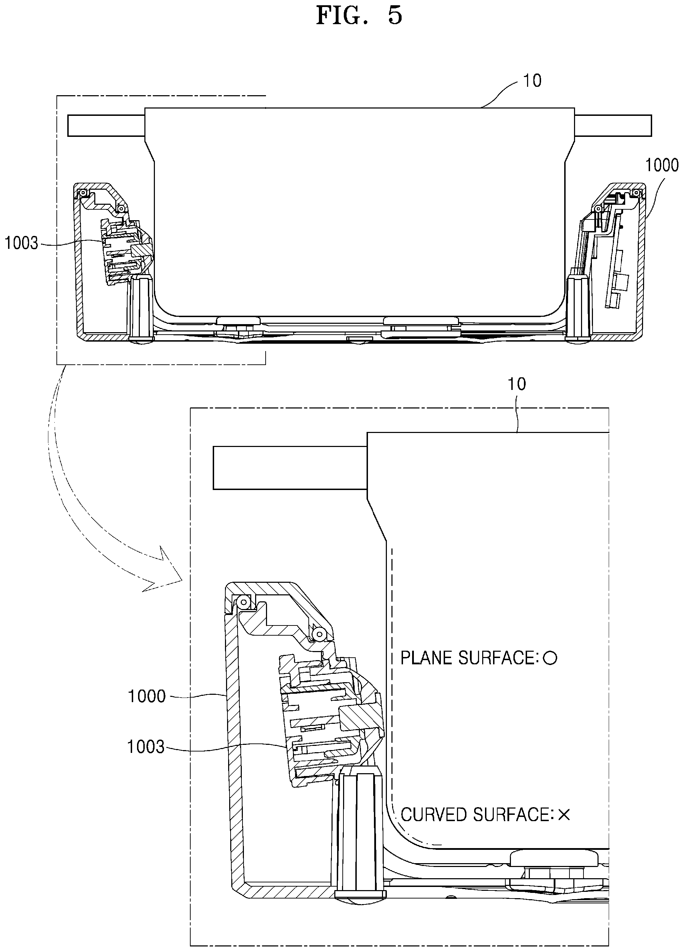

Hereinafter, the first temperature sensor may be referred to as 'side temperature sensor' as it is on a side surface of the cooking appliance 1000, and the second temperature sensor may be referred to as 'bottom temperature sensor' as it is on the bottom surface of the cooking appliance 1000. The structure of the sensing unit 1040 is described in more detail below with reference to FIGS. 5 to 7.

Meanwhile, all of the illustrated components are not essential components. The cooking appliance 1000 may be implemented by more elements than those illustrated in FIG. 2, and the cooking appliance 1000 may be implemented by fewer components than those illustrated in FIG. 2. For example, the cooking appliance 1000 may further include a communication coil, a user interface, a memory, a battery, and the like, in addition to the pickup coil 1006, the power supply unit 1010, the control unit 1020, the communication interface 1030, and the sensing unit 1040.

The communication coil is a coil for performing short-range wireless communication with the wireless power transmission device 2000. For example, the communication coil may be an NFC antenna coil for NFC communication. An NFC circuit connected to the NFC antenna coil may receive power through the pickup coil 1006.

The user interface may include an input interface for receiving an input by the user, and an output interface for outputting information. The output interface may be for outputting a video signal or an audio signal. The output interface may include a display unit, a sound output unit, a vibration motor, and the like. In a case in which the display unit and a touch pad constitute a layer structure to form a touch screen, the display unit may serve as an input interface in addition to the output interface. The sound output unit may output an audio signal received through the communication interface 1030 or stored in a memory (not shown). The sound output unit may include a speaker, a buzzer, and the like.

According to an embodiment of the disclosure, in a case in which the cooking appliance 1000 includes a battery, the battery may be used as an auxiliary power source. For example, in a case in which the cooking appliance 1000 provides a warming function, even when power transmission from the wireless power transmission device 2000 is stopped, the cooking appliance 1000 may monitor the temperature of the contents in the cooking vessel 10 by using the power of the battery. When the temperature of the contents falls below a threshold temperature, the cooking appliance 1000 may transmit a notification to the mobile terminal or request power transmission from the wireless power transmission device 2000, by using the power of the battery.

In addition, before the cooking appliance 1000 receives power from the wireless power transmission device 2000, the cooking appliance 1000 may drive the communication interface 1030 by using the power of the battery and transmit a wireless communication signal to the wireless power transmission device 2000 to allow the wireless power transmission device 2000 to recognize the cooking appliance 1000 in advance. The battery may include, but is not limited to, a secondary battery (e.g., a lithium-ion battery, a nickel-cadmium battery, a polymer battery, a nickel-metal hydride battery, etc.), a supercapacitor, and the like. A supercapacitor is a capacitor with a significantly high capacitance and is referred to as 'ultracapacitor' or 'high-capacity capacitor'.

According to an embodiment of the disclosure, in a case in which the cooking appliance 1000 includes a memory, the memory may store a program for a processor to perform processing and control, and may store input/output data (e.g., power transmission pattern information for each cooking zone, the identification information of the cooking appliance 1000, the recipe information, etc.).

The memory may include at least one of a flash memory-type storage medium, a hard disk-type storage medium, a multimedia card micro-type storage medium, a card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disk, or an optical disc. Programs stored in the memory may be classified into a plurality of modules according to their functions. At least one artificial intelligence model may be stored in the memory.

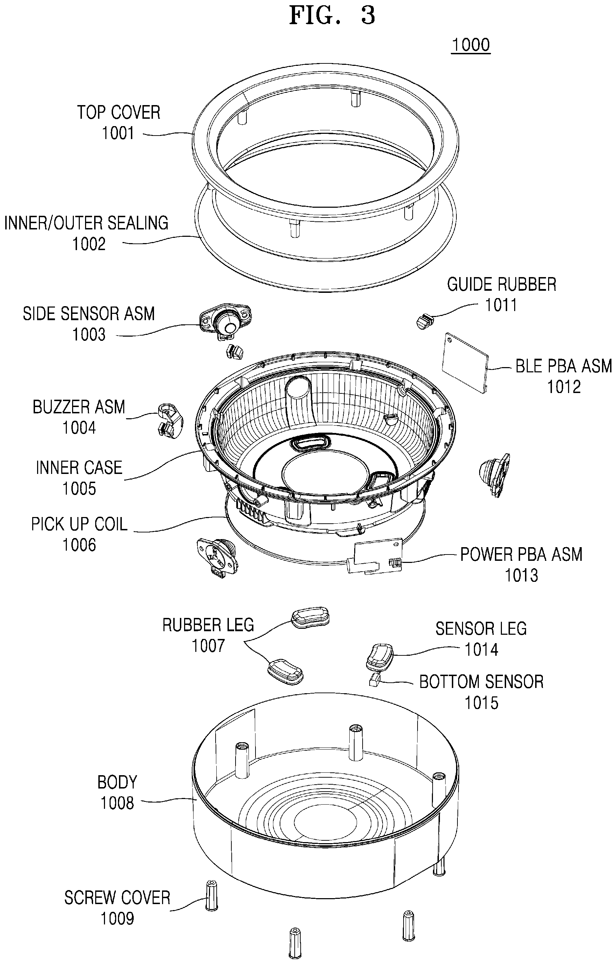

Hereinafter, the structure of the cooking appliance 1000 is described in more detail with reference to FIG. 3.

FIG. 3 is a diagram illustrating a structure of the cooking appliance 1000 according to an embodiment of the disclosure.

Referring to FIG. 3, the cooking appliance 1000 may include, but is not limited thereto, a top cover 1001, an inner/outer sealing unit 1002, a side sensor assembly module 1003, a buzzer assembly module 1004, an inner case 1005, a pickup coil 1006, a rubber leg 1007, a body 1008, a screw cover 1009, a guide rubber unit 1011, a BLE printed circuit board assembly (PBA) module 1012, a power PBA module 1013, a sensor leg 1014, and a bottom sensor 1015. Hereinafter, each component is described.

The top cover 1001 is a component that defines the exterior of the cooking appliance 1000 and allows the cooking vessel 10 to be mounted therein.

The inner/outer sealing unit 1002 is compressed when assembling the cooking appliance 1000 to block a moisture penetration path, and thus, the waterproofness of the cooking appliance 1000 is enhanced.

The side sensor assembly module 1003 may include, but is not limited to, a first temperature sensor (e.g., a side temperature sensor) for measuring the temperature of the cooking vessel 10, a fixing member to fix the first temperature sensor, and an elastic member (e.g., a spring) that is compressed and deformed when the cooking vessel 10 is mounted.

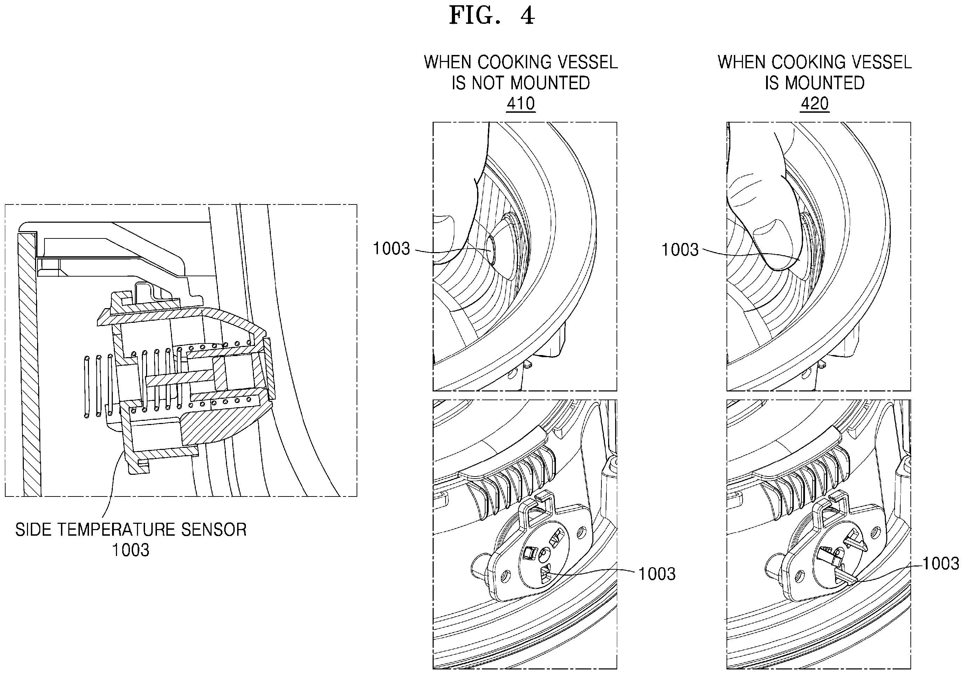

Referring to FIG. 4, the first temperature sensor is coupled to the elastic member, and the elastic member may be compressed and deformed as the cooking vessel 10 is accommodated in the internal space of the cooking appliance 1000. For example, when the cooking vessel 10 is not mounted in the cooking appliance 1000 (410), the side sensor assembly module 1003 may protrude inward, and when the cooking vessel 10 is mounted in the cooking appliance 1000 (420), the side sensor assembly module 1003 may be pressed. Here, as the size of the cooking vessel 10 increases, the compression ratio of the side sensor assembly module 1003 increases. Accordingly, the cooking appliance 1000 according to an embodiment of the disclosure may accommodate the cooking vessels 10 having various sizes.

According to an embodiment of the disclosure, the side sensor assembly module 1003 including the first temperature sensor may be arranged to be spaced apart from the bottom surface of the cooking appliance 1000 by a preset height or greater. The first temperature sensor is also an electrical component, and thus may be affected by induction heating by the wireless power transmission device 2000. Accordingly, in order to minimize the influence of induction heating by the wireless power transmission device 2000 (e.g., heat generation by the first temperature sensor or noise generation due to induction heating) the side sensor assembly module 1003 may be arranged to be spaced apart from the bottom surface of the cooking appliance 1000 by the preset height or greater. Referring to FIG. 5, in order to increase the accuracy of temperature data regarding the cooking vessel 10, the side sensor assembly module 1003 including the first temperature sensor may be arranged at a height that intersects a plane surface of the cooking vessel 10 rather than a curved surface of the cooking vessel 10.

According to an embodiment of the disclosure, in order to prevent eccentricity due to various sizes of the cooking vessel 10 (e.g., the cooking vessel 10 is mounted in an eccentric position), a plurality of side sensor assembly modules 1003 each including the first temperature sensor may be arranged in the cooking appliance 1000.

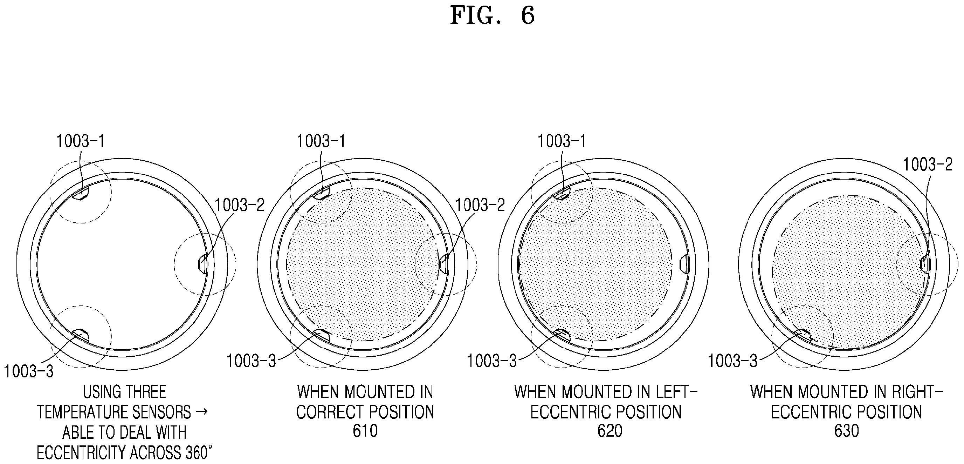

For example, referring to FIG. 6, three side sensor assembly modules 1003 may be arranged at intervals of 120° along the inner circumference of the cooking appliance 1000. In this case, when the cooking vessel 10 is mounted in a correct position of the cooking appliance 1000 (see 610), the cooking appliance 1000 may obtain temperature data regarding the cooking vessel 10 from a first side sensor assembly module 1003-1, a second side sensor assembly module 1003-2, and a third side sensor assembly module 1003-3, and utilize the temperature data regarding the cooking vessel 10 obtained from each of the first side sensor assembly module 1003-1, the second side sensor assembly module 1003-2, and the third side sensor assembly module 1003-3. In addition, when the cooking appliance 1000 is mounted in the cooking appliance 1000 in a left-eccentric position (see 620), the cooking appliance 1000 may utilize temperature data regarding the cooking vessel 10 obtained from the first side sensor assembly module 1003-1 and the third side sensor assembly module 1003-3. In addition, when the cooking appliance 1000 is mounted in the cooking appliance 1000 in a right-eccentric position (see 630), the cooking appliance 1000 may utilize temperature data regarding the cooking vessel 10 obtained from the second side sensor assembly module 1003-2 and the third side sensor assembly module 1003-3. Therefore, according to an embodiment of the disclosure, in a case in which a plurality of side sensor assembly modules 1003 are arranged, the temperature of the cooking vessel 10 may be accurately measured even when the cooking vessel 10 is biased to one side.

Referring back to FIG. 3, the buzzer assembly module 1004 may include a buzzer to output a notification signal when the cooking vessel 10 is abnormally overheated, a fixing member, and a protective cover.

The inner case 1005 may be a component supporting the cooking vessel 10, and the side sensor assembly module 1003, the pickup coil 1006, the BLE PBA module 1012, the power PBA module 1013, and the like may be assembled with the inner case 1005.

The pickup coil 1006 is a component for receiving wireless power from the wireless power transmission device 2000. For example, the pickup coil 1006 may be a low-power coil that generates power for operating the BLE PBA module 1012. The pickup coil 1006 is described above with reference to FIG. 2, and thus, redundant descriptions thereof are omitted.

The rubber leg 1007 is a component for alleviating a shock applied to the cooking vessel 10 and the cooking appliance 1000 and preventing the cooking vessel 10 from sliding when the cooking vessel 10 is mounted in the cooking appliance 1000.

The body 1008 may form the exterior of the cooking appliance 1000 and cover the components therein. The body 1008 may prevent heat conduction to the outside during a cooking operation. According to an embodiment of the disclosure, the body 1008 may include a part (i.e., a handle unit) held by the user moving the cooking appliance 1000, together with the cooking vessel 10 mounted in the cooking appliance 1000.

The screw cover 1009 is for covering a screw. When the cooking appliance 1000 is placed on the wireless power transmission device 2000, the screw cover 1009 may alleviate a shock applied to the cooking appliance 1000 and prevent the cooking appliance 1000 from sliding.

The guide rubber unit 1011 is for preventing the cooking vessel 10 being mounted from being eccentric, and may alleviate a shock applied to the cooking vessel 10 and prevent the cooking vessel 10 from sliding.

The BLE PBA module 1012 may perform wireless communication (e.g., BLE communication) with the wireless power transmission device 2000 to control the output (e.g., a power level value) of the wireless power transmission device 2000. In addition, the BLE PBA module 1012 may include an MCU. In this case, the MCU may receive temperature data regarding the cooking vessel 10 and may store an algorithm or recipe information for automatic cooking. The BLE PBA module 1012 may correspond to the communication interface 1030 and the control unit 1020 of FIG. 2.

The power PBA module 1013 may convert power received from the pickup coil 1006 into a voltage to be used by the BLE PBA module 1012. For example, the power PBA module 1013 may be an SMPS that receives AC power from the pickup coil 1006 and supplies DC power to the MCU or a BLE module included in the BLE PBA module 1012. The power PBA module 1013 may correspond to the power supply unit 1010 of FIG. 2, and thus, redundant descriptions thereof are omitted.

The sensor leg 1014 may be one of the rubber legs 1007, and may be assembled with the bottom sensor 1015. Because the sensor leg 1014 is one of the rubber legs 1007, when the cooking vessel 10 is mounted, the sensor leg 1014 may alleviate a shock applied to the cooking vessel 10 and the cooking appliance 1000 and prevent the cooking vessel 10 from sliding. Although an example in which two rubber legs 1014 and one sensor leg 1007 are provided is described above with reference to FIG. 3, the disclosure is not limited thereto.

The bottom sensor 1015 is a temperature sensor for detecting abnormal overheating of the cooking vessel 10, and may be herein referred to as 'second temperature sensor' or 'bottom temperature sensor'. The bottom sensor 1015 may be arranged at a different position from that of the side sensor assembly module 1003 including the first temperature sensor for measuring the temperature of the cooking vessel 10.

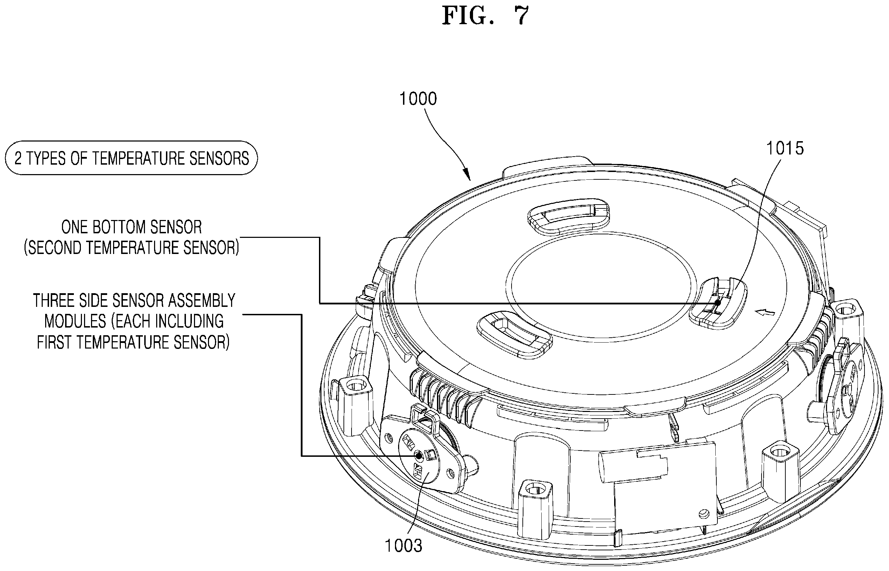

Referring to FIG. 7, the bottom sensor 1015 (i.e., the second temperature sensor) may be arranged on the bottom surface of the cooking appliance 1000, and three side sensor assembly modules 1003 (each including the first temperature sensor) may be arranged on a side of the cooking appliance 1000. According to an embodiment of the disclosure, when the cooking vessel 10 is abnormally overheated, the temperature of the bottom surface of the cooking vessel 10 increases most rapidly, and thus, by assembling the bottom sensor 1015 with the sensor leg 1014 that is one of the rubber legs 1007, the abnormal overheating of the cooking vessel 10 may be quickly detected.

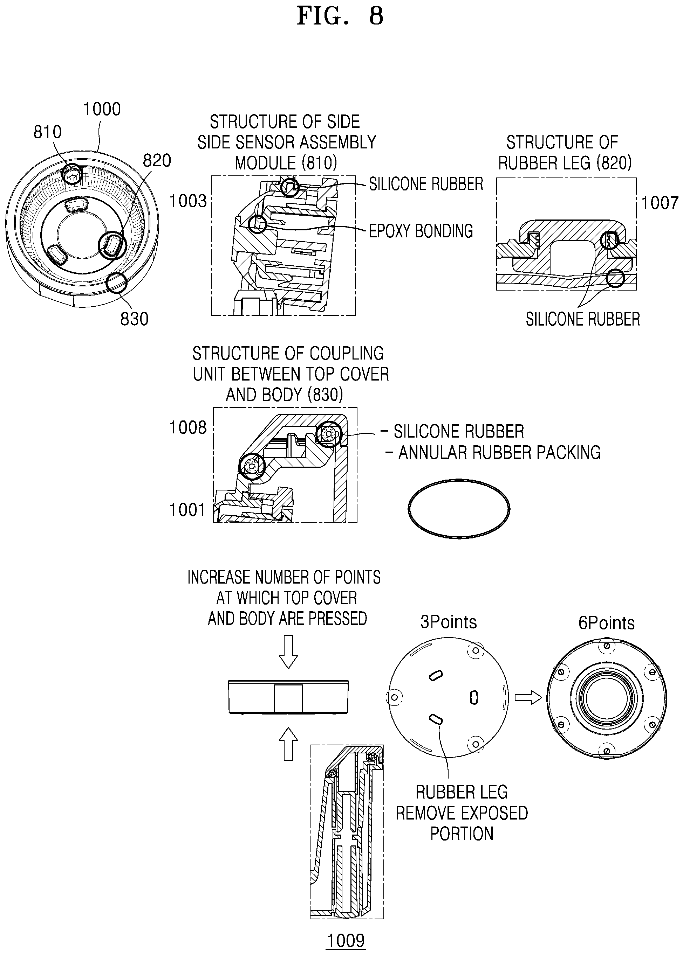

In addition, according to an embodiment of the disclosure, the cooking appliance 1000 is designed to have an enhanced waterproof effect. Hereinafter, a waterproof structure of the cooking appliance 1000 is described in detail with reference to FIG. 8.

FIG. 8 is a diagram for describing a waterproof structure of the cooking appliance 1000 according to an embodiment of the disclosure.

According to an embodiment of the disclosure, in order to enhance a waterproof function, a structure 810 of the side sensor assembly module 1003 of the cooking appliance 1000, a structure 820 of the rubber leg 1007, and a structure 830 of a coupling unit between the top cover 1001 and the body 1008 may be enhanced.

For example, in the structure 810 of the side sensor assembly module 1003, silicone rubber may be applied to inner protrusions, and the inside of the side sensor assembly module 1003 may be fixed and sealed by using epoxy. In addition, in the structure 820 of the rubber leg 1007, by applying silicone rubber to inner protrusions, it is possible to prevent water from permeating therein.

In addition, in the structure 830 of the coupling unit between the top cover 1001 and the body 1008, an annular rubber packing may be inserted between the top cover 1001 and the body 1008, and silicone rubber is applied to a portion around the annular rubber packing, so as to prevent water from permeating therein. In addition, by removing an exposed portion of the rubber leg 1007 from the bottom surface of the cooking appliance 1000, increasing the number of screws for pressing the top cover 1001 and the body 1008 (e.g., increasing the number from 3 to 6), and covering screws with the screw covers 1009, the waterproof function of the cooking appliance 1000 may be enhanced.

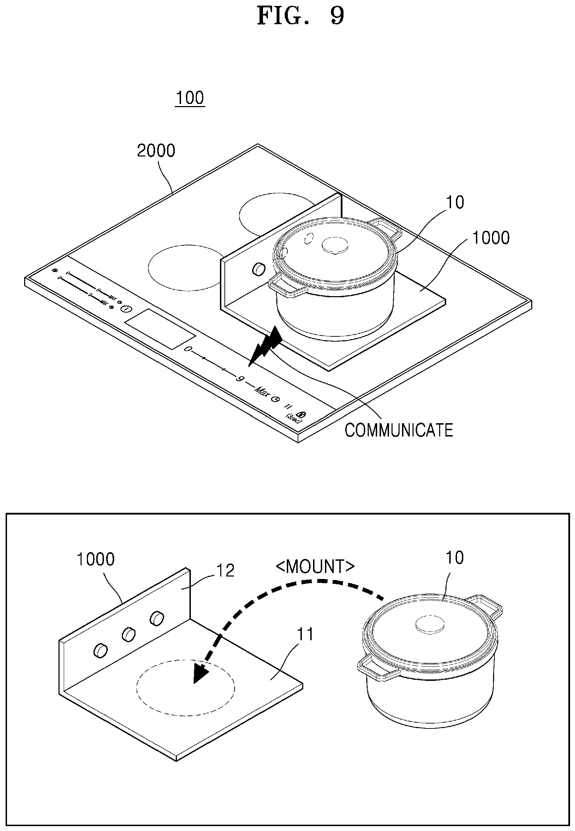

FIG. 9 is a diagram for describing the pad-type cooking appliance 1000 according to an embodiment of the disclosure.

According to an embodiment of the disclosure, the cooking appliance 1000 may be implemented in the form of a pad. The pad-type cooking appliance 1000 may include a first surface 11 on which the bottom surface of the cooking vessel 10 is mounted, and a second surface 12 on which a first temperature sensor for measuring the temperature of the cooking vessel 10 is arranged. A guidance mark for indicating a zone in which the cooking vessel 10 needs to be located may be provided on the first surface 11. The first temperature sensor on the second surface 12 may be a contact-type temperature sensor or a noncontact-type temperature sensor (e.g., an infrared temperature sensor). A plurality of first temperature sensors may be arranged on the second surface 12. In this case, the plurality of first temperature sensors may be arranged at the same height or may be arranged at different heights. In addition, a second temperature sensor for detecting abnormal overheating of the cooking vessel 10 may be further arranged on the second surface 12. In addition, the power supply unit 1010, the control unit 1020, and the communication interface 1030 may be arranged inside the second surface 12.

Meanwhile, according to an embodiment of the disclosure, the cooking appliance 1000 may obtain temperature data regarding the cooking vessel 10 by using a thermal imaging camera instead of the first temperature sensor. For example, a hood system installed above the wireless power transmission device 2000 may include a thermal imaging camera. In this case, the hood system may obtain temperature data regarding the cooking vessel 10 by using the thermal imaging camera and directly transmit the temperature data regarding the cooking vessel 10 to the cooking appliance 1000, or transmit the temperature data regarding the cooking vessel 10 to the cooking appliance 1000 through the wireless power transmission device 2000.

Referring to FIG. 9, the user may mount the cooking vessel 10 on the first surface 11 of the cooking appliance 1000, and place, on the wireless power transmission device 2000, the cooking appliance 1000 in which the cooking vessel 10 is mounted. Alternatively, the user may place the cooking appliance 1000 on the wireless power transmission device 2000, and then mount the cooking vessel 10 on the first surface 11 of the cooking appliance 1000. Thereafter, in order to start automatic cooking, the user may first press the power button included in the wireless power transmission device 2000. The wireless power transmission device 2000 may detect, in the IH vessel detection mode, the cooking vessel 10 mounted in the cooking appliance 1000. In addition, the wireless power transmission device 2000 may detect, in the small appliance detection mode, the cooking appliance 1000 upon a wireless communication signal being received from the cooking appliance 1000 in which the cooking vessel 10 is mounted, and may detect, in the cooking zone determination mode, that the cooking appliance 1000 in which the cooking vessel 10 is mounted is on the right-side cooking zone. Thereafter, the wireless power transmission device 2000 may establish a short-range wireless communication channel with the cooking appliance 1000, and transmit and receive power control information through the short-range wireless communication channel, so as to complete the automatic cooking.

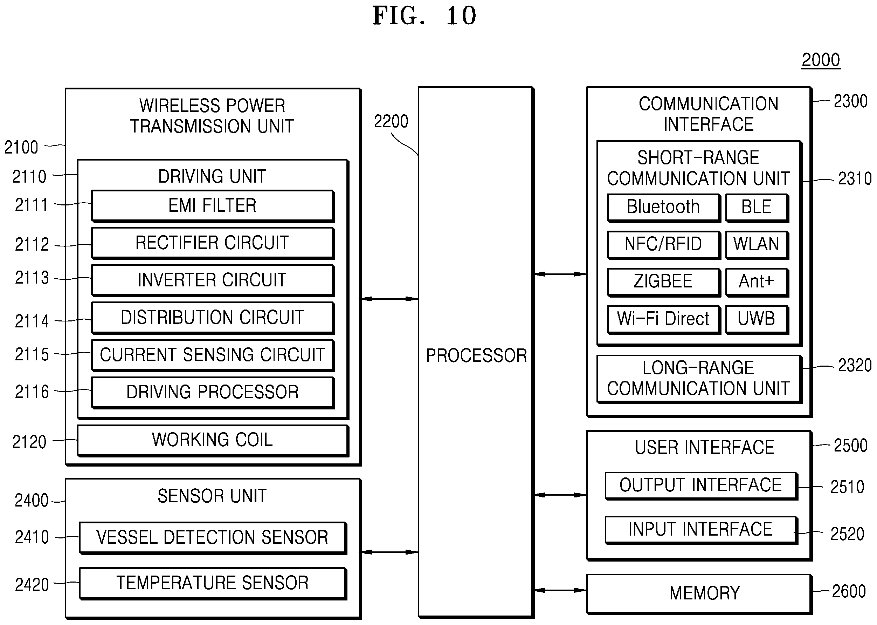

Hereinafter, the wireless power transmission device 2000 performing communication with the cooking appliance 1000 is described in detail with reference to FIG. 10.

FIG. 10 is a block diagram for describing a function of the wireless power transmission device 2000 according to an embodiment of the disclosure.

The wireless power transmission device 2000 according to an embodiment of the disclosure may include a wireless power transmission unit 2100, a processor 2200, a communication interface 2300, a sensor unit 2400, the user interface 2500, and a memory 2600.

Hereinafter, each of the components is described.

The wireless power transmission unit 2100 may include a driving unit 2110 and a working coil 2120 (hereinafter, also referred to as the transmitting coil 2120), but is not limited thereto. The driving unit 2110 may receive power from an external power source and supply a current to the working coil 2120 according to a driving control signal of the processor 2200. The driving unit 2110 may include, is not limited to, an electromagnetic interference (EMI) filter 2111, a rectifier circuit 2112, an inverter circuit 2113, a distribution circuit 2114, a current sensing circuit 2115, and a driving processor 2116.

The EMI filter 2111 may block high-frequency noise included in AC power supplied from the external power source and pass an AC voltage and an AC current of a preset frequency (e.g., 50 Hz or 60 Hz). A fuse and a relay for blocking an overcurrent may be provided between the EMI filter 2111 and the external power source. AC power from which high-frequency noise is filtered out by the EMI filter 2111 is supplied to the rectifier circuit 2112.

The rectifier circuit 2112 may convert the AC power into DC power. For example, the rectifier circuit 2112 may convert an AC voltage that changes in magnitude and polarity (i.e., positive voltage or negative voltage) with time, into a DC voltage with a constant magnitude and polarity, and may convert an AC that changes in magnitude and direction (i.e., positive current or negative current) with time, into a DC with a constant magnitude. The rectifier circuit 2112 may include a bridge diode. For example, the rectifier circuit 2112 may include four diodes. The bridge diode may convert an AC voltage that changes in polarity with time, into a positive voltage with a constant polarity, and may convert an AC current that changes in direction with time, into a positive current with a constant direction. The rectifier circuit 2112 may include a DC link capacitor. The DC link capacitor may convert a positive voltage that changes in magnitude with time, into a DC voltage with a constant magnitude.

The inverter circuit 2113 may include a switching circuit that supplies or blocks a driving current to the working coil 2120, and a resonance circuit that generates resonance in association with the working coil 2120. The switching circuit may include a first switch and a second switch. The first switch and the second switch may be connected in series between a plus line and a minus line output from the rectifier circuit 2112. The first switch and the second switch may be turned on or off according to a driving control signal of the driving processor 2116.

The inverter circuit 2113 may control a current supplied to the working coil 2120. For example, the magnitude and direction of a current flowing through the working coil 2120 may change according to turning on or off of the first switch and the second switch included in the inverter circuit 2113. In this case, an AC may be supplied to the working coil 2120. A sinusoidal AC is supplied to the working coil 2120 according to a switching operation of the first switch and the second switch. In addition, as the switching period of the first switch and the second switch increases (e.g., as the switching frequency of the first switch and the second switch decreases), the current supplied to the working coil 2120 may increase, and the strength of a magnetic field output by the working coil 2120 (i.e., the output of the wireless power transmission device 2000) may increase.

In a case in which the wireless power transmission device 2000 includes a plurality of working coils 2120, the driving unit 2110 may include the distribution circuit 2114. The distribution circuit 2114 may include a plurality of switches that pass or block a current supplied to the plurality of working coils 2120, and the plurality of switches may be turned on or off according to a distribution control signal of the driving processor 2116.

The current sensing circuit 2115 may include a current sensor that measures a current output from the inverter circuit 2113. The current sensor may transmit, to the driving processor 2116, an electrical signal corresponding to the measured current value.

The driving processor 2116 may determine the switching frequency (i.e., a turn-on/turn-off frequency) of the switching circuit included in the inverter circuit 2113 based on the output strength (i.e., the power level) of the wireless power transmission device 2000. The driving processor 2116 may generate a driving control signal for turning on/off the switching circuit according to the determined switching frequency.

The working coil 2120 may generate a magnetic field for heating the cooking vessel 10. For example, when a driving current is supplied to the working coil 2120, a magnetic field may be induced around the working coil 2120. When a current that changes in magnitude and direction with time, i.e., an AC, is supplied to the working coil 2120, a magnetic field that changes in magnitude and direction with time may be induced around the working coil 2120. The magnetic field around the working coil 2120 may pass through the top plate formed of tempered glass, and reach the cooking vessel 10 on the top plate. An eddy current rotating around the magnetic field may be generated in the cooking vessel 10 due to the magnetic field that changes in magnitude and direction with time, and electrical resistance heat may be generated in the cooking vessel 10 due to the eddy current. The electrical resistance heat is heat generated in a resistor when a current flows therethrough, and is also referred to as 'Joule heat'. The cooking vessel 10 is heated by the electrical resistance heat, and thus the contents in the cooking vessel 10 may be heated.

Meanwhile, the working coil 2120 may generate a magnetic field for transmitting power to the pickup coil 1006 of the cooking appliance 1000. For example, a magnetic field around the working coil 2120 may be induced in the pickup coil 1006.

The processor 2200 controls the overall operation of the wireless power transmission device 2000. The processor 2200 may execute programs stored in the memory 2600 to control the wireless power transmission unit 2100, the communication interface 2300, the sensor unit 2400, the user interface 2500, and the memory 2600.

According to an embodiment of the disclosure, the wireless power transmission device 2000 may be equipped with an artificial intelligence (Al) processor. The AI processor may be manufactured in the form of a dedicated hardware chip for Al, or may be manufactured as part of an existing general-purpose processor (e.g., a central processing unit (CPU) or an application processor) or a dedicated graphics processor (e.g., a graphics processing unit (GPU)), and then mounted on the wireless power transmission device 2000.

According to an embodiment of the disclosure, the processor 2200 may control the inverter circuit 2113 to supply the cooking appliance 1000 with power of a preset level for driving the communication interface 1030 of the cooking appliance 1000, and, when the communication interface 1030 of the cooking appliance 1000 is driven, the processor 2200 may receive a first wireless communication signal transmitted from the communication interface 1030 of the cooking appliance 1000. The first wireless communication signal may include, but is not limited to, the identification information (e.g., the MAC address) of the cooking appliance 1000 or information indicating that the current position of the cooking appliance 1000 is unknown.

When the first wireless communication signal transmitted from the cooking appliance 1000 is detected, the processor 2200 may control the inverter circuit 2113 such that the plurality of working coils 2120 generate magnetic fields according to a plurality of different power transmission patterns. The plurality of power transmission patterns may be set differently based on at least one of a duration of a power transmission interval, a duration of a power cutoff interval, a power level, or an operating frequency. For example, the processor 2200 may control the inverter circuit 2113 to transmit power by differently combining a duration of a power transmission interval, a duration of a power cutoff interval, or a power level (i.e., an operating frequency) for respective cooking zones.

In addition, the processor 2200 may receive, from the cooking appliance 1000 through the communication interface 1300, a second wireless communication signal including the identification information (or the product type information) of the cooking appliance 1000 and information about a first cooking zone corresponding to a first power transmission pattern detected at the position of the cooking appliance 1000, among a plurality of power transmission patterns, and output, through an output interface 2510, information about the first cooking zone at which the cooking appliance 1000 is located among the plurality of cooking zones, and the identification information (or the product type information) of the cooking appliance 1000, based on the second wireless communication signal.

Meanwhile, the processor 2200 may detect that the position of the cooking appliance 1000 is changed from the first cooking zone to a second cooking zone. For example, when the communication connection with the cooking appliance 1000 that was located in the first cooking zone among the plurality of cooking zone is released, the processor 2200 may control the inverter circuit 2113 to transmit power for driving the communication interface 1030 of the cooking appliance 1000. When the first wireless communication signal including the identification information of the cooking appliance 1000 is received through the communication interface 2300 within a certain time period after the communication connection is released, the processor 2200 may control the inverter circuit 2113 such that the plurality of working coils generate magnetic fields according to a plurality of different power transmission patterns. The processor 2200 may receive, from the cooking appliance 1000 through the communication interface 2300, a second wireless communication signal including the identification information of the cooking appliance 1000 and information about the second cooking zone corresponding to a power transmission pattern detected from the position of the cooking appliance 1000, among the plurality of power transmission patterns, and output, through the output interface 2510, information about the second cooking zone in which the cooking appliance 1000 is currently located among the plurality of cooking zones, based on the second wireless communication signal. Hereinafter, for convenience of description, the communication interface 2300 of the wireless power transmission device 2000 may be referred to as 'first communication interface', and the communication interface 1030 of the cooking appliance 1000 may be referred to as 'second communication interface'.

The processor 2200 may control the output interface 2510 to display, while the cooking appliance 1000 is located in the first cooking zone, product type information (e.g., an icon) of the cooking appliance 1000, on a first position of a GUI screen, which indicates the first cooking zone, and to display, when the cooking appliance 1000 has been moved from the first cooking zone to the second cooking zone, the product type information (e.g., an icon) of the cooking appliance 1000, on a second position of the GUI screen, which indicates the second cooking zone.

After receiving the second wireless communication signal, the processor 2200 may identify, based on the identification information of the cooking appliance 1000, whether the cooking appliance 1000 has operated before within a preset time period, and when it is determined that the cooking appliance 1000 has operated before within the preset time period, the processor 2200 may control the output interface 2510 to output information about the progress of cooking by the cooking appliance 1000 corresponding to a time point at which the communication connection with the cooking appliance 1000 is released. The information about the progress of cooking by the cooking appliance 1000 may include at least one of a cooking dish, an elapsed cooking time, or a cooking stage when the communication connection with the cooking appliance 1000 is released. In addition, the processor 2200 may receive the information about the progress of cooking by the cooking appliance 1000 from the memory 2600 or from the cooking appliance 1000.

According to an embodiment of the disclosure, the processor 2200 may establish a communication connection with the cooking appliance 1000 based on communication connection information included in the second wireless communication signal, and control the inverter circuit 2113 to transmit, to the pickup coil 1001 of the cooking appliance 1000, power of a first level (e.g., low power) for maintaining the communication connection with the cooking appliance 1000. In addition, when an operation command for the cooking appliance 1000 is received from the user, the processor 2200 may control the inverter circuit 2113 to transmit, to the cooking appliance 1000, power of a second level (e.g., high power) for operating the cooking appliance 1000. In this case, the power of the first level is less than the power of the second level. Also, the processor 2200 may control power transmission to the cooking appliance 1000, based on power control information (e.g., a power level value or duration information) received from the cooking appliance 1000. In this case, the power control information may be determined based on the recipe information being applied to the cooking appliance 1000 and temperature data regarding the cooking vessel 10.

The communication interface 2300 may include one or more components that enable communication between the wireless power transmission device 2000 and the cooking appliance 1000 or between the wireless power transmission device 2000 and the server device. For example, the communication interface 2300 may include a short-range communication unit 2310 and a long-range communication unit 2320. The short-range wireless communication unit may include, but is not limited to, a Bluetooth communication unit, a BLE communication unit, a NFC unit, a WLAN (e.g., Wi-Fi) communication unit, a Zigbee communication unit, an IrDA communication unit, a WFD communication unit, an UWB communication unit, an Ant+ communication unit, etc. In a case in which a cooking appliance is remotely controlled by a server device (not shown) in an loT environment, the long-range communication unit 2320 may be used to communicate with the server device. The long-range communication unit 2320 may include the Internet, a computer network (e.g., a LAN or a WAN), and a mobile communication unit. The mobile communication unit transmits and receives wireless signals to and from at least one of a base station, an external terminal, or a server, on a mobile communication network. Here, the wireless signal may include a voice call signal, a video call signal, or various types of data according to text/multimedia message transmission and reception. The mobile communication unit may include, but is not limited to, a 3G module, a 4G module, an LTE module, a 5G module, a 6^{th} Generation (6G) module, an NB-loT module, an LTE-M module, and the like.

The sensor unit 2400 may include a vessel detection sensor 2410 and a temperature sensor 2420, but is not limited thereto.

The vessel detection sensor 2410 may be a sensor that detects whether the cooking appliance 1000 or the cooking vessel 10 is placed on the top plate. For example, the vessel detection sensor 2410 may be implemented as a current sensor, but is not limited thereto. The vessel detection sensor 2410 may be implemented as at least one of a proximity sensor, a touch sensor, a weight sensor, a temperature sensor, an illuminance sensor, or a magnetic sensor.

The temperature sensor 2420 may detect the temperature of the cooking appliance 1000 (or the cooking vessel 10) placed on the top plate or the temperature of the top plate. The cooking appliance 1000 (or the cooking vessel 10) is inductively heated by the working coil 2120, and may be overheated depending on the material of the cooking appliance 1000. Accordingly, the wireless power transmission device 2000 may detect the temperature of the cooking appliance 1000 (or the cooking vessel 10) placed on the top plate or the temperature of the upper plate, and when the cooking appliance 1000 (or the cooking vessel 10) is overheated, the wireless power transmission device 2000 may disable the operation of the working coil 2120. The temperature sensor 2420 may be installed near the working coil 2120. For example, the temperature sensor 2420 may be located in the center of the working coil 2120.

According to an embodiment of the disclosure, the temperature sensor 2420 may include a thermistor that changes in electrical resistance value according to the temperature. For example, the temperature sensor may be a negative temperature coefficient (NTC) temperature sensor, but is not limited thereto. The temperature sensor may be a positive temperature coefficient (PTC) temperature sensor.

The user interface 2500 may include the output interface 2510 and an input interface 2520. The output interface 2510 is for outputting an audio signal or a video signal, and may include a display unit, a sound output unit, and the like.

In a case in which the display unit and a touch pad constitute a layer structure to form a touch screen, the display unit may serve as an input interface in addition to the output interface. The display unit may include at least one of a liquid-crystal display, a thin-film-transistor liquid-crystal display, an light-emitting diode (LED) display, an organic LED display, a flexible display, a three-dimensional (3D) display, or an electrophoretic display. In addition, depending on an implementation of the wireless power transmission device 2000, the wireless power transmission device 2000 may include two or more display units.

The sound output unit may output an audio signal received from the communication interface 2300 or stored in the memory 2600. Also, the sound output unit may output a sound signal related to a function performed by the wireless power transmission device 2000. The sound output unit may include a speaker, a buzzer, and the like.

According to an embodiment of the disclosure, the output interface 2510 may display information about the cooking appliance 1000. For example, the output interface 2510 may output a GUI corresponding to the identification information or the product type information of the cooking appliance 1000. Also, the output interface 2510 may output information about the current position of the cooking appliance 1000, operation state information of the cooking appliance 1000, and the like.

According to an embodiment of the disclosure, when the processor 2200 does not receive information about the cooking zone in which the cooking appliance 1000 is located within a certain time period after controlling the inverter circuit 2113 such that the plurality of working coils 2120 generate magnetic fields according to a plurality of different power transmission patterns the output interface 2510 may output a notification for requesting the user to check the position of the cooking appliance 1000. Also, according to an embodiment of the disclosure, when the communication connection with the cooking appliance 1000 is released, the output interface 2510 may output a notification for requesting the user to check the position of the cooking appliance 1000.

The input interface 2520 is for receiving an input from the user. The input interface 2520 may be, but is not limited to, at least one of a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, or a jog switch.

The input interface 2520 may include a speech recognition module. For example, the wireless power transmission device 2000 may receive, through a microphone, a voice signal, which is an analog signal, and convert a speech part into a computer-readable text by using an automatic speech recognition (ASR) model. The wireless power transmission device 2000 may interpret the text by using a natural language understanding (NLU) model to obtain an utterance intention of the user. Here, the ASR model or the NLU model may be an AI model. The AI model may be processed by an Al-dedicated processor designed in a hardware structure specialized for processing an AI model. The AI model may be generated via a training process. Here, being generated via a training process may mean that predefined operation rules or AI model set to perform desired characteristics (or purposes), is generated by training a basic AI model by using a learning algorithm that utilizes a large amount of training data. The AI model may include a plurality of neural network layers. Each of the neural network layers may include a plurality of weight values, and may perform a neural network arithmetic operation via an arithmetic operation between an arithmetic operation result of a previous layer and the plurality of weight values.

Linguistic understanding is a technology to recognize and apply/process human language/characters and includes natural language processing, machine translation, dialogue systems, question answering, speech recognition/synthesis, and the like.

The memory 2600 may store a program for the processor 2200 to perform processing and control, and may also store input/output data (e.g., a plurality of power transmission patterns, cooking progress information of the cooking appliance 1000, recipe information, the identification information of the cooking appliance 1000, registration information of the cooking appliance 1000, etc.). The memory 2600 may also store an AI model.

The memory 2600 may include at least one of a flash memory-type storage medium, a hard disk-type storage medium, a multimedia card micro-type storage medium, a card-type memory (e.g., SD or XD memory), RAM, SRAM, ROM, EEPROM, PROM, magnetic memory, a magnetic disk, or an optical disc. In addition, the wireless power transmission device 2000 may operate a web storage or a cloud server that performs a storage function on the Internet.

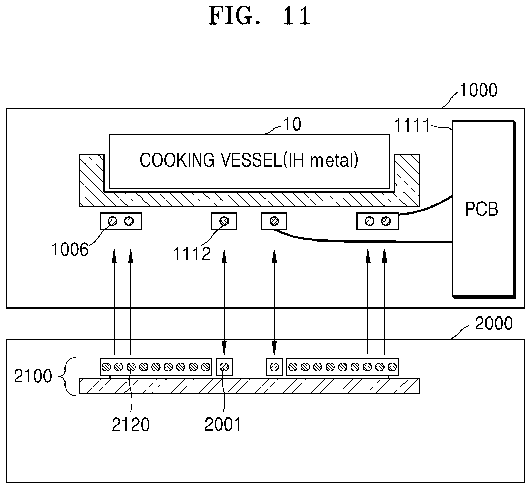

FIG. 11 is a diagram for describing coil arrangement of the cooking system 100 according to an embodiment of the disclosure.

Referring to FIG. 11, when the cooking appliance 1000 in which the cooking vessel 10 is mounted is placed on the wireless power transmission device 2000, the wireless power transmission device 2000 may supply power to the pickup coil 1006 of the cooking appliance 1000 through the transmitting coil 2120. In addition, when the wireless power transmission device 2000 wirelessly transmits power through the transmitting coil 2120, an eddy current may be generated in the cooking vessel 10 to heat the contents in the cooking vessel 10. The power supplied to the pickup coil 1006 may be less than the power for heating the contents in the cooking vessel 10.

According to an embodiment of the disclosure, the wireless power transmission device 2000 may further include a communication coil 2001 that is coplanar with the transmitting coil (or working coil) 2120. In this case, the communication coil 2001 may be an NFC antenna coil for NFC communication. Although FIG. 11 illustrates that the number of turns of the communication coil 2001 is one, the disclosure is not limited thereto. The number of turns of the communication coil 2001 may be plural. For example, the communication coil 2001 may be wound by 5 or 6 turns.

According to an embodiment of the disclosure, the communication coil 2001 included in the wireless power transmission device 2000 and a communication coil 1112 included in the cooking appliance 1000 may be arranged at positions corresponding to each other. For example, in a case in which the communication coil 2001 included in the wireless power transmission device 2000 is arranged in the center of each cooking zone, the communication coil 1112 included in the cooking appliance 1000 may also be arranged in the center of the bottom surface of the cooking appliance 1000.

Although an example in which the wireless power transmission device 2000 includes the communication coil 2001 is described above with reference to FIG. 11, in a case in which the cooking appliance 1000 does not include the communication coil 1112, the wireless power transmission device 2000 may not include the communication coil 2001 as well.

Hereinafter, a method, performed by the cooking appliance 1000, of communicating with the wireless power transmission device 2000 to complete automatic cooking is described in detail with reference to FIG. 12.

FIG. 12 is a flowchart illustrating a method, performed by the cooking appliance 1000, of controlling the wireless power transmission device 2000 for automatic cooking, according to an embodiment of the disclosure.

In operation S1210, the cooking appliance 1000 according to an embodiment of the disclosure may obtain temperature data regarding the cooking vessel 10 measured by a plurality of first temperature sensors. For example, when the cooking vessel 10 is accommodated in the internal space of the cooking appliance 1000, at least one processor of the cooking appliance 1000 may collect the temperature data regarding the cooking vessel 10 from each of the plurality of first temperature sensors.

According to an embodiment of the disclosure, the temperature data regarding the cooking vessel 10 measured by the plurality of first temperature sensors may include, but is not limited to, at least one of temperature values of the cooking vessel 10 obtained from the plurality of first temperature sensors, respectively, an average (hereinafter, referred to as average temperature data regarding the cooking vessel 10) of the temperature values of the cooking vessel 10 obtained from the plurality of first temperature sensors, respectively, or a temperature value of the cooking vessel 10 obtained from one of the plurality of first temperature sensors.

According to an embodiment of the disclosure, the cooking appliance 1000 may obtain temperature data regarding the cooking vessel 10 from each of the plurality of first temperature sensors (i.e., a plurality of side temperature sensors). Here, in a case in which the cooking vessel 10 is mounted in the correct position (see 610 of FIG. 6), pieces of temperature data regarding the cooking vessel 10 obtained respectively from the plurality of first temperature sensors (i.e., the plurality of side temperature sensors) may be similar to each other. For example, first temperature data obtained from the first side sensor assembly module 1003-1, second temperature data obtained from the second side sensor assembly module 1003-2, and third temperature data obtained from the third side sensor assembly module 1003-3 may be similar to each other.

On the contrary, in a case in which the cooking vessel 10 is mounted in an eccentric position, pieces of temperature data regarding the cooking vessel 10 obtained respectively from the plurality of first temperature sensors may be slightly different from each other. For example, in a case in which the cooking vessel 10 is mounted in a left-eccentric position in the cooking appliance 1000 (see 620 of FIG. 6), temperatures indicated by the first temperature data obtained from the first side sensor assembly module 1003-1 and the third temperature data obtained from the third side sensor assembly module 1003-3 may be greater than a temperature indicated by the second temperature data obtained from the second side sensor assembly module 1003-2. In a case in which the cooking vessel 10 is mounted in a right-eccentric position in the cooking appliance 1000 (see 630 of FIG. 6), temperatures indicated by the second temperature data obtained from the second side sensor assembly module 1003-2 and the third temperature data obtained from the third side sensor assembly module 1003-3 may be greater than a temperature indicated by the first temperature data obtained from the first side sensor assembly module 1003-1.

In operation S1220, the cooking appliance 1000 according to an embodiment of the disclosure may determine a power level value of the wireless power transmission device 2000, based on the temperature data regarding the cooking vessel 10 and recipe information of a dish selected by the user.

According to an embodiment of the disclosure, the cooking appliance 1000 may receive, from the wireless power transmission device 2000 through the communication interface 1030, information about the dish selected by the user. The user may select one of a plurality of dishes corresponding to the cooking appliance 1000 and displayed on the user interface 2500 of the wireless power transmission device 2000, and may select one of the dishes corresponding to the cooking appliance 1000 and displayed on a mobile terminal.

When the cooking appliance 1000 receives the information about the dish selected by the user, the cooking appliance 1000 may obtain, from the memory, recipe information corresponding to the dish selected by the user. For example, the cooking appliance 1000 may identify, from a list of pieces of basic recipe information stored in the memory of the cooking appliance 1000, the recipe information corresponding to the dish selected by the user. Here, the recipe information is information about a recipe for automatically cooking the dish (food) selected by the user, and may include, but is not limited to, a time period required to cook the dish, a cooking sequence (e.g., a plurality of cooking stages), a temperature condition value at each cooking stage (e.g., a temperature value or an average temperature value at each first temperature sensor), a power level value required for each cooking stage, a duration of maintaining power, whether to open or close the lid, the amount of the dish (e.g., the number of servings), and the like.

In addition, when the recipe information of the dish selected by the user through the mobile terminal is not previously stored in the memory of the cooking appliance 1000, the cooking appliance 1000 may receive the recipe information of a dish from the mobile terminal (or a server device) through the wireless power transmission device 2000, and then store the recipe information in the memory.

According to an embodiment of the disclosure, the cooking appliance 1000 may compare the temperature data regarding the cooking vessel 10 with information about a plurality of cooking stages included in the recipe information corresponding to the dish selected by the user in real time, to adaptively determine the power level value of the wireless power transmission device 2000 or a duration of maintaining the power level value. For example, the cooking appliance 1000 may determine the current cooking stage based on the temperature data regarding the cooking vessel 10, and adaptively determine a power level value corresponding to the current cooking stage or a duration of maintaining the power level value. For example, the cooking appliance 1000 may determine, as the current cooking stage, a first cooking stage from among the plurality of cooking stages included in the recipe information, based on the temperature data regarding the cooking vessel 10, and identify, from the recipe information, a first power level value corresponding to the first cooking stage. In addition, when a temperature indicated by temperature data obtained from at least one of the plurality of temperature sensors reaches a temperature indicated by first threshold temperature data, the cooking appliance 1000 may determine, as the current cooking stage, a second cooking stage subsequent to the first cooking stage, and identify, from the recipe information, a second power level value corresponding to the second cooking stage. In addition, when a temperature indicated by individual temperature data obtained from each of the plurality of first temperature sensors is greater than a temperature indicated by second threshold temperature data, and the average of temperatures indicated by temperature data obtained from the plurality of first temperature sensors is greater than or equal to a temperature indicated by third threshold temperature data, the cooking appliance 1000 may determine, as the current cooking stage, a third cooking stage subsequent to the second cooking stage, and identify, from the recipe information, a third power level value corresponding to the third cooking stage.

In operation S1230, the cooking appliance 1000 according to an embodiment of the disclosure may transmit, to the wireless power transmission device 2000 through the communication interface 1030, power control information including the power level value. According to an embodiment of the disclosure, the power control information may further include information about a duration of maintaining the power level value.

According to an embodiment of the disclosure, the cooking appliance 1000 may establish and maintain a short-range wireless communication channel (e.g., a Bluetooth communication channel or a BLE communication channel) with the wireless power transmission device 2000, and transmit the power control information including the power level value of the wireless power transmission device 2000, through the short-range wireless communication channel. For example, when the current cooking stage is the first cooking stage, the cooking appliance 1000 may wirelessly transmit, to the wireless power transmission device 2000 through the short-range wireless communication channel, first power control information including the first power level value corresponding to the first cooking stage. When the current cooking stage is the second cooking stage subsequent to the first cooking stage, the cooking appliance 1000 may wirelessly transmit, to the wireless power transmission device 2000 through the short-range wireless communication channel, second power control information including the second power level value corresponding to the second cooking stage. When the current cooking stage is the third cooking stage subsequent to the second cooking stage, the cooking appliance 1000 may wirelessly transmit, to the wireless power transmission device 2000 through the short-range wireless communication channel, third power control information including the third power level value corresponding to the third cooking stage.

In this case, the wireless power transmission device 2000 may transmit power, based on the power control information received from the cooking appliance 1000, so as to heat the contents in the cooking vessel 10 according to the cooking stage and maintain the communication connection with the cooking appliance 1000. Therefore, according to an embodiment of the disclosure, the cooking appliance 1000 may adaptively control the output (i.e., the power level) of the wireless power transmission device based on the recipe information and the temperature data regarding the cooking vessel 10, so as to complete high-quality automatic cooking with minimal user intervention.

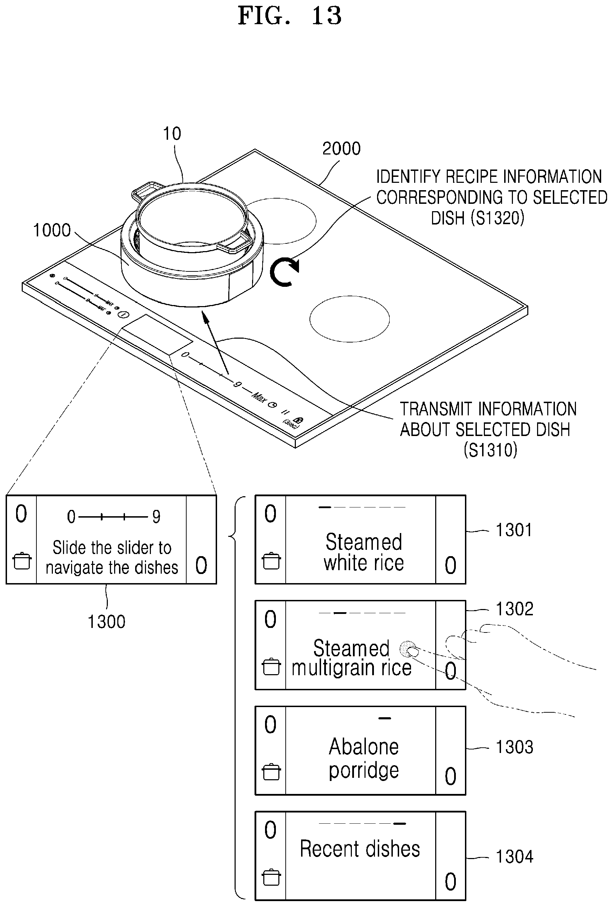

Hereinafter, an operation, performed by the cooking appliance 1000, of adaptively controlling the output (i.e., the power level) of the wireless power transmission device, based on recipe information and temperature data regarding the cooking vessel 10 is described in detail with reference to FIGS. 13 to 15.

FIG. 13 is a diagram for describing an operation, performed by the cooking appliance 1000, of identifying recipe information corresponding to a dish selected by a user, according to an embodiment of the disclosure.

Referring to FIG. 13, the user may mount, in the internal space of the cooking appliance 1000, the cooking vessel 10 containing mixed grains and rice, and then place the cooking appliance 1000 on the wireless power transmission device 2000. In this case, the wireless power transmission device 2000 may identify that the cooking appliance 1000 in which the cooking vessel 10 is mounted is located in a lower left cooking zone, by performing an IH vessel detection operation, a small appliance detection operation, and a cooking zone determination operation. In this case, the wireless power transmission device 2000 may display, in a position corresponding to the lower left cooking zone, an icon indicating the identification information (e.g., 'smart pot') of the cooking appliance 1000, and display a menu screen 1300 (e.g., including a text stating, 'Slide the slider to navigate the dishes') corresponding to the identification information (e.g., 'smart pot') of the cooking appliance 1000. A list of dishes corresponding to the identification information (e.g., 'smart pot') of the cooking appliance 1000 may include steamed white rice 1301, steamed multigrain rice 1302, abalone porridge 1303, a recent dish 1304, and the like, but is limited thereto. The user may select the steamed multigrain rice 1302 from the list of dishes corresponding to the identification information (e.g., 'smart pot') of the cooking appliance 1000.

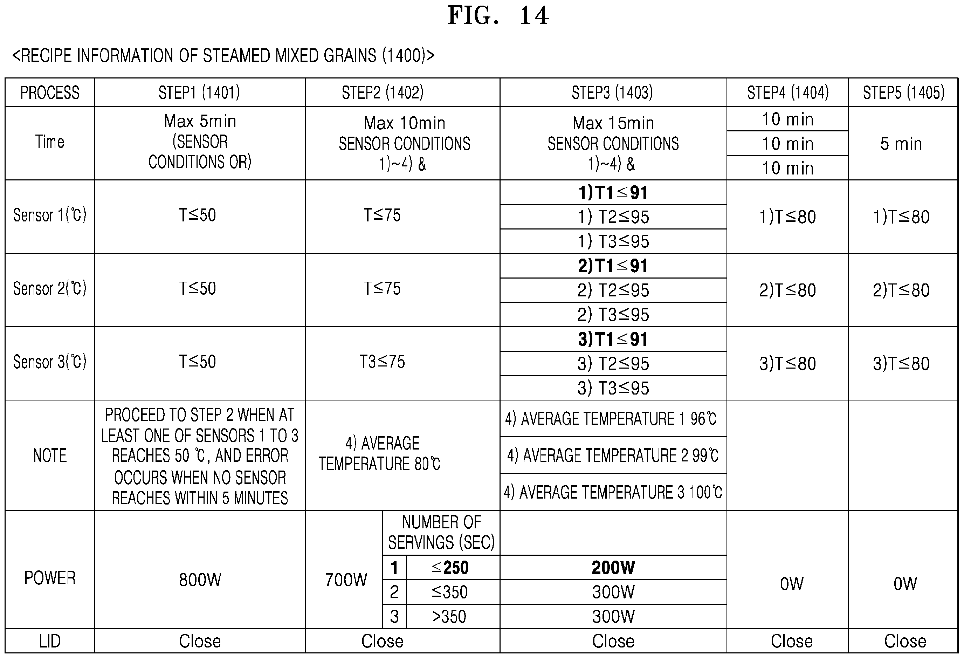

In this case, the wireless power transmission device 2000 may transmit information about the dish selected by the user (i.e., the steamed multigrain rice 1302), to the cooking appliance 1000 through short-range wireless communication (e.g., Bluetooth communication or BLE communication) (S1310). The cooking appliance 1000 may check the dish selected by the user (i.e., the steamed multigrain rice 1302), and identify recipe information corresponding to the dish selected by the user (i.e., the steamed multigrain rice 1302) (S1320). For example, the cooking appliance 1000 may obtain recipe information of the steamed multigrain rice 1302 from the memory (or the storage space of the MCU). Hereinafter, the recipe information of the steamed multigrain rice 1302 is described with reference to FIG. 14.

FIG. 14 is a diagram for describing recipe information 1400 according to an embodiment of the disclosure. Hereinafter, an example of recipe information in a case in which the cooking appliance 1000 includes three first temperature sensors (i.e., side temperature sensors) is described with reference to FIG. 14.

Referring to FIG. 14, the recipe information 1400 of the steamed multigrain rice 1302 may include, but is not limited to, a plurality of cooking stages (e.g., a first cooking stage 1401, a second cooking stage 1402, a third cooking stage 1403, a fourth cooking stage 1404, and a fifth cooking stage 1405), conditions of the plurality of first temperature sensors in each cooking stage, an output (i.e., a power level) required for each cooking stage, whether the lid is opened or closed, and the like.

Referring to the recipe information 1400 of the steamed multigrain rice 1302, a period between the beginning of cooking and a time point at which a temperature indicated by temperature data regarding the cooking vessel 10 reaches 50 °C may be classified as the first cooking stage 1401. In this case, when the temperature of the cooking vessel 10 measured by at least one of the three side temperature sensors reaches 50 °C, the first cooking stage 1401 may be terminated and the second cooking stage 1402 may be performed. 800 W of power may be required for performing the first cooking stage 1401.

The second cooking stage 1402 may be a period between a first time point at which the temperature of the cooking vessel 10 measured by at least one of the three side temperature sensors reaches 50 °C, and a second time point at which all of temperatures measured by the three side temperature sensors are greater than 75 °C and the average of the temperatures reaches 80 °C. In this case, the cooking appliance 1000 may estimate, based on a time period until the second time point, the number of servings of the steamed multigrain rice 1302 in the cooking vessel 10. For example, the cooking appliance 1000 may estimate the number of servings of the steamed multigrain rice 1302 to be 1 when the time period until the second time point is less than 250 seconds, to be 2 when the time period until the second time point is between 250 seconds and 350 seconds, and to be 3 when the time period until the second time point exceeds 350 seconds. 700 W of power may be required for performing the second cooking stage 1402.

In the third cooking stage 1403, conditions of the plurality of first temperature sensors may vary depending on the number of servings of the steamed multigrain rice 1302. For example, when the number of serving of the steamed multigrain rice 1302 is 1, the third cooking stage 1403 may be a period between the second time point to a third time point at which all of temperatures measured by the three side temperature sensors are greater than 91 °C and the average of the temperatures reaches 96 °C. When the number of serving of the steamed multigrain rice 1302 is 2, the third cooking stage 1403 may be a period between the second time point to a third time point at which all of temperatures measured by the three side temperature sensors are greater than 95 °C and the average of the temperatures reaches 99 °C. When the number of serving of the steamed multigrain rice 1302 is 3, the third cooking stage 1403 may be a period between the second time point to a third time point at which all of temperatures measured by the three side temperature sensors are greater than 95 °C and the average of the temperatures reaches 100 °C. The power required in the third cooking stage 1403 may vary depending on the number of servings of the steamed multigrain rice 1302. For example, the power required in the third cooking stage 1403 may be 200 W when the number of servings of the steamed multigrain rice 1302 is 1, and may be 300 W when the number of servings of the steamed multigrain rice 1302 is 2 or 3.

The fourth cooking stage 1404 and the fifth cooking stage 1405 are simmering stages and may be omitted. The fourth cooking stage 1404 may be performed for 10 minutes from the third time point, and the fifth cooking stage 1405 may be performed for 5 minutes. The power required in the fourth cooking stage 1404 and the fifth cooking stage 1405 may be 0 W. Accordingly, in the fourth cooking stage 1404 and the fifth cooking stage 1405, the communication connection between the cooking appliance 1000 and the wireless power transmission device 2000 may be released.

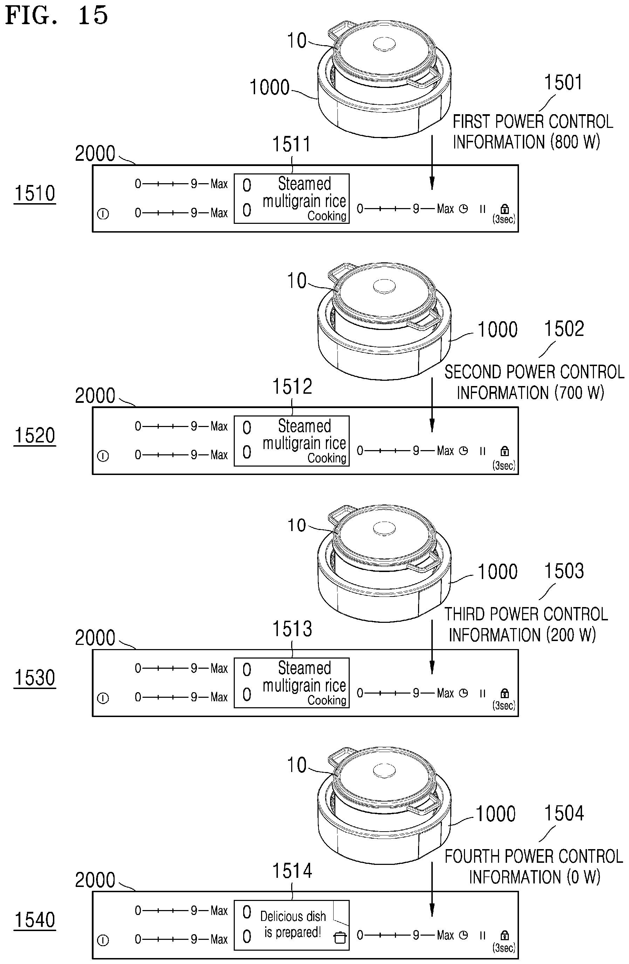

Hereinafter, with reference to FIG. 15, an operation, performed by the cooking appliance 1000, of automatically cooking steamed multigrain rice by adaptively controlling the output (i.e., the power level) of the wireless power transmission device 2000, based on the recipe information of the steamed multigrain rice 1302 and temperature data regarding the cooking vessel 10 is described.

FIG. 15 is a diagram for describing an operation, performed by the cooking appliance 1000, of adaptively determining a power level value of the wireless power transmission device 2000 for automatic cooking, according to an embodiment of the disclosure. Hereinafter, an example of cooking one serving of steamed multigrain rice is described with reference to FIG. 15.

Referring to 1510 of FIG. 15, the cooking appliance 1000 may determine, as the current cooking stage, the first cooking stage 1401 among the plurality of cooking stages included in the recipe information 1400 of the steamed multigrain rice 1302, based on temperature data regarding the cooking vessel 10, and identify, from the recipe information 1400, a first power level value corresponding to the first cooking stage 1401. For example, when the cooking has just started and thus the temperature of the cooking vessel 10 is less than 50 °C, the cooking appliance 1000 may determine the first cooking stage 1401 as the current cooking stage, and identify, as the first power level value, '800 W', which is the power required in the first cooking stage 1401. In addition, the cooking appliance 1000 may transmit first power control information 1501 including the first power level value (i.e., 800 W) to the wireless power transmission device 2000 through a short-range wireless communication channel. In this case, the wireless power transmission device 2000 may transmit 800 W of power according to the first power control information 1501, and thus, the cooking vessel 10 may be gradually heated. Also, the wireless power transmission device 2000 may display a first GUI 1511 indicating the dish (e.g., 'steamed multigrain rice') selected by the user and a cooking state (e.g., 'cooking').

Referring to 1520 of FIG. 15, when the temperature of the cooking vessel 10 measured by at least one of the three side temperature sensors reaches 50 °C while the cooking vessel 10 is heated, the cooking appliance 1000 may determine the second cooking stage 1402 as the current cooking stage, and identify, from the recipe information 1400, a second power level value (e.g., 700 W) corresponding to the second cooking stage 1402. In addition, the cooking appliance 1000 may transmit second power control information 1502 including the second power level value (i.e., 700 W) to the wireless power transmission device 2000 through the short-range wireless communication channel. In this case, the wireless power transmission device 2000 may transmit 700 W of power according to the second power control information 1502, and thus, the cooking vessel 10 may be continuously heated. The wireless power transmission device 2000 may display a second GUI 1512 indicating the dish (e.g., the steamed multigrain rice 1302) selected by the user and a cooking state (e.g., 'cooking').

In addition, when a time period taken to complete the second cooking stage 1402 (e.g., respective temperatures measured by the three side temperature sensors are all greater than 75 °C and the average of the temperatures reaches 80 °C) is less than 250 seconds, the cooking appliance 1000 may estimate the number of servings of the steamed multigrain rice 1302 to be 1, and proceed to the third cooking stage 1403.

Referring to 1520 of FIG. 15, when respective temperatures of the cooking vessel 10 measured by the three side temperature sensors are all greater than 75 °C and the average of the temperatures reaches 80 °C while the cooking vessel 10 is heated, the cooking appliance 1000 may determine the third cooking stage 1403 as the current cooking stage, and identify, from the recipe information 1400, a third power level value (e.g., 200 W) corresponding to the third cooking stage 1403. In addition, the cooking appliance 1000 may transmit third power control information 1503 including the third power level value (i.e., 200 W) to the wireless power transmission device 2000 through the short-range wireless communication channel. In this case, the wireless power transmission device 2000 may transmit 200 W of power according to the third power control information 1503, and thus, the cooking vessel 10 may be continuously heated. The wireless power transmission device 2000 may display a third GUI 1513 indicating the dish (e.g., the steamed multigrain rice 1302) selected by the user and a cooking state (e.g., 'cooking').

Referring to 1540 of FIG. 15, when respective temperatures of the cooking vessel 10 measured by the three side temperature sensors are all greater than 91 °C and the average of the temperatures reaches 96 °C while the cooking vessel 10 is heated, the cooking appliance 1000 may determine the fourth cooking stage 1404 as the current cooking stage, and identify, from the recipe information 1400, a fourth power level value (e.g., 0 W) corresponding to the fourth cooking stage 1404. In addition, the cooking appliance 1000 may transmit fourth power control information 1504 including the fourth power level value (i.e., 0 W) to the wireless power transmission device 2000 through the short-range wireless communication channel. For example, the cooking appliance 1000 may transmit, to the wireless power transmission device 2000, the fourth power control information 1504 including a command to stop power transmission of the wireless power transmission device 2000.

When the wireless power transmission device 2000 stops the power transmission, the power for driving the communication interface 1030 of the cooking appliance 1000 may become insufficient, and thus, the communication connection between the cooking appliance 1000 and the wireless power transmission device 2000 may be released. Accordingly, when transmitting the fourth power control information 1504, the cooking appliance 1000 may also transmit, to wireless power transmission device 2000, information for requesting to immediately stop the power transmission and display, after 10 minutes (i.e., after the simmering completed), a fourth GUI 1514 indicating that the cooking has been completed. The wireless power transmission device 2000 may stop the power transmission according to the fourth power control information 1504, and display, after 10 minutes, the fourth GUI 1514 indicating that the cooking has been completed (e.g., a text stating, "Delicious dish is prepared!').

Accordingly, according to an embodiment of the disclosure, the cooking appliance 1000 may automatically complete a high-quality dish (e.g., the steamed multigrain rice) without user intervention, by adaptively controlling the power level value of the wireless power transmission device 2000 to be sequentially 800 W, 700 W, 200 W, and 0 W, based on the recipe information 1400 and temperature data regarding the cooking vessel 10.

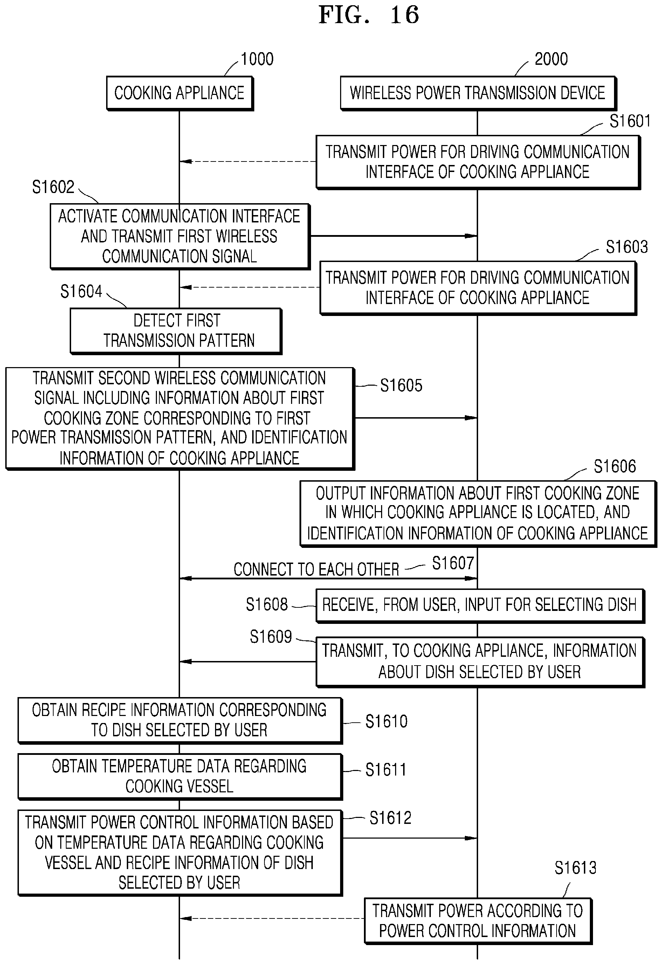

FIG. 16 is a flowchart illustrating an operation, performed by the cooking appliance 1000, of establishing a communication connection with the wireless power transmission device 2000, according to an embodiment of the disclosure.

In operation S1601, the wireless power transmission device 2000 may transmit, to the cooking appliance 1000, power (e.g., low power) for driving the communication interface 1030 of the cooking appliance 1000. In this case, the wireless power transmission device 2000 may operate in the small appliance detection mode. The power for driving the communication interface 1030 of the cooking appliance 1000 may be, for example, 100 W to 300 W.

In operation S1602, when the cooking appliance 1000 according to an embodiment of the disclosure receives the power from the wireless power transmission device 2000, the cooking appliance 1000 may activate the communication interface 1030 and transmit a first wireless communication signal to the wireless power transmission device 2000. For example, the cooking appliance 1000 may periodically advertise the first wireless communication signal including first packets by using short-range wireless communication (e.g., Bluetooth or BLE).

In this case, the wireless power transmission device 2000 may receive the first wireless communication signal transmitted from the communication interface 1030 of the cooking appliance 1000. The first packets included in the first wireless communication signal may include the identification information of the cooking appliance 1000, but are not limited thereto. The identification information of the cooking appliance 1000 is unique information for identifying the cooking appliance 1000, and may include a MAC address, a Bluetooth address, a device ID, and the like, but is not limited thereto.

The first packets included in the first wireless communication signal may not include position information of the cooking appliance 1000 (e.g., information about a cooking zone in which the cooking appliance 1000 is currently located). For example, the first wireless communication signal may include information indicating that the cooking appliance 1000 has no information about the current position, in the form of a universally unique ID (UUID).

In operation S1603, when the wireless power transmission device 2000 according to an embodiment of the disclosure receives the first wireless communication signal transmitted from the communication interface 1030 of the cooking appliance 1000, the wireless power transmission device 2000 may transmit power through a plurality of cooking zones according to a plurality of different power transmission patterns, respectively.

According to an embodiment of the disclosure, the first packets included in the first wireless communication signal transmitted from the cooking appliance 1000 may not include the position information of the cooking appliance 1000. In this case, the wireless power transmission device 2000 may be unable to obtain the accurate position of the cooking zone on which the cooking appliance 1000 is located. Accordingly, the wireless power transmission device 2000 may control the inverter circuit 2113 to output power to the cooking zones according to different power transmission patterns, respectively, in order to check the position of the cooking appliance 1000. For example, in a case in which the wireless power transmission device 2000 includes three cooking zones, the wireless power transmission device 2000 may control a first inverter circuit to output power according to a first power transmission pattern through a first working coil corresponding to a first cooking zone, control a second inverter circuit to output power according to a second power transmission pattern through a second working coil corresponding to a second cooking zone, and control a third inverter circuit to output power according to a third power transmission pattern through a third working coil corresponding to a third cooking zone.

According to an embodiment of the disclosure, in a case in which the cooking appliance 1000 (e.g., a small appliance) may be used only in some of the plurality of cooking zones, the wireless power transmission device 2000 may transmit, to the cooking zones, power according to a particular power transmission pattern. For example, when the wireless power transmission device 2000 includes three cooking zones, but the cooking appliance 1000 may be used only in a first cooking zone and a third cooking zone, the wireless power transmission device 2000 may control the inverter circuit 2113 such that power is output through a first working coil corresponding to the first cooking zone according to a first power transmission pattern, power is output through a third working coil corresponding to the third cooking zone according to the third power transmission pattern, and power is not output through a second working coil corresponding to the second cooking zone.

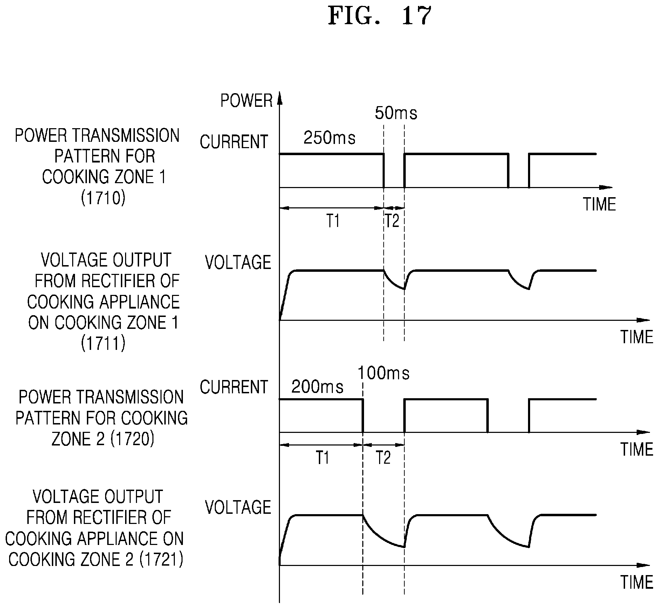

The plurality of power transmission patterns may be set differently based on at least one of a duration of a power transmission interval, a duration of a power cutoff interval, a power level, or an operating frequency. Referring to FIG. 17, the plurality of power transmission patterns may be set differently depending on a duration of a power transmission interval T1 and a duration of a power cutoff interval T2. For example, in a first power transmission pattern 1710 of the first cooking zone, the duration of the power transmission interval T1 is 250 ms, and the duration of the power cutoff interval T2 is 50 ms. In addition, the operating frequency of the power transmission interval T1 may be 75 kHz, and the operating frequency of the power cutoff interval T2 may be 0 kHz. That is, according to the first power transmission pattern 1710, a pattern in which power is transmitted at an operating frequency of 75 kHz for 250 ms and power is cut off for 50 ms may be repeated. In a second power transmission pattern 1720 of the second cooking zone, the duration of the power transmission interval T1 is 200 ms, and the duration of the power cutoff interval T2 is 100 ms. That is, according to the second power transmission pattern 1720, a pattern in which power is transmitted at an operating frequency of 75 kHz for 200 ms and power is cut off for 100 ms may be repeated.

In operation S1604, the cooking appliance 1000 according to an embodiment of the disclosure may detect a first power transmission pattern. According to an embodiment of the disclosure, the cooking appliance 1000 may detect one (e.g., the first power transmission pattern) of the plurality of power transmission patterns by analyzing a voltage output from the rectifier.

For example, referring to FIG. 17, when the cooking appliance 1000 is located in the first cooking zone, the cooking appliance 1000 may analyze a first voltage 1711 output from the rectifier, and thus detect the first power transmission pattern 1710 in which the duration of the power transmission interval T1 is 250 ms and the duration of the power cutoff interval T2 is 50 ms. In addition, the cooking appliance 1000 may identify, based on prestored information about the plurality of power transmission patterns of the wireless power transmission device 2000, that the first cooking zone is outputting the first power transmission pattern 1710, and thus determine that the cooking appliance 1000 is located in the first cooking zone. In addition, when the cooking appliance 1000 is located in the second cooking zone, the cooking appliance 1000 may analyze a second voltage 1721 output from the rectifier, and thus detect the second power transmission pattern 1720 in which the duration of the power transmission interval T1 is 200 ms and the duration of the power cutoff interval T2 is 100 ms. In addition, the cooking appliance 1000 may identify, based on the prestored information about the plurality of power transmission patterns of the wireless power transmission device 2000, that the second cooking zone is outputting the second power transmission pattern 1720, and thus determine that the cooking appliance 1000 is located in the second cooking zone.

In addition, according to an embodiment of the disclosure, the cooking appliance 1000 may also identify the cooking zone in which the cooking appliance 1000 is located, based on only the duration of the power cutout interval T2. For example, when it is determined, by analyzing power output from the rectifier, that the power cutoff interval is 50 ms, the cooking appliance 1000 may determine that the cooking appliance 1000 is located on the first cooking zone that is outputting the first power transmission pattern 1710, and, when it is determined that the power cutoff interval is 100 ms, the cooking appliance 1000 may determine that the cooking appliance 1000 is located on the second cooking zone that is outputting the second power transmission pattern 1720.

In operation S1605, when the cooking appliance 1000 according to an embodiment of the disclosure detects the first power transmission pattern, the cooking appliance 1000 may transmit a second wireless communication signal including information about the first cooking zone corresponding to the first power transmission pattern, and the identification information of the cooking appliance 1000. According to an embodiment of the disclosure, the power transmitted to the cooking appliance 1000 according to the plurality of power transmission patterns may be sufficient to drive the communication interface 1030 of the cooking appliance 1000. Accordingly, according to an embodiment of the disclosure, when it is determined, based on the detected power transmission pattern, that the cooking appliance 1000 is located in the first cooking zone, the cooking appliance 1000 may transmit the second wireless communication signal including the information about the first cooking zone. For example, the cooking appliance 1000 may advertise second packets including the information about the first cooking zone by using short-range wireless communication.

In this case, the wireless power transmission device 2000 may receive, from the cooking appliance 1000 through short-range wireless communication, the second packets including the information about the first cooking zone in which the cooking appliance 1000 is located, and the identification information of the cooking appliance 1000. The information about the first cooking zone in which the cooking appliance 1000 is located may include identification information (e.g., 'first burner' or 'upper left burner') indicating the first cooking zone among the plurality of cooking zones, and may include coordinate information of the first cooking zone. According to an embodiment of the disclosure, the information about the first cooking zone in which the cooking appliance 1000 is located may be inserted into the second packets, in the form of a UUID. The identification information of the cooking appliance 1000 is unique information for identifying the cooking appliance 1000, and may include at least one of a media access control (MAC) address, a Bluetooth address, a model name, a device ID, device type information (e.g., an IH type ID, a heater type ID, or a motor type ID), manufacturer information (e.g., a manufacturer ID), a serial number, or a date and time of manufacture, but is not limited thereto. According to an embodiment of the disclosure, the identification information of the cooking appliance 1000 may be expressed as an identification number or a combination of numbers and alphabets.

According to an embodiment of the disclosure, the second packets included in the second wireless communication signal may further include product type information indicating the product type of the cooking appliance 1000. For example, the product type information of the cooking appliance 1000 may be inserted into the second packets together with the position information of the cooking appliance 1000, in the form of a UUID. The product type of the cooking appliance 1000 may include, but is not limited to, smart pot, smart kettle, toaster, blender, coffee machine, and the like. The wireless power transmission device 2000 may determine the type of the cooking appliance 1000 and the cooking zone in which the cooking appliance 1000 is located, by receiving the second wireless communication signal including the information about the first cooking zone in which the cooking appliance 1000 is located, and product type information of the cooking appliance 1000.

In operation S1606, the wireless power transmission device 2000 may output the information about the first cooking zone in which the cooking appliance 1000 is located, and the identification information (e.g., the product type information) of the cooking appliance 1000.

According to an embodiment of the disclosure, the wireless power transmission device 2000 displays, in a position corresponding to the first cooking zone on a GUI, the product type information of the cooking appliance 1000, so as to indicate that the cooking appliance 1000 is located in the first cooking zone. For example, the wireless power transmission device 2000 may display a text indicating the name or product type of the cooking appliance 1000, or may display, on the display unit, an icon image of the cooking appliance 1000. According to an embodiment of the disclosure, the wireless power transmission device 2000 may output the identification information (or the product type information) of the cooking appliance 1000, as a voice through the sound output unit.

In operation S1607, the cooking appliance 1000 and the wireless power transmission device 2000 may be communicatively connected to each other. For example, the cooking appliance 1000 and the wireless power transmission device 2000 may establish a short-range wireless communication channel (e.g., a Bluetooth communication channel or a BLE communication channel) with each other for data transmission and reception.

According to an embodiment of the disclosure, the second packets included in the second wireless communication signal may further include communication connection information. In a case in which the cooking appliance 1000 and the wireless power transmission device 2000 have been previously paired with each other, the communication connection information may include pairing information (e.g., an authentication key). The term 'pairing' refers to, for example, a procedure of checking a password, identification information, security information, or authentication information designated for mutual communication connection between the cooking appliance 1000 and the wireless power transmission device 2000, which support a Bluetooth function. Accordingly, according to an embodiment of the disclosure, after receiving the second wireless communication signal, the wireless power transmission device 2000 may establish a short-range wireless communication channel with the cooking appliance 1000 based on the communication connection information. Then, the wireless power transmission device 2000 may transmit and receive data to and from the cooking appliance 1000 through the short-range wireless communication channel.

In operation S1608, the wireless power transmission device 2000 may receive, from the user, an input for selecting a dish. For example, the wireless power transmission device 2000 may displays, on the user interface 2500, a list of dishes corresponding to the identification information (e.g., 'smart pot') of the cooking appliance 1000, and receive a user input for selecting a particular dish from the list.

According to an embodiment of the disclosure, the user may select a particular dish through a touch input or a voice input. Also, the wireless power transmission device 2000 may receive a user input for selecting a particular dish through the user interface 2500 or from the user's mobile terminal. For example, when the user checks the list of dishes of the cooking appliance 1000 through an execution window of an application installed in the mobile terminal and selects a particular dish from the list, the mobile terminal (or a server device connected to the mobile terminal through an application) may transmit, to the wireless power transmission device 2000 through Wi-Fi communication, information about the dish selected by the user.

In operation S1609, the wireless power transmission device 2000 may transmit, to the cooking appliance 1000, information about the dish selected by the user. For example, the wireless power transmission device 2000 may transmit the information about the dish selected by the user, to the cooking appliance 1000 through a short-range wireless communication channel (e.g., a Bluetooth communication channel or a BLE communication channel).

In operation S1610, the cooking appliance 1000 may receive the information on the dish selected by the user, and obtain recipe information corresponding to the dish selected by the user. For example, the cooking appliance 1000 may obtain, from the memory (or the storage space of the MCU), the recipe information of the dish selected by the user.

In operation S1611, the cooking appliance 1000 may obtain temperature data regarding the cooking vessel 10 in order to complete automatic cooking based on the recipe information of the dish selected by the user. For example, the cooking appliance 1000 may monitor the temperature data regarding the cooking vessel 10 by using the plurality of first temperature sensors.

According to an embodiment of the disclosure, the temperature data regarding the cooking vessel 10 may include at least one of respective temperatures of the cooking vessel 10 obtained from the plurality of first temperature sensors, an average of the respective temperatures of the cooking vessel 10 obtained from the plurality of first temperature sensors (hereinafter, referred to as 'average temperature data of the cooking vessel 10'), or a temperature of the cooking vessel 10 obtained from one of the plurality of first temperature sensors.

In operation S1612, the cooking appliance 1000 may transmit power control information to the wireless power transmission device 2000 through the short-range wireless communication channel, based on the temperature data regarding the cooking vessel 10 and the recipe information of the dish selected by the user.

According to an embodiment of the disclosure, the cooking appliance 1000 may compare the temperature data regarding the cooking vessel 10 with information about a plurality of cooking stages included in the recipe information corresponding to the dish selected by the user in real time, to adaptively determine the power level value of the wireless power transmission device 2000 or a duration of maintaining the power level value. For example, the cooking appliance 1000 may determine the current cooking stage based on the temperature data regarding the cooking vessel 10, and identify, from the recipe information, a power level value corresponding to the current cooking stage or the duration of maintaining the power level value.

In addition, the cooking appliance 1000 may transmit, to the wireless power transmission device 2000, the power control information including the power level value corresponding to the current cooking stage or the duration of maintaining the power level value. The cooking appliance 1000 may transmit the power control information to the wireless power transmission device 2000 through the short-range wireless communication channel.

Operation S1612 corresponds to operations S1220 and S1230 of FIG. 12, and thus, redundant descriptions thereof are omitted.

In operation S1613, the wireless power transmission device 2000 may transmit power according to the power control information. In this case, an eddy current may be generated in the cooking vessel 10, and thus, the contents in the cooking vessel 10 may be heated according to the cooking stage, such that the automatic cooking is completed.

Therefore, according to an embodiment of the disclosure, the cooking appliance 1000 may adaptively control, through the short-range wireless communication channel, the output (i.e., the power level) of the wireless power transmission device 2000, so as to complete high-quality automatic cooking according to the temperature data regarding the cooking vessel 10 and the recipe information, with minimal user intervention.

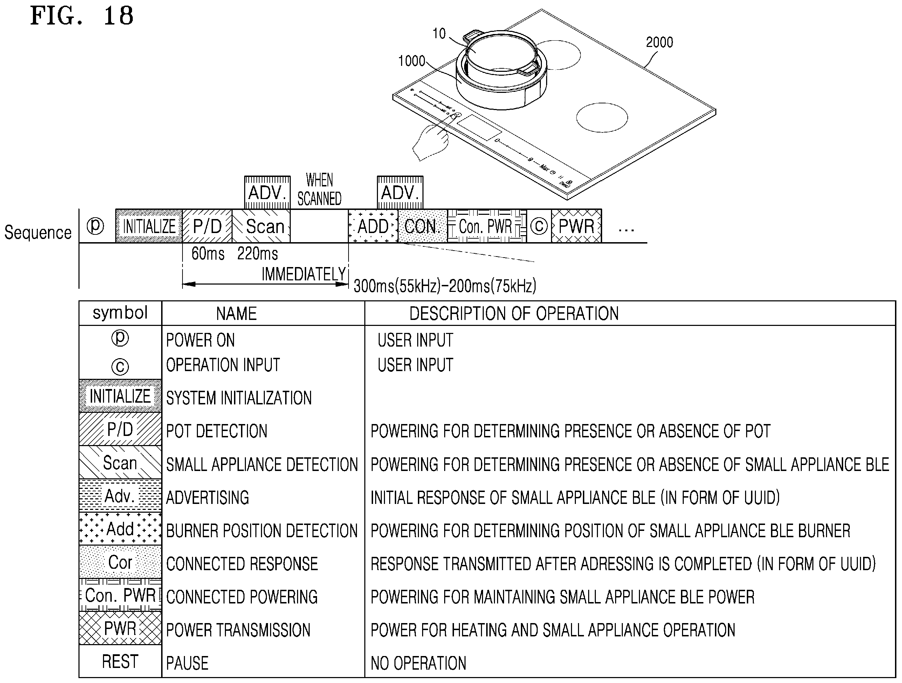

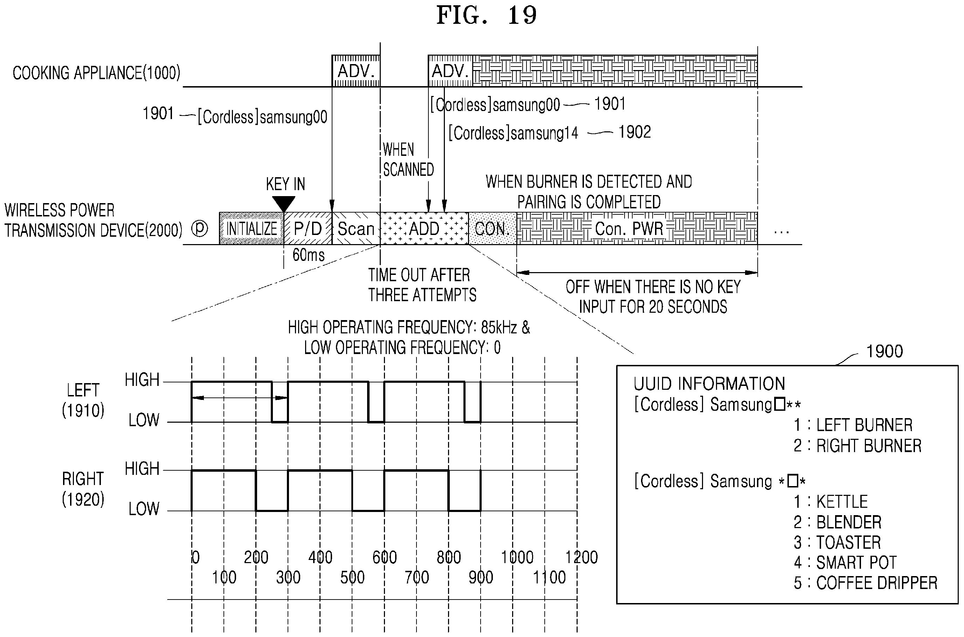

Hereinafter, interaction between the wireless power transmission device 2000 and the cooking appliance 1000 is described in more detail with reference to FIGS. 18 and 19.

FIG. 18 is a diagram for describing an operation that is performed by the wireless power transmission device 2000 in a case in which the cooking appliance 1000 is placed on the wireless power transmission device 2000, according to an embodiment of the disclosure.

Referring to FIG. 18, in a case in which the user powers on the wireless power transmission device 2000 while the cooking appliance 1000 in which the cooking vessel 10 is mounted is placed on the top plate of the wireless power transmission device 2000, the wireless power transmission device 2000 may initialize the system and perform an IH vessel detection operation (i.e., a pot detection operation). In this case, the wireless power transmission device 2000 may detect, by using a current sensor, that the cooking vessel 10 including a magnetic material is placed on the top plate.

The wireless power transmission device 2000 may perform a small appliance detection operation after performing the IH vessel detection operation. For example, the wireless power transmission device 2000 may transmit, to the cooking appliance 1000, power of a first level for driving the communication interface 1030 of the cooking appliance 1000, and operate in a scan mode. When the cooking appliance 1000 receives the power of the first level, the cooking appliance 1000 may drive the communication interface 1030 and advertise first packets including the identification information (e.g., a MAC address) of the cooking appliance 1000. In this case, information indicating that the cooking zone in which the cooking appliance 1000 is currently located is unknown may be inserted in the first packets, in the form of a UUID. The wireless power transmission device 2000 operating in the scan mode may receive the first packets advertised by the cooking appliance 1000, and thus recognize that the cooking appliance 1000 is located on the top plate.

However, in a case in which the first packets do not include information about the cooking zone in which the cooking appliance 1000 is located, the wireless power transmission device 2000 may operate in the cooking zone determination mode to determine the position of the cooking appliance 1000. For example, the wireless power transmission device 2000 may output (e.g., address) power according to different power transmission patterns for the respective cooking zones. For example, the wireless power transmission device 2000 may set the duration of a low operating frequency (e.g., 55 kHz) and the duration of a high operating frequency (e.g., 75 kHz) differently for the respective cooking zones. In this case, high power may be induced in a low operating frequency (e.g., 55 kHz) section, and low power may be induced in a high operating frequency (e.g., 75 kHz) section.

According to an embodiment of the disclosure, the cooking appliance 1000 is placed on the lower left cooking zone, and thus may detect a particular power transmission pattern corresponding to the lower left cooking zone. The cooking appliance 1000 may compare a plurality of pre-stored power transmission patterns of the wireless power transmission device 2000 with the particular power transmission pattern, and thus recognize that the cooking appliance 1000 is located in the lower left cooking zone. In this case, the cooking appliance 1000 may transmit (e.g., advertise), to the wireless power transmission device 2000, second packets including information indicating that the cooking appliance 1000 is located in the lower left cooking zone, and product type information. Current position information and the product type information of the cooking appliance 1000 may be inserted in the second packets, in the form of a UUID. Also, the second packets may further include the identification information (e.g., a MAC address) of the cooking appliance 1000 and communication connection information.

The wireless power transmission device 2000 may establish a communication connection with the cooking appliance 1000 based on the communication connection information included in the second packets. In a case in which the wireless power transmission device 2000 and the cooking appliance 1000 have been previously paired with each other, the communication connection information may include pairing information. According to an embodiment of the disclosure, the wireless power transmission device 2000 may establish a short-range wireless communication channel (e.g., a Bluetooth communication channel or a BLE communication channel) with the cooking appliance 1000. Establishing a Bluetooth communication channel may refer to allowing the cooking appliance 1000 and the wireless power transmission device 2000 to transmit and receive data therebetween through a Bluetooth communication scheme. The BLE communication channel may be a non-connection-type virtual communication channel for transmitting and receiving advertising packets through mutual scanning between the cooking appliance 1000 and the wireless power transmission device 2000, or may be a connection-type communication channel with a session established by a BLE connection request of the wireless power transmission device 2000.

When the wireless power transmission device 2000 is communicatively connected with the cooking appliance 1000, the wireless power transmission device 2000 may control the inverter circuit 2113 to transmit, to the pickup coil 1006, power of a first level (e.g., low power) for maintaining the communication connection with the cooking appliance 1000. In this case, when an operation command for the cooking appliance 1000 (e.g., to start automatic cooking) is received from the user, the wireless power transmission device 2000 may control the inverter circuit 2113 to transmit, to the cooking appliance 1000, power of a second level for operating the cooking appliance 1000. The power of the second level may be power (e.g., high power) for inductively heating the cooking vessel 10 mounted in the cooking appliance 1000.

Hereinafter, an operation, performed by the wireless power transmission device 2000, of identifying the position of the cooking appliance 1000 is described in more detail with reference to FIG. 19.

FIG. 19 is a diagram for describing an operation, performed by the wireless power transmission device 2000, of identifying the position of the cooking appliance 1000 by using a plurality of power transmission patterns, according to an embodiment of the disclosure.

Referring to FIG. 19, in a case in which the user powers on the wireless power transmission device 2000 while the cooking appliance 1000 in which the cooking vessel 10 is mounted is placed on the top plate of the wireless power transmission device 2000, the wireless power transmission device 2000 may initialize the system and perform the IH vessel detection operation (i.e., the pot detection operation) for a preset time period (e.g., 60 ms), and then perform the small appliance detection operation. In the small appliance detection mode, the wireless power transmission device 2000 may transmit, to the cooking appliance 1000, power of a first level (e.g., low power) for driving the communication interface 1030 of the cooking appliance 1000, and operate in the scan mode.

When the cooking appliance 1000 receives the power of the first level (e.g., low power), the cooking appliance 1000 may drive the communication interface 1030 and advertise advertising packets including the identification information (e.g., a MAC address) of the cooking appliance 1000. In this case, a UUID 1900 may be included in the advertisement packets. According to an embodiment of the disclosure, the UUID 1900 may include information about the cooking zone (e.g., a burner) in which the cooking appliance 1000 is currently located, and the product type information of the cooking appliance 1000. For example, first code of the UUID 1900 may expressed as '1' in a case in which the current position of the cooking appliance 1000 is a left cooking zone (i.e., a left burner), as '2' in a case in which the current position of the cooking appliance 1000 is a right cooking zone (i.e., a right burner), and as '0' in a case in which the current position of the cooking appliance 1000 is unknown. In addition, second code of the UUID 1100 may be expressed as '1' in a case in which the product type of the cooking appliance 1000 is 'smart kettle', as '2' in a case in which the product type of the cooking appliance 1000 is 'blender', as '3' in a case in which the product type of the cooking appliance 1000 is 'toaster', as '4' in a case in which the product type of the cooking appliance 1000 is 'smart pot', and as '5' in a case in which the product type of the cooking appliance 1000 is 'coffee dripper'.

According to an embodiment of the disclosure, when the cooking appliance 1000 is supplied with the power of the first level (e.g., low power), the cooking appliance 1000 may drive the communication interface 1030 and broadcast first advertising packets including the identification information (e.g., a MAC address) of the cooking appliance 1000. In this case, the first advertising packets may include a first UUID 1901 in which both the position information and the product type information of the cooking appliance 1000 are expressed as '0' (e.g., '[Cordless] Samsung 00').

The wireless power transmission device 2000 may scan the first advertising packets including the first UUID 1901. Because the first code and the second code of the first UUID 1901 are both expressed as '0', the wireless power transmission device 2000 may operate in the cooking zone determination mode to identify the position of the cooking appliance 1000. For example, the wireless power transmission device 2000 may output power according to different power transmission patterns for the respective cooking zones. The power transmission patterns may be set differently depending on a duration of a high-power transmission interval T1 and a duration of a low-power transmission interval (or a power cutoff interval) T2. For example, in a first power transmission pattern 1910 of the left cooking zone, the duration of the high-power transmission interval T1 is 250 ms, and the duration of the low-power transmission interval (or the power cutoff interval) T2 is 50 ms. In addition, the operating frequency of the power transmission interval T1 may be 85 kHz, and the operating frequency of the power cutoff interval T2 may be 0 kHz. That is, according to the first power transmission pattern 1910, a pattern in which power is transmitted at an operating frequency of 85 kHz for 250 ms and power is cut off for 50 ms may be repeated. In a second power transmission pattern 1920 of the right cooking zone, the duration of the high-power transmission interval T1 is 200 ms, and the duration of the low-power transmission interval (or the power cutoff interval) T2 is 100 ms. That is, according to the second power transmission pattern 1920, a pattern in which power is transmitted at an operating frequency of 85 kHz for 200 ms and power is cut off for 100 ms may be repeated.

In a case in which the cooking appliance 1000 is placed on the left cooking zone, the cooking appliance 1000 may detect the first power transmission pattern 1910 corresponding to the left cooking zone. The cooking appliance 1000 may compare the plurality of pre-stored power transmission patterns of the wireless power transmission device 2000 with the first power transmission pattern 1710, and thus recognize that the cooking appliance 1000 is located in the lower cooking zone. In this case, the cooking appliance 1000 may broadcast second advertising packets including the identification information (e.g., a MAC address) of the cooking appliance 1000. The second advertising packets may include a second UUID 1902 in which the position information of the cooking appliance 1000 is expressed as '1' and the product type information (e.g., 'smart pot') is expressed as '4' (e.g., '[Cordless] Samsung 14').

The wireless power transmission device 2000 may scan the second advertising packets including the second UUID 1902. Because the first code of the second UUID 1902 is expressed as '1' and the second code is expressed as '4', the wireless power transmission device 2000 may identify that the cooking appliance 1000 is a smart pot currently located in the left cooking zone. In addition, the wireless power transmission device 2000 may notify the user that the smart pot is currently located in the left cooking zone, by displaying a smart pot icon at a position indicating the left cooking zone on the GUI displayed on the display unit.

In addition, in a case in which the first UUID 1901 instead of the second UUID 1902 is still included in the second advertising packets received after the wireless power transmission device 2000 outputs power according to different power transmission patterns for the respective cooking zones, it may be considered that the cooking appliance 1000 is incorrectly placed and thus a particular power transmission pattern is not detected, and thus, the wireless power transmission device 2000 may output a notification for requesting the user to check the position of the cooking appliance 1000. For example, when the position of the cooking appliance 1000 partially overlaps the left cooking zone, the cooking appliance 1000 may not accurately detect the first power transmission pattern 1910 corresponding to the left cooking zone.

According to an embodiment of the disclosure, the wireless power transmission device 2000 may display or output a voice of a notification for requesting the user to check the position of the cooking appliance 1000 on the display unit. After outputting the notification for requesting the user to check the position of the cooking appliance 1000, the wireless power transmission device 2000 may transmit power again through the plurality of cooking zones according to the plurality of different power transmission patterns.

According to an embodiment of the disclosure, in a case in which the wireless power transmission device 2000 receives the second advertisement packets including the second UUID 1902 and is then communicatively connected to the cooking appliance 1000, the wireless power transmission device 2000 may control the inverter circuit 2113 to transmit, to the pickup coil 1006 of the cooking appliance 1000, power of a first level (e.g., low power) for maintaining a communication connection with the cooking appliance 1000. In this case, when an operation command for the cooking appliance 1000 (e.g., to start coffee extraction, to start automatic cooking, to perform heating, or to perform warming) is received from the user, the wireless power transmission device 2000 may control the inverter circuit 2113 to transmit, to the cooking appliance 1000, power of a second level (e.g., high power) for operating the cooking appliance 1000. According to an embodiment of the disclosure, when no operation command for the cooking appliance 1000 is received from the user for a preset time period (e.g., 20 seconds), the wireless power transmission device 2000 may be powered off.

Hereinafter, an operation performed by the cooking appliance 1000, of continuously controlling the output of the wireless power transmission device 2000 when the position of the cooking appliance 1000 is moved during automatic cooking is described in detail with reference to FIG. 20.

FIG. 20 is a flowchart illustrating a method of transmitting power control information to the wireless power transmission device 2000 when the position of the cooking appliance 1000 is moved, according to an embodiment of the disclosure.

In operation S2001, the cooking appliance 1000 according to an embodiment of the disclosure may operate on a first cooking zone of the wireless power transmission device 2000. For example, in a case in which the user places the cooking appliance 1000 in which the cooking vessel 10 is mounted on the first cooking zone and powers on the wireless power transmission device 2000, the cooking appliance 1000 may receive power from the wireless power transmission device 2000 and thus operate. When the user selects a dish through the user interface 2500 of the wireless power transmission device 2000, the cooking appliance 1000 may operate according to recipe information corresponding to the selected dish.

In this case, in operation S2002, the cooking appliance 1000 according to an embodiment of the disclosure may be communicatively connected to the wireless power transmission device 2000. For example, the cooking appliance 1000 may receive power from the wireless power transmission device 2000 through the first cooking zone to drive the communication interface 1030, and establish a short-range communication channel with the wireless power transmission device 2000 to transmit and receive data.

In operation S2003, the cooking appliance 1000 according to an embodiment of the disclosure may transmit power control information including a first power level value (hereinafter, referred to as 'level value-based control method'). In this case, the first power level value may be determined according to the recipe information corresponding to the dish selected by the user. For example, when 1000 W of power is required in the current cooking stage according to the recipe information, the cooking appliance 1000 may transmit, to the wireless power transmission device 2000 through the short-range wireless communication channel (e.g., a Bluetooth communication channel or a BLE communication channel), power control information for requesting to transmit 1000 W of power.

According to an embodiment of the disclosure, the cooking appliance 1000 may transmit the power control information including one of discrete power levels defined in the wireless power transmission device 2000 (hereinafter, referred to as 'discrete value-based control method'). For example, in a case in which the wireless power transmission device 2000 provides power levels from stage 1 to stage 9, the cooking appliance 1000 may transmit, to the wireless power transmission device 2000 through the short-range wireless communication channel, the power control information for requesting to operate at the output level of stage 8.

However, in a method of transmitting power control information according to the discrete power levels defined in the wireless power transmission device 2000 (i.e., the discrete value-based control method), a value between the predefined power levels cannot be requested as a power transmission value, whereas in a method of transmitting power control information including an arbitrary power level value (i.e., the level value-based control method), a value between two of the predefined power levels may be requested as a power transmission value. For example, when stage 6 is 800 W and stage 7 is 900 W, in the discrete value-based control method, the cooking appliance 1000 cannot request the wireless power transmission device 2000 to transmit 850 W of power, and needs to select one of stage 6 (i.e., 800 W) or stage 7 (i.e., 900 W). However, in the level value-based control method, the cooking appliance 1000 may request the wireless power transmission device 2000 to transmit 850 W of power, and thus more precisely control the power transmission value of the wireless power transmission device 2000.

In operation S2004, the wireless power transmission device 2000 according to an embodiment of the disclosure may transmit power corresponding to the first power level value through the first cooking zone, based on the power control information received from the cooking appliance 1000. For example, when receiving, from the cooking appliance 1000, the power control information for requesting to transmit 1000 W of power, the wireless power transmission device 2000 may control the inverter circuit 2113 to transmit 1000 W of power through the first cooking zone in which the cooking appliance 1000 is placed.

In operation S2005, the user may move the cooking appliance 1000 from the first cooking zone to a second cooking zone. In this case, when the cooking appliance 1000 is lifted from the first cooking zone, the pickup coil 1006 of the cooking appliance 1000 may no longer receive power wirelessly transmitted through the first cooking zone. Accordingly, the cooking appliance 1000 is unable to drive the communication interface 1030, and thus, the communication connection with the wireless power transmission device 2000 may be released.

In operation S2006, the wireless power transmission device 2000 may detect that the communication connection with the cooking appliance 1000 is released. In operation S2007, as the communication connection with the cooking appliance 1000 that was located in the first cooking zone is released, the wireless power transmission device 2000 may transmit power for driving the communication interface 1030 of the cooking appliance 1000. When the communication connection with the cooking appliance 1000 is released, the wireless power transmission device 2000 may operate in the small appliance detection mode to detect the cooking appliance 1000 again. According to an embodiment of the disclosure, when the communication connection with the cooking appliance 1000 is released, the wireless power transmission device 2000 may first operate in the IH vessel detection mode and then operate in the small appliance detection mode. According to an embodiment of the disclosure, when the wireless power transmission device 2000 operates in the small appliance detection mode, the wireless power transmission device 2000 may transmit, to the cooking appliance 1000, power of a preset first level (e.g., 100 W to 300 W) for driving the communication interface 1030 of the cooking appliance 1000.

In operation S2008, the cooking appliance 1000 may activate the communication interface 1030 and transmit a first wireless communication signal. That is, when the communication interface 1030 of the cooking appliance 1000 is driven again by the power transmitted from the wireless power transmission device 2000, the cooking appliance 1000 may transmit the first wireless communication signal. For example, the cooking appliance 1000 may periodically advertise the first wireless communication signal including first packets by using short-range wireless communication (e.g., Bluetooth or BLE). In this case, the wireless power transmission device 2000 may receive the first wireless communication signal transmitted from the communication interface 1030 of the cooking appliance 1000. The first wireless communication signal may include the identification information of the cooking appliance 1000. Also, the first wireless communication signal may include information indicating that the current position of the cooking appliance 1000 is unknown (e.g., code '0'), in the form of a UUID.

In operation S2009, when the first wireless communication signal including the identification information of the cooking appliance 1000 is received, the wireless power transmission device 2000 according to an embodiment of the disclosure may transmit power through the plurality of cooking zones according to a plurality of different power transmission patterns. For example, when the first wireless communication signal is detected within a preset time period (e.g., within 20 seconds) after the communication connection is released, the wireless power transmission device 2000 may control the inverter circuit 2113 such that a plurality of working coils 2120 corresponding to the plurality of cooking zones generate magnetic fields according to the plurality of different power transmission patterns, respectively.

According to an embodiment of the disclosure, the wireless power transmission device 2000 is unable to obtain, from only the first wireless communication signal, information about in which cooking zone the cooking appliance 1000 is located, and thus may control the inverter circuit 2113 to output power according to the different power transmission pattern for the respective cooking zones in order to identify the position of the cooking appliance 1000.

Operation S2009 corresponds to operation S1603 of FIG. 2, and thus, detailed descriptions thereof are omitted.

In operation S2010, the cooking appliance 1000 may detect the power transmission pattern corresponding to the second cooking zone. For example, the cooking appliance 1000 may detect one of the plurality of power transmission patterns by analyzing a voltage output from the rectifier. The cooking appliance 1000 may detect a second power transmission pattern in which the duration of the power transmission interval T1 is 200 ms and the duration of the power cutoff interval T2 is 100 ms. In addition, the cooking appliance 1000 may identify, based on the prestored information about the plurality of power transmission patterns of the wireless power transmission device 2000, that the second cooking zone is outputting the second power transmission pattern, and thus determine that the cooking appliance 1000 is located in the second cooking zone.

In operation S2011, when the cooking appliance 1000 according to an embodiment of the disclosure determines, based on the detected power transmission pattern, that the cooking appliance 1000 is located in the second cooking zone, the cooking appliance 1000 may transmit a second wireless communication signal including information about the second cooking zone and the identification information of the cooking appliance 1000. For example, the cooking appliance 1000 may advertise second packets including the information about the second cooking zone by using short-range wireless communication.

In operation S2012, the wireless power transmission device 2000 according to an embodiment of the disclosure may be communicatively connected with the cooking appliance 1000 again after receiving the second wireless communication signal. According to an embodiment of the disclosure, the second packets included in the second wireless communication signal may further include communication connection information. In a case in which the cooking appliance 1000 and the wireless power transmission device 2000 have been previously paired with each other, the communication connection information may include pairing information (e.g., an authentication key). The term 'pairing' refers to, for example, a procedure of checking a password, identification information, security information, or authentication information designated for mutual communication connection between the cooking appliance 1000 and the wireless power transmission device 2000, which support a Bluetooth function. Accordingly, according to an embodiment of the disclosure, after receiving the second wireless communication signal, the wireless power transmission device 2000 may establish again a short-range wireless communication channel with the cooking appliance 1000. Then, the wireless power transmission device 2000 may transmit and receive again data to and from the cooking appliance 1000 through the short-range wireless communication channel.

In operation S2013, as the cooking appliance 1000 is communicatively connected with the wireless power transmission device 2000 again, the cooking appliance 1000 may transmit, to the wireless power transmission device 2000, the power control information including the first power level value. In this case, the first power level value may be the power level value at a time point at which the communication connection between the wireless power transmission device 2000 and the cooking appliance 1000 is released.

According to an embodiment of the disclosure, when the wireless power transmission device 2000 is communicatively connected with the cooking appliance 1000 again, the wireless power transmission device 2000 may determine whether an operation history of the cooking appliance 1000 exists within a preset time period before receiving the second wireless communication signal. When it is determined that the operation history of the cooking appliance 1000 exists, the wireless power transmission device 2000 may output a notification for asking the user whether to continue the previous operation. When the user selects to continue the previous operation, the wireless power transmission device 2000 may request the cooking appliance 1000 to continue the previous operation, and receive, from the cooking appliance 1000, the power control information including the first power level value at the time point at which the communication connection is released. For example, when the wireless power transmission device 2000 has previously received, from the cooking appliance 1000 that was located in the first cooking zone, power control information for requesting to transmit 1000 W of power, the wireless power transmission device 2000 may receive again, from the cooking appliance 1000 that has moved to the second cooking zone, the power control information for requesting to transmit 1000 W of power.

According to an embodiment of the disclosure, the power control information may further include information about a duration of maintaining the first power level value. For example, the cooking appliance 1000 may transmit, to the wireless power transmission device 2000, power control information for requesting to transmit 1000 W of power for 5 minutes, considering the elapsed time of the current cooking stage according to the recipe information.

In operation S2014, the wireless power transmission device 2000 may transmit, to the cooking appliance 1000 through the second cooking zone, power corresponding to the first power level value, based on the power control information. Based on the power received from the wireless power transmission device 2000, the cooking appliance 1000 on the second cooking zone may continuously perform the operation that was performed before moving to the second cooking zone (e.g., an operation that was performed in the first cooking zone). For example, as the contents in the cooking vessel 10 are heated, the cooking appliance 1000 may adaptively adjust the power level value of the wireless power transmission device 2000 by monitoring the temperature data regarding the cooking vessel 10 and continuously comparing the temperature data regarding the cooking vessel 10 with the recipe information.

According to an embodiment of the disclosure, the first cooking zone and the second cooking zone of the wireless power transmission device 2000 may differ in power transmission efficiency from each other. For example, in a case in which the size of the working coil of the first cooking zone is larger than the size of the working coil of the second cooking zone, the power transmission efficiency of the first cooking zone may be better than the power transmission efficiency of the second cooking zone. Accordingly, in a case in which the cooking appliance 1000 that was placed in the first cooking zone has been moved to the second cooking zone, when the wireless power transmission device 2000 transmits the same level of power, the rate of rise of the temperature of the cooking vessel 10 in the second cooking zone may be less than that of the cooking vessel 10 in the first cooking zone.

Also, according to an embodiment of the disclosure, in a case in which a first overlapping area between the cooking appliance 1000 and the first cooking zone is larger than a second overlapping area between the cooking appliance 1000 and the second cooking zone, when the wireless power transmission device 2000 transmits the same level of power, the rate of rise of the temperature of the cooking vessel 10 when the cooking appliance 1000 is in the first cooking zone may be greater than that of the cooking vessel 10 when the cooking appliance 1000 is in the second cooking zone. For example, in a case in which the cooking appliance 1000 that was located in the center of the first cooking zone has been moved to the second cooking zone in a position biased toward one side of the second cooking zone, the rate of rise of the temperature of the cooking vessel 10 in the second cooking zone may be less than that of the cooking vessel 10 in the first cooking zone.

According to an embodiment of the disclosure, when the difference between the rate of rise of the temperature of the cooking vessel 10 and a reference rate of rise of temperature is greater than a threshold, the cooking appliance 1000 may adjust the power level value of the wireless power transmission device 2000, from a first power level value to a second power level value. For example, when the rate of rise of the temperature of the cooking vessel 10 is greater than the reference rate of rise of temperature, the cooking appliance 1000 may adjust the power level value of the wireless power transmission device 2000 to the second power level value that is less than the first power level value. On the contrary, when the rate of rise of the temperature of the cooking vessel 10 is less than the reference rate of rise of temperature, the cooking appliance 1000 may adjust the power level value of the wireless power transmission device 2000 to a second power level value that is greater than the first power level value.

The cooking appliance 1000 may transmit, to the wireless power transmission device 2000, second power control information including the second power level value. For example, the cooking appliance 1000 may transmit the second power control information to the wireless power transmission device 2000 through the short-range wireless communication channel. The second power control information may further include information about a duration of maintaining the second power level value. The second power level value may be greater than or less than the first power level value.

The wireless power transmission device 2000 may transmit power corresponding to the second power level, to the cooking appliance 1000 through the second cooking zone. Based on the power received from the wireless power transmission device 2000, the cooking appliance 1000 on the second cooking zone may continuously perform the operation that was performed before moving to the second cooking zone (e.g., an operation that was performed in the first cooking zone). For example, when the wireless power transmission device 2000 receives, from the cooking appliance 1000, the second power control information for requesting to transmit 1100 W of power, the wireless power transmission device 2000 may control the inverter circuit 2113 to transmit 1100 W of power through the second cooking zone. The contents in the cooking vessel 10 may be continuously heated through the power transmitted through the second cooking zone of the wireless power transmission device 2000.

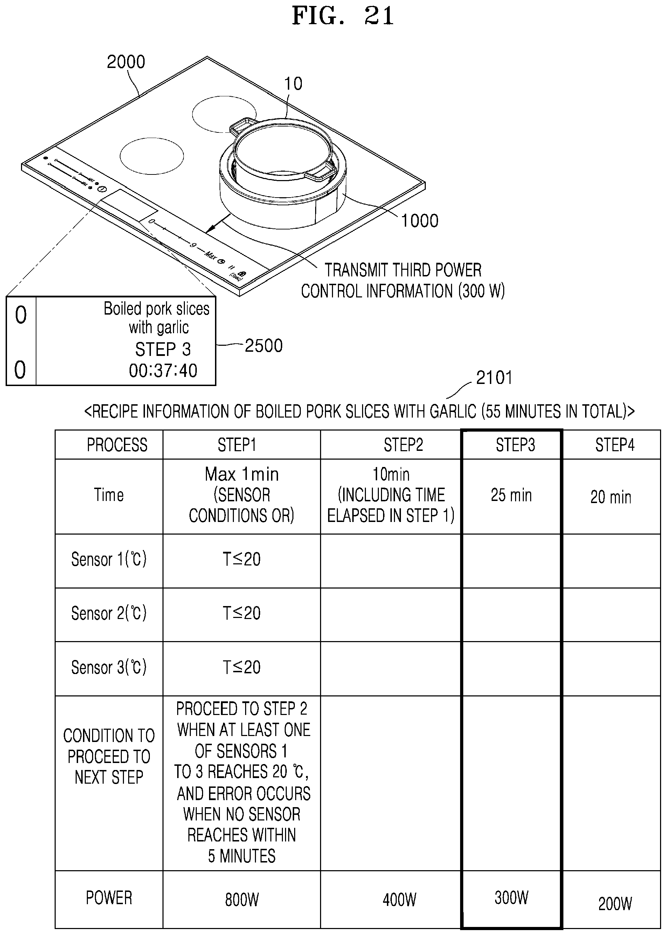

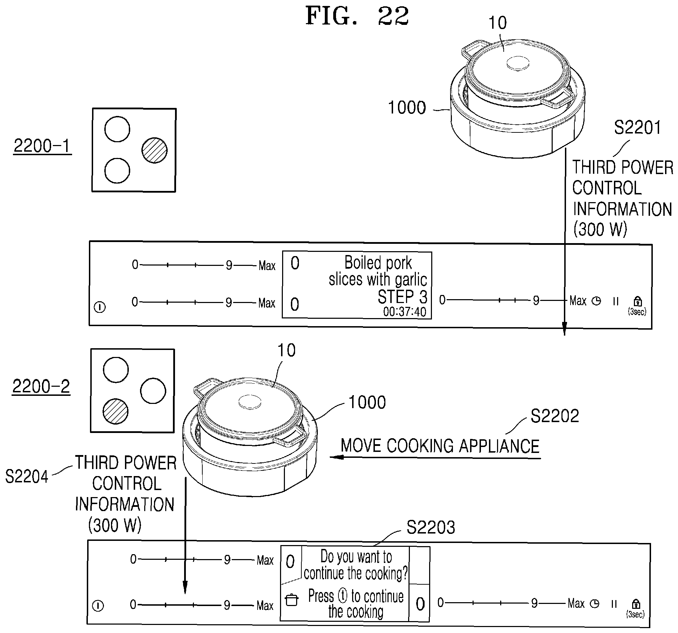

Hereinafter, an operation performed by the cooking appliance 1000, of continuously controlling the output of the wireless power transmission device 2000 when the position of the cooking appliance 1000 is moved during automatic cooking is described in more detail with reference to FIGS. 21 and 22.

FIG. 21 is a diagram for describing an operation, performed by the cooking appliance 1000, of performing some of the stages included in recipe information, according to an embodiment of the disclosure.

Referring to FIG. 21, the user may put ingredients of boiled pork slices with garlic into the cooking vessel 10, and then mount the cooking vessel 10 in the cooking appliance 1000. Then, the user may place the cooking appliance 1000 on the right cooking zone of the wireless power transmission device 2000, and power on the wireless power transmission device 2000. In this case, the wireless power transmission device 2000 may identify that the cooking appliance 1000 is located in the right cooking zone, and provide a list of dishes of the cooking appliance 1000. The user may select boiled pork slices with garlic from the list of dishes. In this case, the cooking appliance 1000 may complete automatic cooking by controlling the output (i.e., the power level) of the wireless power transmission device 2000 based on temperature data regarding the cooking vessel 10 and recipe information 2101 of boiled pork slices with garlic.

For example, according to the recipe information 2101 of boiled pork slices with garlic, the cooking appliance 1000 may transmit, to the wireless power transmission device 2000, first power control information for requesting to output 800 W of power in a first cooking stage, transmit, to the wireless power transmission device 2000, second power control information for requesting to output 400 W of power in a second cooking stage, transmit, to the wireless power transmission device 2000, third power control information for requesting to output 300 W of power for 25 minutes in a third cooking stage, and transmit, to the wireless power transmission device 2000, fourth power control information for requesting to output 200 W of power for 20 minutes in a third cooking stage.

In FIG. 21, the current cooking stage of the boiled pork slices with garlic may be the third cooking stage. Accordingly, the cooking appliance 1000 may transmit, to the wireless power transmission device 2000, the third power control information for requesting to output 300 W of power for 25 minutes, and then the wireless power transmission device 2000 may output power of 300 W.

In addition, because the cooking appliance 1000 is located in the right cooking zone, the wireless power transmission device 2000 may display, in a position corresponding to the right cooking zone on the user interface 2500, the dish being cooked (e.g., 'boiled pork slices with garlic'), the current cooking stage (e.g., 'STEP 3'), STEP 3), the remaining cooking time (e.g., '00:37:40'), and the like.

FIG. 22 is a diagram for describing an operating method of the cooking appliance 1000 when the cooking appliance 1000 is moved while performing some of the stages included in recipe information, according to an embodiment of the disclosure.

Referring to 2200-1 of FIG. 22, as in FIG. 21, the third cooking stage of the boiled pork slices with garlic may be in progress. Accordingly, the cooking appliance 1000 may transmit, to the wireless power transmission device 2000, the third power control information for requesting to output 300 W of power for 25 minutes (S2201). In this case, the wireless power transmission device 2000 may output 300 W of power according to the third power control information.

Referring to 2200-2 of FIG. 22, the cooking appliance 1000 may be moved to the lower left cooking zone by the user while performing the third cooking stage (S2202). In this case, as the communication connection with the cooking appliance 1000 is temporarily released, the wireless power transmission device 2000 may perform the small appliance detection operation and the cooking zone determination operation to detect the cooking appliance 1000 again. The wireless power transmission device 2000 may identify, through the small appliance detection operation and the cooking zone determination operation, that the cooking appliance 1000 is located in the lower left cooking zone, and display a smart pot icon in a position corresponding to the lower left cooking zone instead of a position corresponding to the right cooking zone. Then, the wireless power transmission device 2000 may be communicatively connected to the cooking appliance 1000 again, and identify, based on the identification information (e.g., a MAC address or a device ID) of the cooking appliance 1000, whether the cooking appliance 1000 has operated before within a preset time period (e.g., 5 seconds). Because the cooking appliance 1000 has operated before within the preset time period (e.g., 5 seconds), the wireless power transmission device 2000 may ask the user whether to continue the operation of the cooking appliance 1000 (S2203). When the user wants to continue the operation of the cooking appliance 1000, the wireless power transmission device 2000 may receive, from the cooking appliance 1000, the third power control information including the power level value (e.g., 300 W) corresponding to the third cooking stage that is stopped, to continue the operation. For example, because 300 W of power was required to perform the third cooking stage of the boiled pork slices with garlic when the cooking appliance 1000 was operating in the right cooking zone, when the third cooking stage is not completed after the cooking appliance 1000 is moved to the lower left cooking zone, the cooking appliance 1000 may transmit, to the wireless power transmission device 2000, the third power control information for requesting 300 W of power (S2204). The wireless power transmission device 2000 may control the inverter circuit 2113 to transmit 300 W of power through the lower left cooking zone according to the third power control information received from the cooking appliance 1000. The cooking appliance 1000 may receive power from the wireless power transmission device 2000 to complete the third cooking stage.

Accordingly, according to an embodiment of the disclosure, even when the user moves the cooking appliance 1000 to another cooking zone during cooking, the wireless power transmission device 2000 may automatically recognize the cooking zone to which the cooking appliance 1000 is moved, and transmit power through the cooking zone to allow the cooking appliance 1000 to continuously perform the cooking operation, and thus, user convenience may be improved. In addition, according to an embodiment of the disclosure, because the cooking zones of the wireless power transmission device 2000 may differ in transmission efficiency from each other, the cooking appliance 1000 may adjust the power level value according to the rate of rise of the temperature of the cooking vessel 10 when the cooking operation is continued after moving to another cooking zone.

FIG. 23 is a diagram for describing an operation, performed by the cooking appliance 1000, of interworking with a server device 3000 through the wireless power transmission device 2000, according to an embodiment of the disclosure.

Referring to FIG. 23, the cooking system 100 according to an embodiment of the disclosure may further include the server device 3000 and a display device 4000, in addition to the cooking appliance 1000 and the wireless power transmission device 2000. The cooking system 100 including the cooking appliance 1000 and the wireless power transmission device 2000 is described above with reference to FIG. 1, and thus, the server device 3000 and the display device 4000 are hereinafter described.

According to an embodiment of the disclosure, the server device 3000 may include a communication interface for performing communication with an external device. The server device 3000 may communicate with the cooking appliance 1000, the wireless power transmission device 2000, or the display device 4000 through a communication interface. According to an embodiment of the disclosure, the cooking appliance 1000 may transmit, to the server device 3000, the identification information of the cooking appliance 1000 or identification information of the user (e.g., login information or account information), and may be authenticated the server device 3000 with the identification information of the cooking appliance 1000 or the identification information of the user (e.g., login information or account information), to access the server device 3000. In addition, the wireless power transmission device 2000 may transmit, to the server device 3000, identification information of the wireless power transmission device 2000 or the identification information of the user (e.g., login information or account information), and may be authenticated the server device 3000 with the identification information of the wireless power transmission device 2000 or the identification information of the user (e.g., login information or account information), to access the server device 3000.

According to an embodiment of the disclosure, the server device 3000 may include an AI processor. The AI processor may train an artificial neural network to create an artificial intelligence model for recommending a temperature control method. The 'training' of the artificial neural network may mean constructing a mathematical model in which connection of neurons constituting the artificial neural network may make an optimal decision, by appropriately changing weights based on data.

The display device 4000 according to an embodiment of the disclosure may be a device that is connected to the server device 3000 and is configured to display information provided by the server device 3000. According to an embodiment of the disclosure, the display device 4000 may transmit and receive information to and from the server device 3000 through a particular application (e.g., a home appliance management application) installed in the display device 4000.

According to an embodiment of the disclosure, the display device 4000 may be a device connected to the server device 3000 with the same account information as that of the cooking appliance 1000 and the wireless power transmission device 2000. The display device 4000 may be directly connected to the cooking appliance 1000 and the wireless power transmission device 2000 through a short-range wireless communication channel, and may be indirectly connected to the cooking appliance 1000 and the wireless power transmission device 2000 through the server device 3000.

The display device 4000 according to an embodiment of the disclosure may be implemented in various forms. For example, the display device 4000 described in the disclosure may be, but is not limited to, a mobile terminal, a refrigerator including a display, a television (TV), a computer, an oven including a display, or the like. In addition, the mobile terminal may be, but is not limited to, a smart phone, a laptop computer, a tablet personal computer (PC), a digital camera, an electronic book terminal, a digital broadcasting terminal, a personal digital assistant (PDA), a portable multimedia player (PMP), a navigation system, an MP3 player, or the like. For example, the mobile terminal may include a wearable device that may be worn by the user. Hereinafter, for convenience of description, an example is described in which the display device 4000 is a smart phone.

According to an embodiment of the disclosure, the display device 4000 or the wireless power transmission device 2000 may receive, through a microphone, a voice signal, which is an analog signal, and convert a speech part into a computer-readable text by using an ASR model. The display device 4000 or the wireless power transmission device 2000 may interpret the text by using an NLU model to obtain an utterance intention of the user. Here, the ASR model or the NLU model may be an Al model. The AI model may be processed by an Al-dedicated processor designed in a hardware structure specialized for processing an Al model. The AI model may be generated via a training process. Such a training process may be performed by a device that performs AI according to the disclosure (e.g., the display device 4000 or the wireless power transmission device 2000), or may be performed by the separate server device 3000 and/or a separate system. Examples of learning algorithms may include, for example, and without limitation, supervised learning, unsupervised learning, semi-supervised learning, reinforcement learning, or the like, but are not limited thereto.

The AI model may include a plurality of neural network layers. Each of the neural network layers may include a plurality of weight values, and may perform a neural network arithmetic operation via an arithmetic operation between an arithmetic operation result of a previous layer and the plurality of weight values. A plurality of weight values in each of the neural network layers may be optimized by a result of training the artificial intelligence model. For example, the plurality of weight values may be refined to reduce or minimize a loss or cost value obtained by the artificial intelligence model during the training process. An artificial neural network may include, for example, a deep neural network (DNN) and may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks (DQN), or the like, but is not limited thereto.

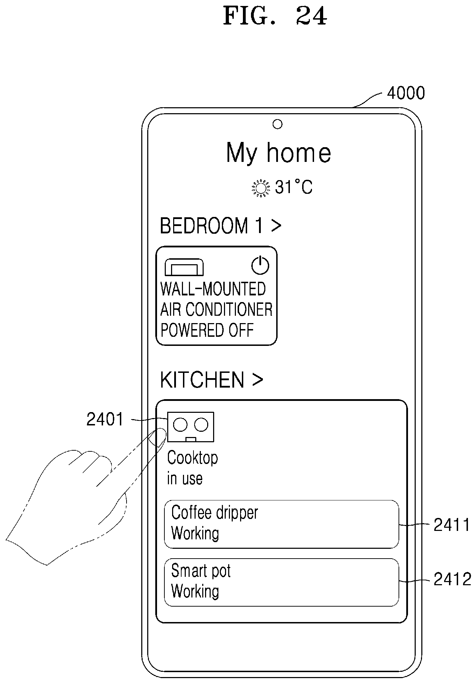

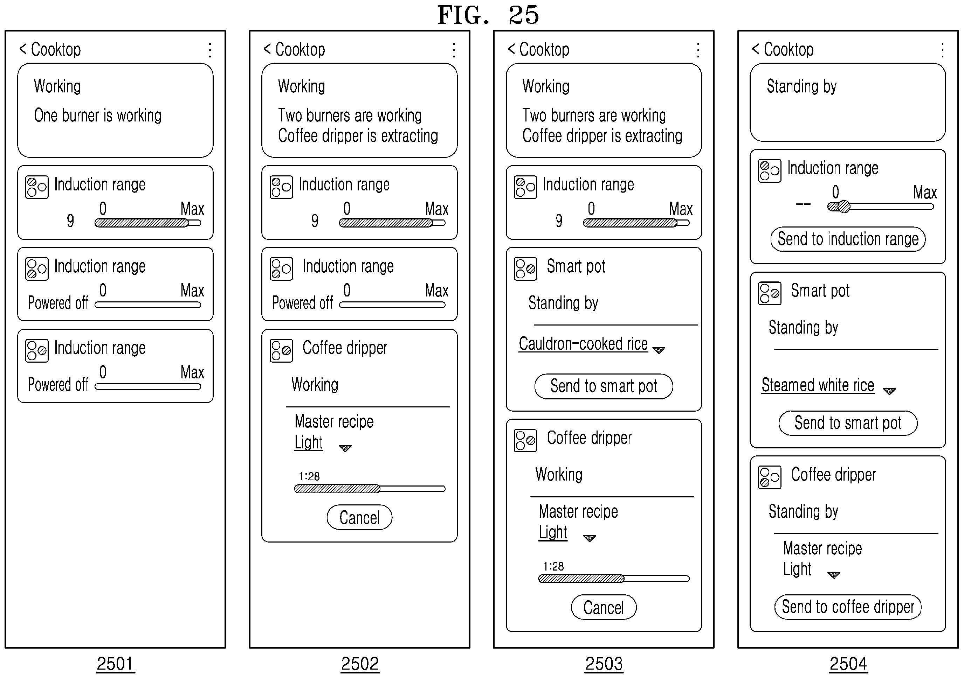

According to an embodiment of the disclosure, the display device 4000 may execute, based on a user input, a particular application (e.g., a home appliance management application) provided by the server device 3000. In this case, the user may check the operation state of the wireless power transmission device 2000 and the operation state of the cooking appliance 1000 through an execution window of the application. Hereinafter, the server device 3000 provides an operating, performed by the server device 3000, of providing the user with operation state information of the wireless power transmission device 2000 or operation state information of the cooking appliance 1000 through the display device 4000 is described with reference to FIGS. 24 and 25.

FIGS. 24 and 25 are diagrams for describing an operation, performed by the server device 3000, of providing information about the wireless power transmission device 2000 and the cooking appliance 1000 through the display device 4000, according to an embodiment of the disclosure.

Referring to FIG. 24, when the user executes, on the display device 4000, an application for managing home appliances of the user, the display device 4000 may receive information from the server device 3000 and display a list of home appliances in an execution window of the application. The home appliances of the user may be registered in the server device 3000 with the same account. The home appliances may include the cooking appliance 1000 and the wireless power transmission device 2000. In FIG. 24, each of a coffee machine (e.g., a coffee dripper) and a smart pot (e.g., the cooking appliance 1000) may be operating on the wireless power transmission device 2000.

For example, the display device 4000 may display a first GUI 2401 showing the wireless power transmission device 2000 (e.g., 'Cooktop'), a second GUI 2411 showing the coffee machine (e.g., a coffee dripper), and a third GUI 2412 showing the smart pot, in the execution window of the application. In this case, the first GUI 2401 may include a state of the wireless power transmission device 2000 (e.g., 'operating' or 'powered off'), and the second GUI 2411 may include an operation state of the coffee machine (e.g., a coffee dripper) (e.g., 'working'), and the third GUI 2412 may include an operation state of the smart pot (e.g., 'working'). Accordingly, the user may easily check the operation state of the wireless power transmission device 2000 and/or the operation state of the cooking appliance 1000 through the execution window of the application.

According to an embodiment of the disclosure, the display device 4000 may receive a user input for selecting the first GUI 2401 showing the wireless power transmission device 2000.

Referring to FIG. 25, in response to the user input for selecting the first GUI 2401, the display device 4000 may display, in the execution window of the application, a screen related to the wireless power transmission device 2000. Hereinafter, an example in which the wireless power transmission device 2000 includes three cooking zones is described with reference to FIG. 25.

Referring to 2501 of FIG. 25, when the cooking vessel 10 (e.g., a general IH vessel) is placed alone on a first cooking zone and then operates, the display device 4000 may display, in the execution window of the application, operation state information of the wireless power transmission device 2000 (e.g., 'One burner is working') and operation state information of each cooking zone. For example, the display device 4000 may display, in the execution window of the application, operation state information of the first cooking zone (e.g., 'Power level: 9'), operation state information of the second cooking zone (e.g., 'Powered off'), and operation state information of the third cooking zone (e.g., 'Powered off').

Referring to 2502 of FIG. 25, when the cooking vessel 10 (e.g., a general IH vessel) is placed on the first cooking zone and then operates, and the coffee machine (e.g., a coffee dripper) is placed on the third cooking zone and then operates, the display device 4000 may display, in the execution window of the application, operation state information of the wireless power transmission device 2000 (e.g., 'Two burners are working') and operation state information of each cooking zone. For example, the display device 4000 may display, in the execution window of the application, operation state information of the first cooking zone (e.g., 'Power level: 9'), operation state information of the second cooking zone (e.g., 'Powered off'), and operation state information of the third cooking zone (e.g., 'Working, Master recipe (light)' and the elapsed time).

Referring to 2503 of FIG. 25, when the cooking vessel 10 (e.g., a general IH vessel) is placed on the first cooking zone and then operates, the smart pot (e.g., the cooking appliance 1000 in which the cooking vessel 10 is mounted) is placed on the second cooking zone and then stands by, and the coffee machine (e.g., a coffee dripper) is placed on the third cooking zone and then operates, the display device 4000 may display, in the execution window of the application, operation state information of the wireless power transmission device 2000 (e.g., 'Two burners are working') and operation state information of each cooking zone. For example, the display device 4000 may display, in the execution window of the application, operation state information of the first cooking zone (e.g., 'Power level: 9'), operation state information of the second cooking zone (e.g., 'Standing by, Cauldron-cooked rice'), and operation state information of the third cooking zone (e.g., 'Working, Master recipe (light)' and the elapsed time).

Referring to 2504 of FIG. 25, when the smart pot (e.g., the cooking appliance 1000 in which the cooking vessel 10 is mounted) is placed on the second cooking zone and then stands by, and the coffee machine (e.g., a coffee dripper) is placed on the third cooking zone and then stands by, the display device 4000 may display, in the execution window of the application, operation state information of the wireless power transmission device 2000 (e.g., 'Standing by') and operation state information of each cooking zone. For example, the display device 4000 may display, in the execution window of the application, operation state information of the first cooking zone (e.g., '--'), operation state information of the second cooking zone (e.g., 'Standing by, Steamed white rice'), and operation state information of the third cooking zone (e.g., 'Standing by, Master recipe (light)').

In addition, the user may add recipe information to the cooking appliance 1000 through the execution window of the application. Hereinafter, an operation of adding, to the cooking appliance 1000, recipe information stored in the server device 3000 is described in detail with reference to FIGS. 26 to 27.

FIG. 26 is a flowchart illustrating a method, performed by the cooking appliance 1000, of storing new recipe information, according to an embodiment of the disclosure.

In operation S2601, the wireless power transmission device 2000 and the cooking appliance 1000 may be connected to each other through short-range wireless communication. For example, when the cooking appliance 1000 is placed on the top plate of the wireless power transmission device 2000, the cooking appliance 1000 may receive power from the wireless power transmission device 2000 to drive the communication interface 1030. In this case, the cooking appliance 1000 may establish a short-range wireless communication channel (e.g., a Bluetooth communication channel or a BLE communication channel) with the wireless power transmission device 2000, and transmit and receive data to and from the wireless power transmission device 2000 through the short-range wireless communication channel.

In operation S2602, the server device 3000 according to an embodiment of the disclosure may receive an input for selecting a new dish through the display device 4000 (e.g., a mobile terminal). For example, in a case in which a first dish that the user currently wants to prepare is not included in a basic dish list of the cooking appliance 1000, the user may execute, on the display device 4000, an application related to the cooking appliance 1000, and select, in an execution window of the application, the first dish to be prepared, as a new dish. In this case, because the application related to the cooking appliance 1000 is an application provided by the server device 3000, the server device 3000 may obtain, through the display device 4000, information about the selecting, by the user, the first dish as a new dish.

In operation S2603, the server device 3000 may identify new recipe information corresponding to the new dish selected by the user. For example, the server device 2000 may retrieve, from a database in which recipe information is stored, the new recipe information corresponding to the new dish.

In operation S2604, the server device 3000 may transmit, to the wireless power transmission device 2000, the new recipe information corresponding to the new dish. For example, the server device 3000 may transmit the new recipe information to the wireless power transmission device 2000 and simultaneously request the wireless power transmission device 2000 to transmit the new recipe information to the cooking appliance 1000, through long-range communication (e.g., Wi-Fi communication).

In operation S2605, the wireless power transmission device 2000 may transmit, to the cooking appliance 1000, new recipe information corresponding to the new dish. For example, the wireless power transmission device 2000 may transmit the new recipe information to the cooking appliance 1000 that is placed on the top plate of the wireless power transmission device 2000, through a short-range wireless communication channel (e.g., a Bluetooth communication channel or a BLE communication channel).

In this case, the wireless power transmission device 2000 may or may not store, in the memory 2600, the new recipe information corresponding to the new dish.

In operation S2606, the cooking appliance 1000 may store the new recipe information. For example, when the new recipe information is received from the wireless power transmission device 2000, the cooking appliance 1000 may store the new recipe information in the memory (or the storage space of the MCU).

In addition, according to an embodiment of the disclosure, the cooking appliance 1000 may adaptively control, based on the new recipe information, the output (i.e., the power level) of the wireless power transmission device 2000 to automatically cook the new dish.

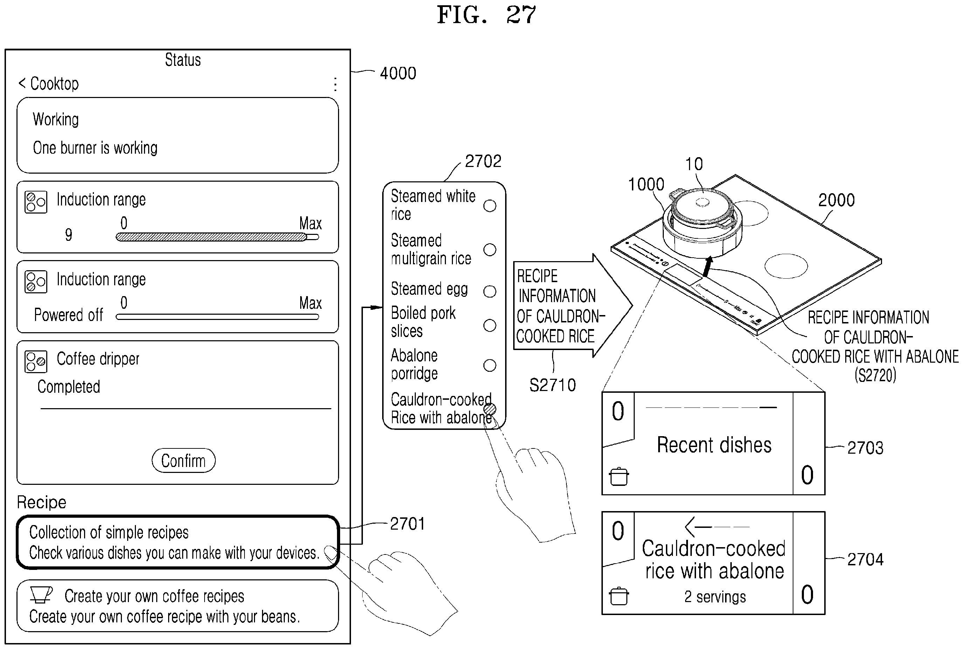

Although an example in which the server device 3000 transmits the new recipe information to the cooking appliance 1000 through the wireless power transmission device 2000 is described above with reference to FIG. 26, the disclosure is not limited thereto. For example, the display device 4000 may transmit the new recipe information to the cooking appliance 1000 through the wireless power transmission device 2000, and the display device 4000 may directly transmit the new recipe information to the cooking appliance 1000. Hereinafter, an operation, performed by the cooking appliance 1000, of storing new recipe information is described in more detail with reference to FIG. 27.

FIG. 27 is a diagram for describing an operation, performed by the cooking appliance 1000, of adding recipe information, based on a user input, according to an embodiment of the disclosure.

Referring to FIG. 27, the display device 4000 may display, in an execution window of an application, an icon 2701 for adding a recipe item to the cooking appliance 1000. When the user selects the icon 2701 in the execution window of the application, the display device 4000 may display dishes 2702 that the user may add.

In this case, when the user selects cauldron-cooked rice with abalone from among the dishes 2702, the server device 3000 may receive information that the user wants to add recipe information of the cauldron-cooked rice with abalone to the cooking appliance 1000 through the execution window of the application. The server device 3000 may transmit recipe information of cauldron-cooked rice with abalone, to the wireless power transmission device 2000 through long-range communication (e.g., Wi-Fi communication) (S2710). When the wireless power transmission device 2000 receives the recipe information of cauldron-cooked rice with abalone from the server device 3000, the wireless power transmission device 2000 may transmit the recipe information of cauldron-cooked rice with abalone, to the cooking appliance 1000 that is placed on the wireless power transmission device 2000 through a short-range wireless communication channel (e.g., a Bluetooth communication channel or a BLE communication channel) (S2720). The cooking appliance 1000 may store recipe information of cauldron-cooked rice with abalone in the memory. At this time, a GUI screen displayed on the wireless power transmission device 2000 may be changed. For example, when the recipe information of cauldron-cooked rice with abalone is recipe information that is newly added by the user, a 'Recent dishes' item 2703 is automatically created on the GUI screen of the cooking appliance 1000, and 'Cauldron-cooked rice with abalone' may be displayed as the first dish of the recent dishes. Thereafter, when recipe information of boiled pork slices is added, 'Boiled pork slices' may be positioned as the first dish of the 'Recent dishes' item 2703, and 'Cauldron-cooked rice with abalone' may be positioned as the second dish, on the GUI screen of the cooking appliance 1000.

Thereafter, when the user wants to prepare cauldron-cooked rice with abalone by using the cooking appliance 1000, the user places, on the wireless power transmission device 2000, the cooking appliance 1000 in which the cooking vessel 10 mounted, and select the 'Recent dishes' item 2703 and then a 'Cauldron-cooked rice with abalone' item 2704 through the user interface 2500 of the wireless power transmission device 2000.

Although an example in which the server device 3000 transmits the recipe information cauldron-cooked rice with abalone to the cooking appliance 1000 through the wireless power transmission device 2000 is described above with reference to FIG. 27, the disclosure is not limited thereto. For example, the display device 4000 may transmit the recipe information cauldron-cooked rice with abalone to the cooking appliance 1000 through the wireless power transmission device 2000, and the display device 4000 may directly transmit the recipe information cauldron-cooked rice with abalone to the cooking appliance 1000.

According to an embodiment of the disclosure, there may be provided a method of supporting automatic cooking of the contents in the cooking vessel 10 by adaptively determining a power level value of the wireless power transmission device 2000 by using a measured temperature of the cooking vessel 10 accommodated in the cooking appliance 1000 and recipe information corresponding to a dish selected by the user, and transmitting the power level value to the wireless power transmission device 2000, and the cooking appliance 1000 for the method.

According to an embodiment of the disclosure, there may be provided the cooking appliance 1000 having a structure for efficiently measuring the temperature of the cooking vessel 10 accommodated in the cooking appliance 1000.

The cooking appliance 1000 for controlling the wireless power transmission device 2000 for automatic cooking of the contents in the cooking vessel 10 according to an embodiment of the disclosure may include the plurality of first temperature sensors 1003 arranged in an internal space in which the cooking vessel 10 is accommodated, the communication interface 1030 configured to transmit information to the wireless power transmission device 2000, and at least one processor. In addition, the at least one processor of the cooking appliance 1000 may obtain temperature data regarding the cooking vessel 10 that is measured by the plurality of first temperature sensors 1003 as the cooking vessel 10 is accommodated in the internal space. The at least one processor of the cooking appliance 1000 may determine, based on the temperature data regarding the cooking vessel 10 and recipe information of a dish selected by a user, a power level value of the wireless power transmission device 2000. The at least one processor of the cooking appliance 1000 may transmit power control information including the power level value, to the wireless power transmission device 2000 through the communication interface 1030 such that the wireless power transmission device 2000 outputs power corresponding to the power level value.

The power control information according to an embodiment of the disclosure may further include information about a duration of maintaining the power level value.

The at least one processor of the cooking appliance 1000 according to an embodiment of the disclosure may receive, from the wireless power transmission device 2000 through the communication interface 1030, information about the dish selected by the user. The at least one processor of the cooking appliance 1000 may obtain, from the memory of the cooking appliance 1000, the recipe information corresponding to the dish selected by the user.

The at least one processor of the cooking appliance 1000 according to an embodiment of the disclosure may determine the power level value of the wireless power transmission device 2000 by comparing information about a plurality of cooking stages included in the recipe information, with the temperature data regarding the cooking vessel 10.

The at least one processor of the cooking appliance 1000 according to an embodiment of the disclosure may determine, as a current cooking stage, a first cooking stage among the plurality of cooking stages included in the recipe information, based on the temperature data regarding the cooking vessel 10. The at least one processor of the cooking appliance 1000 may identify, from the recipe information, a first power level value corresponding to the first cooking stage. The at least one processor of the cooking appliance 1000 may transmit, to the wireless power transmission device 2000 through the communication interface 1030, first power control information including the first power level value.

In a case in which a temperature indicated by temperature data obtained from at least one of the plurality of first temperature sensors reaches a temperature indicated by first threshold temperature data, the at least one processor of the cooking appliance 1000 according to an embodiment of the disclosure may determine, as the current cooking stage, a second cooking stage that is subsequent to the first cooking stage. The at least one processor of the cooking appliance 1000 may identify, from the recipe information, a second power level value corresponding to the second cooking stage. The at least one processor of the cooking appliance 1000 may transmit, to the wireless power transmission device 2000 through the communication interface 1030, second power control information including the second power level value.

In a case in which a temperature indicated by individual temperature data obtained from each of the plurality of first temperature sensors 1003 is greater than a temperature indicated by second threshold temperature data, and a temperature indicated by average temperature data obtained from the plurality of first temperature sensors 1003 is greater than or equal to a temperature indicated by third threshold temperature data, the at least one processor of the cooking appliance 1000 according to an embodiment of the disclosure may determine, as the current cooking stage, a third cooking stage that is subsequent to the second cooking stage. The at least one processor of the cooking appliance 1000 may identify, from the recipe information, a third power level value corresponding to the third cooking stage. The at least one processor of the cooking appliance 1000 may transmit, to the wireless power transmission device 2000 through the communication interface 1030, third power control information including the third power level value.

The at least one processor of the cooking appliance 1000 according to an embodiment of the disclosure may receive, from a mobile terminal through the wireless power transmission device 2000, new recipe information corresponding to a new dish selected by the user using the mobile terminal, and store the received new recipe information in the memory of the cooking appliance 1000.

Each of the plurality of first temperature sensors 1003 of the cooking appliance 1000 may be spaced apart from a bottom surface of the cooking appliance 1000 by a preset height or greater.

The cooking appliance 1000 according to an embodiment of the disclosure may further include a second temperature sensor 1015 configured to detect abnormal overheating of the cooking vessel 10.

The cooking appliance 1000 according to an embodiment of the disclosure may further include at least one rubber leg 1007 on the bottom surface of the cooking appliance 1000 to alleviate a shock on the cooking vessel 10 when the cooking vessel 10 is accommodated in the internal space of the cooking appliance 1000. In this case, the second temperature sensor 1015 of the cooking appliance 1000 according to an embodiment of the disclosure may be inside the at least one rubber leg 1007.

The cooking appliance 1000 according to an embodiment of the disclosure may further include an output interface configured to output a notification indicating abnormal overheating of the cooking vessel 10 when a temperature indicated by temperature data measured by the second temperature sensor is greater than a temperature indicated by reference temperature data.

Each of the plurality of first temperature sensors 1003 may be coupled to an elastic member, and the elastic member may be compressed and deformed as the cooking vessel 10 is accommodated in the internal space of the cooking appliance 1000.

The cooking appliance 1000 according to an embodiment of the disclosure may further include a low-power coil to receive, from the wireless power transmission device 2000, power of a preset level for driving the communication interface 1030.

The at least one processor of the cooking appliance 1000 according to an embodiment of the disclosure may detect a first power transmission pattern from among a plurality of power transmission patterns, which are transmitted by the wireless power transmission device 2000 through a plurality of cooking zones. The at least one processor of the cooking appliance 1000 may identify, among the plurality of cooking zone, a first cooking zone corresponding to the first power transmission pattern. The at least one processor of the cooking appliance 1000 may transmit, to the wireless power transmission device 2000 through the communication interface 1030, information about the first cooking zone and identification information of the cooking appliance 1000, such that the information about the first cooking zone and the identification information of the cooking appliance 1000 are output through the output interface 2510 of the wireless power transmission device 2000.

A method, performed by the cooking appliance 1000, of controlling the wireless power transmission device 2000 for automatic cooking of the contents in the cooking vessel 10 according to an embodiment of the disclosure may include, as the cooking vessel 10 is accommodated in an internal space of the cooking appliance 1000, obtaining temperature data regarding the cooking vessel 10 measured by the plurality of first temperature sensors 1003 arranged in the internal space, based on the temperature data regarding the cooking vessel 10 and recipe information of a dish selected by a user, determining a power level value of the wireless power transmission device 2000, and transmitting power control information including the power level value, to the wireless power transmission device 2000 through the communication interface 1030 of the cooking appliance 1000, such that the wireless power transmission device 2000 outputs power corresponding to the power level value.

The method according to an embodiment of the disclosure may further include receiving, from the wireless power transmission device 2000 through the communication interface 1030, information about the dish selected by the user, and obtaining, from the memory of the cooking appliance 1000, the recipe information corresponding to the dish selected by the user.

According to an embodiment of the disclosure, the determining of the power level value of the wireless power transmission device 2000 may include determining a current cooking stage from among a plurality of cooking stages included in the recipe information by comparing information about the plurality of cooking stages with the temperature data regarding the cooking vessel, and determining the power level value of the wireless power transmission device 2000 corresponding to the current cooking stage.

The method according to an embodiment of the disclosure may further include receiving, from a mobile terminal through the wireless power transmission device 2000, new recipe information corresponding to a new dish selected by the user using the mobile terminal, and storing the received new recipe information in the memory of the cooking appliance 1000.

The method according to an embodiment of the disclosure may be embodied as program commands executable by various computer devices, and recorded on a computer-readable medium. The computer-readable medium may include program commands, data files, data structures, or combinations thereof. The program commands to be recorded on the medium may be specially designed and configured for the disclosure or may be well-known to and be usable by those skill in the art of computer software. Examples of the computer-readable recording medium include magnetic media such as hard disks, floppy disks, or magnetic tapes, optical media such as compact disc ROMs (CD-ROMs) or digital video discs (DVDs), magneto-optical media such as floptical disks, and hardware devices such as ROM, RAM, and flash memory, which are specially configured to store and execute program instructions. Examples of the program instructions include not only machine code, such as code made by a compiler, but also high-level language code that is executable by a computer by using an interpreter or the like.

Some embodiments of the disclosure may be implemented as a recording medium including computer-readable instructions such as a computer-executable program module. A computer-readable medium may be any available medium which is accessible by a computer, and may include a volatile or non-volatile medium and a removable or non-removable medium. Also, the computer-readable media may include computer storage media and communication media. The computer storage media include both volatile and non-volatile, removable and non-removable media implemented in any method or technique for storing information such as computer readable instructions, data structures, program modules or other data. The communication medium typically includes computer-readable instructions, data structures, program modules, other data of a modulated data signal, or other transmission mechanisms, and examples thereof include an arbitrary information transmission medium. Also, some embodiments of the disclosure may be implemented as a computer program or a computer program product including computer-executable instructions such as a computer program executed by a computer.

The machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the non-transitory storage medium may include a buffer in which data is temporarily stored.

According to an embodiment of the disclosure, the method according to various embodiments of the disclosure may be included in a computer program product and provided. The computer program products may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. A cooking appliance for controlling a wireless power transmission device for automatic cooking of contents in a cooking vessel, the cooking appliance comprising:
a plurality of first temperature sensors arranged in an internal space of the cooking appliance, the internal space being configured to accommodate the cooking vessel;
a communication interface configured to transmit information to the wireless power transmission device; and
at least one processor configured to:
obtain temperature data regarding the cooking vessel that is measured by the plurality of first temperature sensors as the cooking vessel is accommodated in the internal space,
based on the temperature data regarding the cooking vessel and recipe information of a dish selected by a user, determine a power level value of the wireless power transmission device, and
transmit power control information, including the power level value, to the wireless power transmission device through the communication interface.

2. The cooking appliance of claim 1, wherein
the power control information includes information about a duration of maintaining the power level value.

3. The cooking appliance of claim 1, wherein
the at least one processor is configured to:
receive, from the wireless power transmission device through the communication interface, information about the dish selected by the user, and
obtain, from a memory of the cooking appliance, the recipe information.

4. The cooking appliance of claim 1, wherein
the at least one processor is configured to:
determine the power level value of the wireless power transmission device by comparing information about a plurality of cooking stages included in the recipe information, with the temperature data regarding the cooking vessel.

5. The cooking appliance of claim 4, wherein
the at least one processor is configured to:
determine, as a current cooking stage, a first cooking stage among the plurality of cooking stages included in the recipe information, based on the temperature data regarding the cooking vessel,
identify, from the recipe information, a first power level value corresponding to the first cooking stage, and
transmit, to the wireless power transmission device through the communication interface, first power control information including the first power level value.

6. The cooking appliance of claim 5, wherein
the at least one processor is configured to:
in a case in which a temperature indicated by the temperature data regarding the cooking vessel obtained from at least one of the plurality of first temperature sensors reaches a temperature indicated by first threshold temperature data, determine, as the current cooking stage, a second cooking stage that is subsequent to the first cooking stage,
identify, from the recipe information, a second power level value corresponding to the second cooking stage, and
transmit, to the wireless power transmission device through the communication interface, second power control information including the second power level value.

7. The cooking appliance of claim 6, wherein
the at least one processor is configured to:
in a case in which a temperature indicated by individual temperature data obtained from each of the plurality of first temperature sensors is greater than a temperature indicated by second threshold temperature data, and a temperature indicated by average temperature data obtained from the plurality of first temperature sensors is greater than or equal to a temperature indicated by third threshold temperature data, determine, as the current cooking stage, a third cooking stage that is subsequent to the second cooking stage,
identify, from the recipe information, a third power level value corresponding to the third cooking stage, and
transmit, to the wireless power transmission device through the communication interface, third power control information including the third power level value.

8. The cooking appliance of claim 1, wherein
the at least one processor is configured to:
receive, from a mobile terminal through the wireless power transmission device, new recipe information corresponding to a new dish selected by the user using the mobile terminal, and
store the received new recipe information in a memory of the cooking appliance.

9. The cooking appliance of claim 1, wherein
each of the plurality of first temperature sensors is spaced apart from a bottom surface of the cooking appliance by a preset height or greater.

10. The cooking appliance of claim 1, further comprising:
a second temperature sensor configured to detect abnormal overheating of the cooking vessel.

11. The cooking appliance of claim 10, further comprising:
at least one rubber leg on a bottom surface of the cooking appliance to alleviate a shock on the cooking vessel when the cooking vessel is accommodated in the internal space of the cooking appliance,
wherein the second temperature sensor is in the at least one rubber leg.

12. The cooking appliance of claim 10, further comprising:
an output interface configured to output a notification indicating abnormal overheating of the cooking vessel when a temperature indicated by temperature data measured by the second temperature sensor is greater than a temperature indicated by reference temperature data.

13. The cooking appliance of claim 1, wherein
each of the plurality of first temperature sensors is coupled to an elastic member, and
the elastic member is compressed and deformed when the cooking vessel is accommodated in the internal space of the cooking appliance.

14. The cooking appliance of claim 1, further comprising:
a low-power coil to receive, from the wireless power transmission device, power of a preset level to drive the communication interface,
wherein the at least one processor is configured to:
detect a first power transmission pattern from among a plurality of power transmission patterns, which are transmitted by the wireless power transmission device through a plurality of cooking zones,
identify, among the plurality of cooking zones, a first cooking zone corresponding to the first power transmission pattern, and
transmit, to the wireless power transmission device through the communication interface, information about the first cooking zone and identification information of the cooking appliance.

15. A method, performed by a cooking appliance, of controlling a wireless power transmission device for automatic cooking of contents in a cooking vessel, the method comprising:
as the cooking vessel is accommodated in an internal space of the cooking appliance, obtaining temperature data regarding the cooking vessel measured by a plurality of first temperature sensors arranged in the internal space;
based on the temperature data regarding the cooking vessel and recipe information of a dish selected by a user, determining a power level value of the wireless power transmission device; and
transmitting power control information, including the power level value, to the wireless power transmission device through a communication interface of the cooking appliance.
